# EUROPEAN PATENT APPLICATION

(11) **EP 4 606 530 A1**
(43) Date of publication of application: **27.08.2025**
(21) Application number: 23879802.9
(22) Date of filing: 17.10.2023
(51) Int. Cl.: B25J 5/00, B25J 9/22, B25J 13/00, B25J 13/08, B25J 19/06, G09B 5/02, G06T 7/00, G06T 7/20, G06Q 10/0633, G06Q 50/04

(54) **WORK ROBOT ADJUSTMENT METHOD, SENSING SYSTEM, SENSING METHOD, MOBILE ROBOT, OPERATION MODIFICATION SYSTEM, OPERATION MODIFICATION METHOD, WORK ROBOT, WORK REPRODUCTION SYSTEM, WORK REPRODUCTION METHOD, WORK MASTERING SYSTEM, WORK MASTERING METHOD, AND WORK REPRODUCING ROBOT**

(30) Priority: 18.10.2022 JP 2022167221; 08.11.2022 JP 2022178895; 10.11.2022 JP 2022180376; 15.11.2022 JP 2022182641; 17.11.2022 JP 2022184345; 18.11.2022 JP 2022184856
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/037595
(87) International publication number: WO 2024/085159

(57) **Abstract**

A work robot adjustment method includes processes of moving a mobile robot having a sensor to an environment in which a worker performs a motion, recording the motion of the worker by using the sensor, learning the motion of the worker on the basis of the record, causing a work robot to perform the same motion as the motion of the worker on the basis of the learning, and performing adjustment such that the motion of the worker matches the motion of the work robot.

## Description

### Technical Field

The present disclosure relates to a method of adjusting a work robot that performs work in a work environment, a sensing system, a sensing method, a mobile robot, a motion modification system, a motion modification method, a work robot, a work reproduction system, a work reproduction method, a work proficiency system, a work proficiency method, and a work reproduction robot.

### Background Art

In recent years, technologies for causing a work robot to perform or assist with work performed by persons such as line work in a factory, for example, or assisting the work robot have been studied. For example, Patent Literature 1 discloses an assistance system that determines the content of work of a worker on the basis of various types of information and the like including a shape and the like of a work object stored in a database, and displays information on a display device on the basis of information acquired from various sensors provided in a work robot, thereby reducing a work load on the worker.

In addition, in order to cause a work robot to perform work of a person, as a premise, it is necessary to detect (sense) the work of the person with a sensor and ascertain the motion. For example, Patent Literature 2 discloses a work estimation device that generates a work field image Ic through a cell camera 30 and an entire image Ia through a ceiling camera 80 and performs image analysis.

In addition, for example, Patent Literature 3 discloses a robot control method in which two-dimensional code representing work information is read by a sensor, a work object is imaged by a sensor that images work objects, motion information for causing a robot to perform work is generated on the basis of the imaged image and the work information, and the robot is caused to perform work on the basis of the motion information.

In addition, in a workplace where predetermined work is performed, an abnormal situation such as an accident may occur due to an error of a worker or other factors. When an abnormal situation occurs, it is effective to elucidate the cause of the abnormal situation in order to curb the occurrence of a next abnormal situation. For example, Patent Literature 4 discloses technology for generating accident occurrence site image data of an accident occurrence site image when the accident occurrence site is viewed from a viewpoint specified by viewpoint information on the basis of three-dimensional data of the accident occurrence site where an accident has occurred and input viewpoint information, and displaying the image data on a display unit, in order to provide a safety education system in which an accident occurrence situation is effectively transmitted.

In addition, conventionally, there is a work proficiency system that supports work proficiency of a worker. For example, Patent Literature 5 discloses a work proficiency system that identifies work content of non-standard work using non-standard work model information including conditions of non-standard work (indicating work with a low proficiency level), work procedure information, and a workplace internal image in order to identify work with a low proficiency level.

### Prior Art Document

Patent Literature 1: Japanese Patent Application Laid-Open (JP-A) No. 2021-130156
Patent Literature 2: JP-A No. 2022-113042
Patent Literature 3: JP-A No. 2022-042867
Patent Literature 4: JP-A No. 2007-226515
Patent Literature 5: JP-A No. 2020-086697

### SUMMARY OF INVENTION

### Technical Problem

When work of a worker is reproduced by a work robot, it is necessary to analyze the motion of the worker and program the robot for each motion. In this case, motion analysis and programming require time and incur costs such as labor costs.

Therefore, an object of the present disclosure is to provide a work robot adjustment method for reducing the time required and costs for motion analysis of a worker and programming.

In addition, work of a worker may involve, for example, movement or large amounts of motion. In the work estimation device of Patent Literature 2, since each sensor (camera) is fixedly disposed, work (predetermined motion) of a worker may not be sufficiently sensed depending on the relationship between the worker and the sensor position.

Therefore, an object of the present disclosure is to provide a sensing system, a sensing method, and a mobile robot capable of sufficiently sensing a predetermined motion of a worker.

In addition, in the robot control method of Patent Literature 3, it is difficult to confirm whether a robot is operating according to the content of work included in work information. In addition, it is also difficult to adjust a motion of the robot to an appropriate motion when the content of the work is not appropriately performed.

Therefore, an object of the present disclosure is to provide a sensing system, a sensing method, and a work robot capable of confirming the motion of a work robot and adjusting the motion to an appropriate motion.

In addition, work of a worker has a certain limit in increasing the work speed due to the limit of physical ability. Therefore, if a work robot is caused to perform a learning model in which a predetermined motion of the worker is learned as it is, the work robot may not be able to perform the work efficiently.

Therefore, an object of the present disclosure is to provide a motion modification system, a motion modification method, and a work robot that enable a work robot to work efficiently in the work robot that works using a learning model in which work of a worker is learned.

In addition, in a case where an abnormal situation occurs, it is often caused by various factors intertwined, and in order to clarify the cause of occurrence of the abnormal situation, the situation of the site is reproduced. In addition, a person involved (worker) or the like at the time of occurrence of an abnormal situation is disposed at the reproduction site to actually perform a motion at the time of occurrence of the abnormal situation. In this case, it is possible to more accurately reproduce the situation at the time of occurrence of the abnormal situation, and it is easy to clarify the cause of occurrence of the abnormal situation. However, it may be difficult to cause a person involved to directly reproduce the situation of the accident depending on the situation.

Therefore, an object of the present disclosure is to provide a work reproduction system, a work reproduction method, and a work reproduction robot that facilitate clarification of a cause of occurrence of an abnormal situation.

In addition, simply identifying work with a low proficiency level is sufficient to study only improvement measures for the identified work, and is insufficient for achieving proficiency of the work of the worker.

Therefore, an object of the present disclosure is to provide a work proficiency system, a work proficiency method, and a work reproduction robot capable of promoting proficiency of work of a worker.

### Solution to Problem

A work robot adjustment method according to the present disclosure includes processes of moving a mobile robot having a sensor to an environment in which a worker performs a motion, recording the motion of the worker by using the sensor, learning the motion of the worker on the basis of the record, causing a work robot to perform the same motion as the motion of the worker on the basis of the learning, and performing adjustment such that the motion of the worker matches the motion of the work robot.

A sensing system according to the present disclosure includes: a first sensor for sensing a predetermined motion of a sensing target; a second sensor for sensing a predetermined motion of the sensing target at a position different from a position of the first sensor; a first mobile robot including the first sensor and a first moving mechanism; and a management control device capable of communicating with the first sensor, the second sensor, and the first moving mechanism, wherein the management control device includes: a determination unit configured to determine whether or not a predetermined part movable by the sensing target during a predetermined motion has been sensed from first information acquired by the first sensor and second information acquired by the second sensor; and a control unit configured to operate the first moving mechanism such that the predetermined part is sensed in a case where the determination unit determines that the predetermined part has not been sensed.

Further, a sensing method according to the present disclosure includes: a first sensor for sensing a predetermined motion of a sensing target; a second sensor for sensing a predetermined motion of the sensing target at a position different from a position of the first sensor; a first mobile robot including the first sensor and a first moving mechanism; and a management control device capable of communicating with the first sensor, the second sensor, and the first moving mechanism, wherein the management control device is configured to: determine whether or not a predetermined part movable by the sensing target during a predetermined motion has been sensed from first information acquired by the first sensor and second information acquired by the second sensor; and operate the first moving mechanism such that the predetermined part is sensed in a case where the determination unit determines that the predetermined part has not been sensed.

Further, a sensing system according to the present disclosure includes: a first sensor for sensing a predetermined motion of a sensing target; a second sensor for sensing a predetermined motion of the sensing target at a position different from a position of the first sensor; a first mobile robot including the first sensor and a first moving mechanism; and a management control device capable of communicating with the first sensor, the second sensor, and the first moving mechanism, wherein the management control device includes: a determination unit configured to determine whether or not a predetermined part movable by the sensing target during a predetermined motion is sensed from first information acquired by the first sensor and second information acquired by the second sensor, and to determine whether or not a predetermined part sensed by the first sensor is the same as a predetermined part sensed by the second sensor; and a control unit configured to operate the first moving mechanism such that the predetermined part sensed by the first sensor is different from the predetermined part sensed by the second sensor in a case where it is determined that the predetermined part sensed by the first sensor is the same as the predetermined part sensed by the second sensor.

Further, a mobile robot according to the present disclosure includes: a moving mechanism; a first sensor configured to sense a sensing target; a second sensor configured to sense the sensing target at a position different from a position of the first sensor; a drive mechanism capable of moving the position of the second sensor; and an information processing unit configured to control the first sensor, the second sensor, the moving mechanism, and the drive mechanism, wherein the information processing unit includes: a determination unit configured to determine whether or not a predetermined part movable by the sensing target during a predetermined motion has been sensed from first information acquired by the first sensor and second information acquired by the second sensor; and a control unit configured to operate the moving mechanism or the drive mechanism such that the predetermined part is sensed in a case where the determination unit determines that the predetermined part has not been sensed.

Further, a mobile robot according to the present disclosure includes: a moving mechanism; a first sensor configured to sense a sensing target; a second sensor configured to sense the sensing target at a position different from a position of the first sensor; a drive mechanism capable of moving the position of the second sensor; and an information processing unit configured to control the first sensor, the second sensor, the moving mechanism, and the drive mechanism, wherein the information processing unit includes: a determination unit configured to determine whether or not a predetermined part movable by the sensing target moves during a predetermined motion is sensed from first information acquired by the first sensor and second information acquired by the second sensor, and to determine whether or not a predetermined part sensed by the first sensor is the same as a predetermined part sensed by the second sensor; and a control unit configured to operate the moving mechanism or the drive mechanism such that the predetermined part sensed by the first sensor is different from the predetermined part sensed by the second sensor in a case where it is determined that the predetermined part sensed by the first sensor is the same as the predetermined part sensed by the second sensor.

A sensing system according to the present disclosure includes: a first sensor for sensing a predetermined motion of a sensing target; a work robot configured to operate according to a motion instruction; a second sensor for sensing a robot motion of the work robot; and a management control device capable of communicating with the first sensor, the second sensor, and the work robot, wherein the management control device includes: a learning unit configured to learn the predetermined motion with reference to first information acquired by the first sensor; a motion information generation unit configured to generate motion control information for giving the motion instruction to the work robot with reference to a result of learning of the predetermined motion by the learning unit; and an adjustment unit configured to compare the first information with second information acquired by the second sensor, and to adjust the motion control information such that the robot motion of the work robot approximates the predetermined motion.

Further, a sensing method according to the present disclosure includes: a first sensor for sensing a predetermined motion of a sensing target; a work robot operating according to a motion instruction; a second sensor for sensing a robot motion of the work robot; and a management control device capable of communicating with the first sensor, the second sensor, and the work robot, wherein the management control device is configured to: learn the predetermined motion with reference to first information acquired by the first sensor; generate motion control information for giving the motion instruction to the work robot with reference to a result of learning of the predetermined motion by the learning unit; and compare the first information with second information acquired by the second sensor, and adjust the motion control information such that the robot motion of the work robot approximates the predetermined motion.

Further, a work robot according to the present disclosure is a work robot operating according to a motion instruction, including: a first sensor for sensing a predetermined motion of a sensing target; a second sensor for sensing a robot motion of the work robot; and an information processing unit capable of communicating with the first sensor and the second sensor, wherein the information processing unit includes: a learning unit configured to learn the predetermined motion with reference to first information acquired by the first sensor; a motion information generation unit configured to generate motion control information for giving the motion instruction to the work robot with reference to a result of learning of the predetermined motion by the learning unit; and an adjustment unit configured to compare the first information with second information acquired by the second sensor, and to adjust the motion control information such that the robot motion of the work robot approximates the predetermined motion.

A motion modification system according to the present disclosure includes: a work robot; a sensor; and a management control device capable of communicating with the work robot and the sensor, wherein the management control device includes: a learning unit configured to learn a standard motion model corresponding to a predetermined motion of a sensing target on the basis of sensing information corresponding to the predetermined motion of the sensing target acquired using the sensor; a model generation unit configured to generate a modified motion model in which an execution time of each motion in the standard motion model is set to be shorter than a required time for each motion at the time of generating the standard motion model with reference to the standard motion model; and a control unit configured to operate the work robot with reference to the modified motion model.

Further, a motion modification system according to the present disclosure includes: a work robot; a plurality of sensors for sensing a plurality of different sensing targets; and a management control device capable of communicating with the work robot and the plurality of sensors, wherein the management control device includes: a learning unit configured to learn predetermined motions of the plurality of sensing targets and a plurality of standard motion models corresponding to the predetermined motions of the plurality of sensing targets on the basis of a plurality of pieces of sensing information corresponding to the predetermined motions of the plurality of sensing targets acquired using the plurality of sensors; a model generation unit configured to generate a modified motion model in which at least some of the predetermined motions of the plurality of sensing targets are integrated with reference to the plurality of standard motion models; and a control unit configured to operate the work robot with reference to the modified motion model.

Further, a motion modification method according to the present disclosure includes: learning a standard motion model corresponding to a predetermined motion of a sensing target on the basis of sensing information corresponding to the predetermined motion of the sensing target acquired using a sensor; generating a modified motion model in which an execution time of each motion in the standard motion model is set to be shorter than a required time for each motion at the time of generating the standard motion model with reference to the standard motion model; and operating a work robot with reference to the modified motion model.

Further, a work robot according to the present disclosure includes: a drive mechanism for operating the work robot; a learning unit configured to learn a standard motion model corresponding to a predetermined motion of a sensing target on the basis of sensing information corresponding to the predetermined motion of the sensing target acquired using a sensor; a model generation unit configured to generate a modified motion model in which an execution time of each motion in the standard motion model is set to be shorter than a required time for each motion at the time of generating the standard motion model with reference to the standard motion model; and a control unit configured to operate a work robot that controls the drive mechanism with reference to the modified motion model.

A work reproduction system according to the present disclosure includes: a work reproduction robot; a sensor capable of sensing a motion of the work reproduction robot; and a management control device capable of communicating with the work reproduction robot and the sensor, wherein the management control device includes: a learning unit configured to learn a standard motion model corresponding to a predetermined motion of a sensing target on the basis of first sensing information corresponding to the predetermined motion of the sensing target; a control unit configured to cause the work reproduction robot to perform a reproduction motion once or more with reference to the standard motion model; an input unit configured to receive input of accident or malfunction information; and a detection unit configured to detect occurrence of the accident or malfunction on the basis of second sensing information corresponding to the reproduction motion of the work reproduction robot acquired using the sensor.

A work reproduction system according to the present disclosure includes: a work reproduction robot; a sensor capable of sensing a motion of the work reproduction robot; and a management control device capable of communicating with the work reproduction robot and the sensor, wherein the management control device includes: a learning unit configured to learn a standard motion model corresponding to a predetermined motion of a sensing target on the basis of first sensing information corresponding to the predetermined motion of the sensing target; a control unit configured to cause the work reproduction robot to perform a reproduction motion once or more with reference to the standard motion model; a storage unit configured to store work manual information of the sensing target or process schedule information; and a detection unit configured to detect occurrence of a motion different from the work manual information or the process schedule information on the basis of second sensing information corresponding to the reproduction motion of the work reproduction robot acquired using the sensor.

Further, a work reproduction method according to the present disclosure includes: a work reproduction robot; a sensor capable of sensing a motion of the work reproduction robot; and a management control device capable of communicating with the work reproduction robot and the sensor, wherein the management control device is configured to: learn a standard motion model corresponding to a predetermined motion of a sensing target on the basis of first sensing information corresponding to the predetermined motion of the sensing target; cause the work reproduction robot to perform a reproduction motion once or more with reference to the standard motion model; receive input of information on an accident or a malfunction; and detect occurrence of the accident or the malfunction on the basis of second sensing information corresponding to the reproduction motion of the work reproduction robot acquired using the sensor.

Further, a work reproduction method according to the present disclosure includes: a work reproduction robot; a sensor capable of sensing a motion of the work reproduction robot; and a management control device capable of communicating with the work reproduction robot and the sensor, wherein the management control device is configured to: learn a standard motion model corresponding to a predetermined motion of a sensing target on the basis of first sensing information corresponding to the predetermined motion of the sensing target; cause the work reproduction robot to perform a reproduction motion once or more with reference to the standard motion model; store work manual information of the sensing target or process schedule information; and detect occurrence of a motion different from the work manual information or the process schedule information on the basis of second sensing information corresponding to the reproduction motion of the work reproduction robot acquired using the sensor.

Further, a work reproduction robot according to the present disclosure includes: an information processing device capable of communicating with a sensor capable of sensing a motion of the work reproduction robot, wherein the information processing device includes: a learning unit configured to learn a standard motion model corresponding to a predetermined motion of a sensing target on the basis of first sensing information corresponding to the predetermined motion of the sensing target; a control unit configured to cause the work reproduction robot to perform a reproduction motion once or more with reference to the standard motion model; an input unit configured to receive input of information on an accident or a malfunction; and a detection unit configured to detect occurrence of the accident or the malfunction on the basis of second sensing information corresponding to the reproduction motion of the work reproduction robot acquired using the external sensor.

Further, a work reproduction robot according to the present disclosure includes: an information processing device capable of communicating with a sensor capable of sensing a motion of the work reproduction robot, wherein the information processing device includes: a learning unit configured to learn a standard motion model corresponding to a predetermined motion of a sensing target on the basis of first sensing information corresponding to the predetermined motion of the sensing target; a control unit configured to cause the work reproduction robot to perform a reproduction motion once or more with reference to the standard motion model; a storage unit configured to store work manual information of the sensing target or process schedule information; and a detection unit configured to detect occurrence of a motion different from the work manual information or the process schedule information on the basis of second sensing information corresponding to the reproduction motion of the work reproduction robot acquired using the sensor.

A work proficiency system according to the present disclosure includes: a work reproduction robot; a sensor capable of sensing a motion of a new worker; and a management control device capable of communicating with the work reproduction robot and the sensor, wherein the management control device includes: a storage unit configured to store a standard motion model learned on the basis of first sensing information corresponding to a predetermined motion of a skilled worker; a control unit configured to cause the work reproduction robot to perform a reproduction motion with reference to the standard motion model; and a detection unit configured to detect a point where the motion of the new worker is different from the standard motion model on the basis of second sensing information corresponding to the motion of the new worker acquired using the sensor.

Further, a work proficiency method according to the present disclosure includes: a work reproduction robot; a sensor capable of sensing a motion of a new worker; and a management control device capable of communicating with the work reproduction robot and the sensor, wherein the management control device is configured to: store a standard motion model learned on the basis of first sensing information corresponding to a predetermined motion of a skilled worker; cause the work reproduction robot to perform a reproduction motion with reference to the standard motion model; and detect a point where the motion of the new worker is different from the standard motion model on the basis of second sensing information corresponding to the motion of the new worker acquired using the sensor.

Further, a work reproduction robot according to the present disclosure includes: an information processing device capable of communicating with a sensor capable of sensing a motion of a new worker, wherein the information processing device includes: a storage unit configured to store a standard motion model learned on the basis of first sensing information corresponding to a predetermined motion of a skilled worker; a control unit configured to cause the work reproduction robot to perform a reproduction motion with reference to the standard motion model; and a detection unit configured to detect a point where the motion of the new worker is different from the standard motion model on the basis of second sensing information corresponding to the motion of the new worker acquired using the sensor.

### Advantageous Effects of Invention

According to the present disclosure, a work robot adjustment method for reducing the time required and costs for motion analysis of a worker and programming is provided.

Furthermore, according to the present disclosure, a sensing system, a sensing method, and a mobile robot capable of sufficiently sensing a predetermined motion of a worker are provided.

Furthermore, according to the present disclosure, a sensing system, a sensing method, and a work robot capable of confirming a motion of the work robot and adjusting the motion to an appropriate motion are provided.

Furthermore, according to the present disclosure, a motion modification method and a work robot that enable the work robot to work efficiently in the work robot that works using a learning model in which work of a worker is learned are provided.

Furthermore, according to the present disclosure, a work reproduction system, a work reproduction method, and a work reproduction robot that facilitate clarification of a cause of occurrence of an abnormal situation are provided.

Furthermore, according to the present disclosure, a work proficiency system, a work proficiency method, and a work reproduction robot capable of promoting proficiency of work of a worker are provided.

### BRIEF DESCRIPTION OF DRAWINGS

Fig. 1 is a diagram showing an example of a system configuration in a work robot adjustment method according to embodiment 1 of the present disclosure.
Fig. 2A is a diagram showing an example of a work robot shown in Fig. 1.
Fig. 2B is a diagram showing an example of a sensor mounting member shown in Fig. 1.
Fig. 3 is a block diagram showing an example of a functional configuration in the work robot adjustment method of embodiment 1 according to the present disclosure.
Fig. 4 is an example of a flowchart showing processing of the work robot adjustment method of embodiment 1 according to the present disclosure.
Fig. 5 is an example of a modified example of the sensor mounting member.
Fig. 6A is a diagram showing an example of a system configuration in a sensing system of embodiment 2 according to the present disclosure.
Fig. 6B is a diagram showing an example of a mobile robot shown in Fig. 6A.
Fig. 7 is a diagram showing an example when the mobile robot moves in the sensing system of embodiment 2 according to the present disclosure.
Fig. 8 is a block diagram showing an example of a configuration and functions of the sensing system of embodiment 2 according to the present disclosure.
Fig. 9 is a block diagram showing an example of functions of a management control device in the sensing system of embodiment 2 according to the present disclosure.
Fig. 10 is an example of a flowchart showing processing of the sensing system of embodiment 2 according to the present disclosure.
Fig. 11 is an example of a flowchart showing more detailed processing of predetermined part sensing determination processing shown in step S2103 of Fig. 10.
Fig. 12 is an example of a flowchart showing more detailed processing of motion information generation processing shown in step S2104 of Fig. 10.
Fig. 13A is a diagram showing an example of a system configuration in a sensing system according to modified example 1 of embodiment 2 according to the present disclosure.
Fig. 13B is a diagram showing an example of a mobile robot shown in Fig. 13A.
Fig. 14 is a block diagram showing an example of functions of the mobile robot in the sensing system according to modified example 1 of embodiment 2 according to the present disclosure.
Fig. 15A is a diagram showing an example of a system configuration in a sensing system according to modified example 2 of embodiment 2 according to the present disclosure.
Fig. 15B is a diagram showing an example of a sensor mounting member shown in Fig. 15A.
Fig. 16 is a diagram showing an example of a configuration and functions of the sensing system according to modified example 2 of embodiment 2 according to the present disclosure.
Fig. 17A is a diagram showing an example of a system configuration in a sensing system of embodiment 3 according to the present disclosure.
Fig. 17B is a diagram showing an example of a humanoid robot shown in Fig. 17A.
Fig. 18 is a block diagram showing an example of a configuration and functions of the sensing system of embodiment 3 according to the present disclosure.
Fig. 19 is a block diagram showing an example of functions of a management control device in the sensing system of embodiment 3 according to the present disclosure.
Fig. 20 is a diagram showing an example of each sensing period in the sensing system of embodiment 3 according to the present disclosure.
Fig. 21 is an example of a flowchart showing processing of the sensing system of embodiment 3 according to the present disclosure.
Fig. 22 is an example of a flowchart showing more detailed processing of motion control information generation processing shown in step S3103 of Fig. 21.
Fig. 23 is an example of a flowchart showing more detailed processing of motion control information adjustment processing shown in step S3106 of Fig. 21.
Fig. 24A is a diagram showing an example of a system configuration in a sensing system according to modified example 1 of embodiment 3 according to the present disclosure.
Fig. 24B is a diagram showing an example of a humanoid robot shown in Fig. 24A.
Fig. 25 is a block diagram showing an example of functions of the humanoid robot in the sensing system according to modified example 1 of embodiment 3 of the present disclosure.
Fig. 26 is a diagram showing an example of a system configuration in a sensing system according to modified example 2 of embodiment 3 according to the present disclosure.
Fig. 27A is a diagram showing an example of a system configuration in a sensing system according to modified example 3 of embodiment 3 according to the present disclosure.
Fig. 27B is a diagram showing an example of a sensor mounting member shown in Fig. 27A.
Fig. 28 is a diagram showing an example of a configuration and functions of the sensing system according to modified example 3 of embodiment 3 according to the present disclosure.
Fig. 29A is a diagram showing an example of a system configuration in a motion modification system of embodiment 4 according to the present disclosure.
Fig. 29B is a diagram showing an example of a humanoid robot shown in Fig. 29A.
Fig. 30 is a diagram showing an example of a relationship between a standard motion model and a motion modification model in the motion modification system of embodiment 4 according to the present disclosure.
Fig. 31 is a block diagram showing an example of a configuration and functions in the motion modification system of embodiment 4 according to the present disclosure.
Fig. 32 is a block diagram showing an example of functions of a management control device in the motion modification system of embodiment 4 according to the present disclosure.
Fig. 33 is an example of a flowchart showing processing of the motion modification system of embodiment 4 according to the present disclosure.
Fig. 34 is an example of a flowchart showing more detailed processing of modified motion model generation processing shown in step S4103 of Fig. 33.
Fig. 35A is a diagram showing an example of a system configuration in a motion modification system according to modified example 1 of embodiment 4 according to the present disclosure.
Fig. 35B is a diagram showing an example of a humanoid robot shown in Fig. 35B.
Fig. 36 is a block diagram showing an example of functions of the humanoid robot in the motion modification system according to modified example 1 of embodiment 4 according to the present disclosure.
Fig. 37 is an example of a flowchart showing more detailed processing of modified motion model generation processing in the motion modification system according to modified example 1 of embodiment 4 according to the present disclosure.
Fig. 38 is a diagram showing an example of a relationship between a standard motion model and a motion modification model in the motion modification system according to modified example 1 of embodiment 4 according to the present disclosure.
Fig. 39A is a diagram showing an example of sensing when a worker reproduces a motion in a work reproduction system of embodiment 5 according to the present disclosure.
Fig. 39B is a diagram showing an example of sensing when a motion is reproduced by a work reproduction robot.
Fig. 40 is an example of a humanoid robot in the work reproduction system of embodiment 5 according to the present disclosure.
Fig. 41 is a block diagram showing an example of a configuration and functions in the work reproduction system of embodiment 5 according to the present disclosure.
Fig. 42 is a block diagram showing an example of functions of a management control device in the work reproduction system of embodiment 5 according to the present disclosure.
Fig. 43 is an example of a flowchart showing processing of the work reproduction system of embodiment 5 according to the present disclosure.
Fig. 44 is an example of a flowchart showing more detailed processing of worker motion learning/standard motion model generation processing shown in step S5102 of Fig. 43.
Fig. 45 is an example of a flowchart showing processing of a work reproduction system according to modified example 1 of embodiment 5 according to the present disclosure.
Fig. 46A is a diagram showing an example of a system configuration in a work reproduction system according to modified example 2 of embodiment 5 according to the present disclosure.
Fig. 46B is a diagram showing an example of a humanoid robot shown in Fig. 46A.
Fig. 47 is a block diagram showing an example of functions of the humanoid robot in the work reproduction system according to modified example 2 of embodiment 5 according to the present disclosure.
Fig. 48A is a diagram showing an example of a system configuration in a work proficiency system of embodiment 6 according to the present disclosure.
Fig. 48B is a diagram showing an example of a humanoid robot shown in Fig. 48A.
Fig. 49 is a block diagram showing an example of a configuration and functions in the work proficiency system of embodiment 6 according to the present disclosure.
Fig. 50 is a block diagram showing an example of functions of a management control device in the work proficiency system of embodiment 6 according to the present disclosure.
Fig. 51 is an example of a flowchart showing processing of the work proficiency system of embodiment 6 according to the present disclosure.
Fig. 52 is an example of a flowchart showing more detailed processing of worker motion learning and model generation processing shown in step S6102 of Fig. 51.
Fig. 53 is an example of a flowchart showing more detailed processing of motion detection processing shown in step S6105 of Fig. 51.
Fig. 54A is a diagram showing an example of a system configuration in a work proficiency system according to modified example 1 of embodiment 6 according to the present disclosure.
Fig. 54B is a diagram showing an example of a humanoid robot shown in Fig. 54A.
Fig. 55 is a block diagram showing an example of functions of the humanoid robot in the work proficiency system according to modified example 1 of embodiment 6 according to the present disclosure.

### DESCRIPTION OF EMBODIMENTS

Hereinafter, a work robot adjustment method, a sensing system, a sensing method, a mobile robot, a motion modification system, a motion modification method, a work robot, a work reproduction system, a work reproduction method, a work proficiency system, a work proficiency method, and a work reproduction robot will be described with reference to the drawings. However, it should be noted that the technical scope of the present disclosure is not limited to those embodiments, but extends to the disclosure described in the claims and equivalents thereof.

### (Embodiment 1)

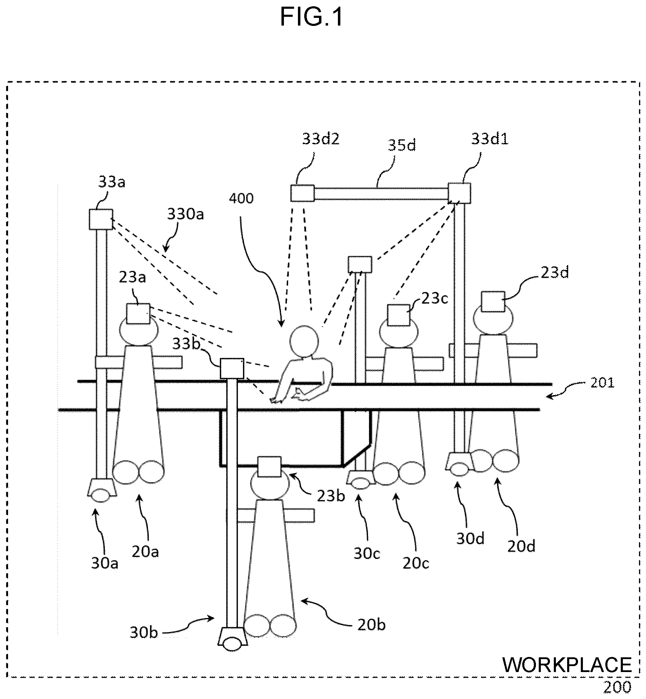

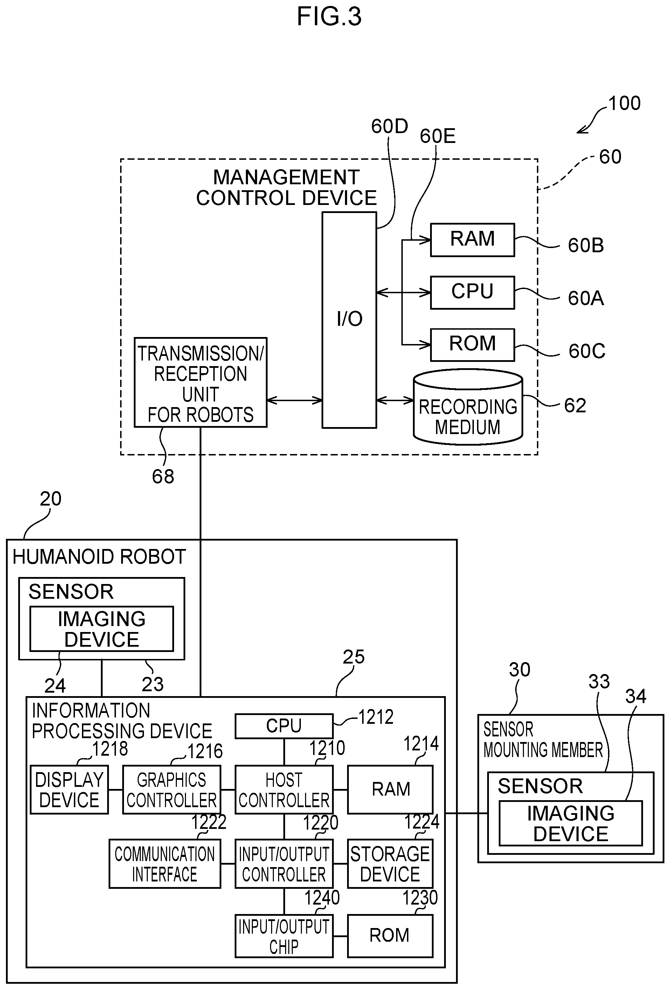

Fig. 1 is a diagram for describing a work robot adjustment method. In order to avoid complication of Fig. 1, the reference numeral of a sensing region of each sensor is attached to only a sensing region 330a of a mounting member sensor 33 which will be described later. Details of a work robot adjustment system 100 for performing the work robot adjustment method will be described later using Fig. 3.

In the work robot adjustment method, a plurality of humanoid robots 20a to 20d functioning as mobile robots, and sensor mounting members 30a to 30d respectively coupled to the humanoid robots 20a to 20d are provided.

Each of the humanoid robots 20a to 20d moves to the vicinity of a worker 400 working on a work line 201 in a workplace 200 in response to a command from a management control device 60 (refer to Fig. 3) which will be described later or an instruction from an information processing device 25 (refer to Fig. 3) provided in each of the humanoid robots 20a to 20d. Each of the sensor mounting members 30a to 30d is coupled to one of the humanoid robots 20a to 20d, and thus moves in accordance with movement of the humanoid robots 20a to 20d.

Then, the motion of the worker 400 is recorded by sensors 23a to 23d and 33a to 33d provided in the humanoid robots 20a to 20d and the sensor mounting members 30a to 30d. After the motion is recorded, learning of the motion of the worker 400 is performed on the basis of the record. This learning is performed by automatic learning. Here, automatic learning refers to automatically creating a trained model or performing determination/analysis using a trained model.

After learning of the motion of the worker 400 is performed, the humanoid robot 20 functioning as a work robot is caused to perform the same motion as the motion of the worker 400 in response to a command from the management control device 60 or an instruction from the information processing device 25 provided in the humanoid robots 20a to 20d. The process of causing the humanoid robot 20 to perform the same motion as the motion of worker 400 is also performed by automatic learning.

**In** the process of causing the humanoid robot 20 to perform the same motion as the motion of worker 400, work automatically learned by the humanoid robot 20 is performed, for example, about 300 times, and processing is repeated until the humanoid robot 20 can execute the motion with the same motion, route, speed, and the like as those of the automatically learned work. **In** addition, the processing is repeated until the automatically learned work can be executed with the same motion, route, speed, and the like as those of the automatically learned work when the speed is increased by 20 times, for example.

The learning result is reflected in the plurality of work robots (humanoid robots 20), and the processing is repeated until the motions of the plurality of work robots are adjusted to match from the start to the stop. As a result, it is possible to reduce the time required and costs for motion analysis of the worker and programming.

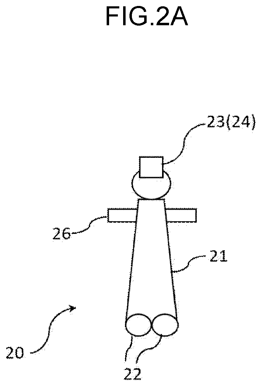

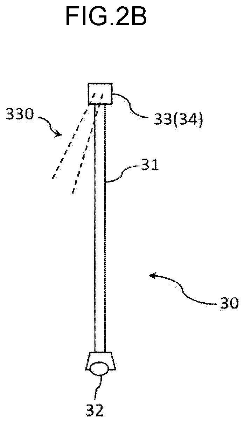

Fig. 2 is a diagram showing an example of the work robot and the sensor mounting member shown in Fig. 1. Configurations of the humanoid robots 20a to 20d and the sensor mounting members 30a to 30d will be described with reference to Fig. 2.

As shown in Fig. 2(a), humanoid robot 20 includes a robot main body 21, a robot moving mechanism 22, a robot sensor 23, a robot imaging device 24 included in the robot sensor 23, an information processing device 25 (refer to Fig. 3), and an arm 26.

The humanoid robot 20 can be moved by the robot moving mechanism 22 provided below the robot main body 21, and moves to the vicinity of the work line 201 in the workplace 200 in response to a command from the outside of the humanoid robot 20 such as a management control device, or with reference to a program recorded in the information processing device 25.

The robot main body 21 is provided with the robot moving mechanism 22 below the robot main body, the arm 26 above the robot main body, and the robot sensor 23 above the arm 26. Furthermore, the information processing device 25 is provided inside the robot main body 21.

The robot moving mechanism 22 may have any configuration, and may be provided with, for example, a rotating body driven by a motor, or may have a configuration in which a shape of a leg portion is similar to that of a human leg.

The robot sensor 23 is provided above the humanoid robot 20, preferably on the top of the robot main body 21, in other words, near the head of the humanoid robot, and detects the worker 400. Further, the robot sensor 23 sequentially acquires information indicating at least a distance and an angle between an object around the humanoid robot 20 on which the humanoid robot 20 works and the arm 26. As an example of the robot sensor 23, cameras with higher performance, thermo cameras, high-pixel/telephoto/ultra-wide angle/360-degree/high-performance cameras, a radar, a solid-state LiDAR, a LiDAR, a multi-color laser coaxial displacement meter, vision recognition, or various other sensors can be adopted. These are also examples of the robot imaging device 24. Other examples of the robot sensor 23 include a vibratory meter, a hardness meter, a fine sound sensor, an ultrasonic wave sensor, a vibration sensor, an infrared ray sensor, an ultraviolet ray sensor, an electromagnetic wave sensor, a temperature sensor, a humidity sensor, spot AI weather forecast, a high-precision multi-channel GPS, low-altitude satellite information, long tail incident AI data, and the like.

Examples of sensor information acquired through the robot sensor 23 include an image, a distance, vibration, heat, odor, color, sound, ultrasonic waves, ultraviolet rays, infrared rays, and the like, and preferably, information of images and distances is acquired by the robot imaging device 24. The robot sensor 23 (robot imaging device 24) performs such detection, for example, every nanosecond. Sensor information is used for, for example, motion capture of a motion of the worker 400, a 3D map of the workplace 200, navigation of movement and motion of the worker 400 in the workplace 200, and analysis of cornering, speed, and the like.

The arm 26 is rotatably attached above the robot main body 21. In addition, a grip portion (not illustrated) for gripping an object is attached to the distal end of the arm 26. The sensor mounting member 30 is coupled to the humanoid robot 20 through the grip portion.

In the humanoid robot 20, a sensor may be further provided in a center portion of the robot main body 21, for example, in the body of the humanoid robot. In this case, the sensor is different in height position from the robot sensor 23 provided near the top of the robot main body. Since the height positions are different, the sensor can detect the motion of the worker 400 from a different angle.

As shown in Fig. 2(b), the sensor mounting member 30 includes a mounting member main body 31, a mounting member moving mechanism 32, a mounting member sensor 33, and a mounting member imaging device 34. The sensor mounting member 30 can be moved by the mounting member moving mechanism 32 provided below the mounting member main body 31.

The mounting member main body 31 is, for example, a rod-like or wand-like member, and a material thereof is not particularly limited. The length of the mounting member main body 31 is greater than the height of the humanoid robot 20. The mounting member moving mechanism 32 is provided below the mounting member main body 31, preferably at the lower end thereof, and the mounting member sensor 33 is provided above the mounting member main body 31, preferably at the upper end thereof.

The mounting member moving mechanism 32 includes a rotating body such as a caster, for example, and assists movement of the sensor mounting member 30 in accordance with movement of the humanoid robot 20. In the present embodiment, it is not assumed that the sensor mounting member 30 moves autonomously, but a mounting member control unit (not illustrated) that gives a command to the mounting member moving mechanism 32 may be provided, and the mounting member moving mechanism 32 may be moved on the basis of a signal from the mounting member control unit.

The mounting member sensor 33 is provided above the mounting member main body 31 and detects the worker 400. Further, the mounting member sensor 33 sequentially acquires information indicating at least a distance and an angle between an object around the humanoid robot 20 on which the humanoid robot 20 works and the arm 26. An example of the mounting member sensor 33 is similar to the robot sensor 23, and an example of the mounting member imaging device 34 is also similar to an example of the robot imaging device 24. In addition, an example of acquired sensor information is similar to that of the robot sensor 23, and an example of a sensor information detection timing is similar to that of the robot sensor 23.

The mounting member imaging device 34 is included in the mounting member sensor 33. Further, the mounting member sensor 33 including the mounting member imaging device 34 is disposed at a position higher than the height of the humanoid robot 20. As a result, the mounting member sensor 33 can detect the motion of the worker from a position higher than the robot sensor 23.

The mounting member sensor 33 is provided in the mounting member main body 31 such that the sensing region 330 thereof is in a direction in which the motion of the worker 400 is detected. The robot sensor 23 is also provided in the robot main body 21 such that the sensing region (not illustrated) is in a direction in which the motion of the worker 400 is detected.

As shown in Fig. 1, the four humanoid robots 20a to 20d and the four sensor mounting members 30a to 30d are disposed to detect the motion of the worker 400 from different positions, heights, and/or directions. As described above, in the present embodiment, since the plurality of sensors are disposed to detect the motion of the worker 400 from different positions, heights, and/or directions, various types of data can be acquired in learning of the motion of the worker 400. The number of robots for recording the motion of the worker 400 is not limited to 4, and may be 1 to 3 or 5 or more.

In Fig. 1, the sensor mounting member 30d is provided with an extension member 35d and an additional mounting member sensor 33d2 in order to sense the hands of the worker 400. The extension member 35d is a rod-like member, and is disposed to extend in the horizontal direction from the vicinity of the mounting member sensor 33d1. Further, the mounting member sensor 33d2 is provided at the distal end of the extension member 35d, and the mounting member sensor 33d2 senses the worker 400 from above. The motion of the worker 400 can be easily detected by the mounting member sensor 33d2. Furthermore, in a case where a sensor (imaging device) different from the robot sensor 23 is provided also in the robot main body 21 of each humanoid robot, the number of sensors included in the plurality of humanoid robots is 8 in total and the number of sensors included in the plurality of sensor mounting members is 5 in total, and thus the motion of the worker 400 can be detected by 13 sensors in total.

Fig. 3 is a block diagram showing an example of a functional configuration in the work robot adjustment system 100.

The work robot adjustment system 100 includes the humanoid robot 20, the sensor mounting member 30, and a management control device 60. The humanoid robot 20 is connected to a communication unit 68 for robots in the management control device 60 and the sensor mounting member 30 through wireless or wired communication, receives a command from management control device 60, and acquires a detection result from the sensor mounting member 30. Note that the sensor mounting member 30 may be configured to be able to communicate with the management control device 60. Instead of one humanoid robot 20, a plurality of humanoid robots may be connected to the management control device 60.

The humanoid robot 20 includes the robot sensor 23, the robot imaging device 24 included in the robot sensor 23, and the information processing device 25.

The information processing device 25 according to the present embodiment includes a central processing unit (CPU) 1212, a random access memory (RAM) 1214, and a graphics controller 1216, which are mutually connected by a host controller 1210. The information processing device 25 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The information processing device 25 also includes a read only memory (ROM) 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the information processing device 25. The DVD drive reads a program or data from a DVD-ROM or the like and provides the program or data to the storage device 1224. The IC card drive reads a program and data from an IC card and/or writes a program and data to the IC card.

The ROM 1230 stores therein a boot program executed by the information processing device 25 at the time of activation and/or a program depending on hardware of the information processing device 25. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. Programs are read from a computer-readable storage medium, installed in the storage device 1224, the RAM 1214, or the ROM 1230, which is also an example of a computer-readable storage medium, and executed by the CPU 1212. Information processing described in such programs is read by the information processing device 25, and provides cooperation between the programs and the various types of hardware resources. A device or a method may be configured by realizing operation or processing of information according to use of the information processing device 25.

For example, in a case where communication is executed between the information processing device 25 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to a network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute, on data read from the RAM 1214, various types of processing including various types of operations, information processing, condition determination, conditional branching, unconditional branching, information retrieval/replacement, and the like, which are described throughout the present disclosure and specified by a command sequence of a program, and write back results to the RAM 1214. In addition, the CPU 1212 may search for information in a file, a database, or the like in a recording medium.

The programs or software module described above may be stored in a computer-readable storage medium on the information processing device 25 or in the vicinity of the information processing device 25. Furthermore, a recording medium such as a hard disk or a RAM provided in a server system connected to a dedicated communication network or the Internet can be used as a computer-readable storage medium, thereby providing a program to the information processing device 25 via the network.

The blocks in the flowcharts and drawings in the present embodiment may represent steps of a process in which an operation is performed or "units" of a device that are responsible for performing the operation. Certain steps and "units" may be implemented by dedicated circuits, programmable circuits provided with computer-readable instructions stored on a computer-readable storage medium, and/or a processor provided with computer-readable instructions stored on a computer-readable storage medium. Dedicated circuits may include digital and/or analog hardware circuits, and may include integrated circuits (ICs) and/or discrete circuits. Programmable circuits may include a reconfigurable hardware circuit including, for example, logical AND, logical OR, exclusive OR, NAND, NOR, and other logical operations, flip-flops, registers, and memory elements, such as a field programmable gate array (FPGA) and a programmable logic array (PLA).

A computer-readable storage medium may include any tangible device capable of storing instructions executed by a suitable device, such that a computer-readable storage medium having instructions stored thereon includes an article of manufacture including instructions that may be executed to create means for performing operations specified in flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, an integrated circuit card, and the like.

Computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), or C++, and conventional procedural programming languages, such as the "C" programming language or similar programming languages.

The computer-readable instructions may be provided for a processor of a general purpose computer, a special purpose computer, or other programmable data processing devices, or a programmable circuit to cause the processor of the general purpose computer, special purpose computer, or other programmable data processing devices, or programmable circuit to execute the computer-readable instructions to generate means for performing operations specified in the flowcharts or block diagrams, either locally or over a local area network (LAN), a wide area network (WAN) such as the Internet, or the like. Examples of the processor include a computer processor, a processing unit, a microprocessor, a digital signal processor, a controller, a microcontroller, and the like.

The sensor mounting member 30 is coupled to the arm 26 of the humanoid robot 20 and moves in accordance with the humanoid robot 20. The mounting member sensor 33 (mounting member imaging device 34) detects information of an object and transmits the information to the information processing device 25 via a mounting member communication unit (not illustrated).

The management control device 60 is a control device that gives an instruction to the humanoid robot 20 in order to realize the work adjustment robot adjustment method. In addition, the management control device 60 may acquire sensor information accumulated in the storage device 1224.

The management control device 60 includes a CPU 60A, a RAM 60B, a ROM 60C, an input/output unit (I/O) 60D, a bus 60E such as a data bus or a control bus connecting these units, and a transmission/reception unit 68 for robots. A recording medium 62 is connected to the I/O 60D.

Further, the transmission/reception unit 68 for robots that transmits/receives motion control information including work information to/from a control system of the humanoid robot 20 is connected to the I/O 60D.

### (Processing of Work Robot Adjustment Method of Embodiment 1 According to Present Disclosure)

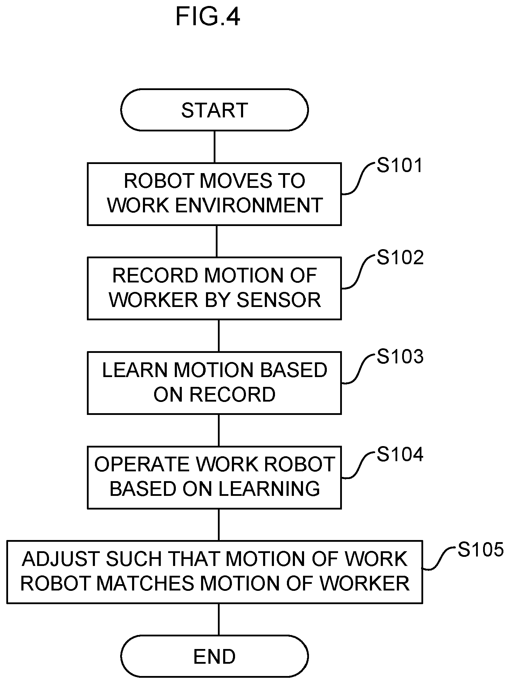

Fig. 4 is an example of a flowchart showing processing of the work robot adjustment method of the present embodiment.

First, the information processing device 25 instructs the humanoid robot 20 functioning as a mobile robot to move to a workplace (work environment) 200 according to a command of the management control device 60 or a command to read a program stored in the storage device 1224 of the information processing device 25 (step S101). The movement is performed by the operation of the robot moving mechanism 22 of the humanoid robot 20. At this time, since the sensor mounting member 30 is coupled to the humanoid robot 20, the sensor mounting member 30 moves with the movement of the humanoid robot 20.

At the time of movement, a command is given such that the sensing regions (imaging regions) of the robot sensor 23 (robot imaging device 24) and the sensor mounting member sensor 33 (mounting member imaging device 34) detect the worker 400 in different directions. Such disposition of the humanoid robot 20 and the sensor mounting member 30 is performed by, for example, recording a floor drawing of the workplace 200 in advance in the storage device 1224 or/and the recording medium 62, and associating the position of the humanoid robot 20 and the like with the recorded floor drawing. Alternatively, the disposition of the humanoid robot 20 and the like is based on a position optimized through machine learning.

Next, the motion of the worker 400 on the work line 201 is detected by the plurality of sensors 23a to 23d and 33a to 33d (a plurality of imaging devices 24a to 24d and 34a to 34d) (step S102). The information processing device 25 of each of the humanoid robots 20a to 20d acquires sensor information detected by various sensors. The acquired sensor information is stored in the storage device 1224.

The information processing device 25 learns the motion of the worker 400 on the basis of the sensor information accumulated, in other words, recorded, in the storage device 1224 (step S103). In learning, motion capture of the motion of the worker 400, a 3D map of the workplace 200, navigation of the movement and the motion of the worker 400 in the workplace 200, cornering, the speed, and the like are analyzed, and an optimal motion of the humanoid robot 20 is learned by automatic learning.

As the next step, the information processing device 25 or the management control device 60 instructs the humanoid robot 20 functioning as a work robot to perform the same motion as those of the worker 400 on the basis of the automatic learning in step S103 (step S104). Specifically, the arm 26 of the robot and/or the robot moving mechanism 22 cause the humanoid robot 20 to repeatedly perform the motion based on the automatic learning in step S103 such that the motion becomes the same as the work (motion) of the worker 400 obtained by the automatic learning in step S103. This motion is performed, for example, several hundred times, for example, about 300 times, and this processing is repeated until the motion becomes the same motion, route (movement), speed, and the like as those of the work obtained by the humanoid robot through automatic learning.

In step S104, the humanoid robot 20 is caused to perform the motion based on the automatic learning in step S103 by increasing the speed of the automatically learned work (motion) such as 20 times speed. In this case, the humanoid robot 20 is caused to repeatedly perform the motion several hundred times, for example, about 300 times, and the processing is repeated until the humanoid robot can perform the motion, route (movement), and speed that are the same as those of the work obtained by the automatic learning.

Furthermore, the information processing device 25 or the management control device 60 performs processing of adjusting the motion of the humanoid robot (work robot) to match the motion of the worker 400 (step S105). Specifically, the information processing device 25 or the management control device 60 instructs a plurality of work robots, the plurality of humanoid robots 20 in the present embodiment, to perform the same motion as the worker 400 on the basis of the result obtained in step S104. This processing is repeated until motions of the plurality of humanoid robots 20 are synchronized with each other. When the motions of the plurality of humanoid robots 20 are synchronized with each other, the series of work robot adjustment method ends.

### (Operation and Effect of Work Robot Adjustment Method According to Embodiment 1)

According to the work robot adjustment method according to the present embodiment, while the humanoid robot 20 that is a mobile robot includes a sensor, the humanoid robot 20 automatically moves to a proper position according to a prestored program or a machine learning result. Therefore, as compared with a case where a fixed sensor is disposed in the workplace 200, it is not necessary to redispose the sensor or increase the number of sensors according to the workplace, and it is possible to adjust the sensing environment of the worker 400 in a short period of time and at low costs.

Further, the humanoid robot 20 is coupled to the sensor mounting member 30 in which the sensor (imaging device) is disposed. Therefore, the plurality of sensors can simultaneously move when the humanoid robot 20 moves.

In the work robot adjustment method, a configuration in which the work (motion) of the worker 400 is sensed by the mobile robot (humanoid robot 20) having the sensor is adopted. Therefore, the mobile robot can be moved in accordance with the movement of the worker 400, and sensing can be performed at a position suitable for the motion of the worker 400.

In the sensor mounting member 30, the mounting member sensor 30 (mounting member imaging device 40) is disposed at a position higher than the height of the humanoid robot. Therefore, the motion of the worker 400 can be sensed from a more overhead position.

In the work robot adjustment method, a configuration in which the plurality of humanoid robots 20a to 20d and the plurality of sensor mounting members 30a to 30d are disposed at different positions, and the motion of the worker 400 is sensed by these sensors is adopted. Therefore, it is possible to sense one work of the worker 400 from different positions, and it is possible to acquire a large amount of data required for automatic learning at a time. As a result, it is possible to reduce the time required and costs for motion analysis of the worker 400 and programming.

Furthermore, in the work robot adjustment method, the motion of the worker 400 is automatically learned on the basis of sensor information, and in the automatic learning, motion capture of the motion of the worker 400, a 3D map of the workplace 200, navigation of movement and motion of the worker 400 in the workplace 200, cornering, speed, and the like are analyzed. Therefore, the motion of the worker 400 can be analyzed from multiple aspects at a time, and the time required and costs for motion analysis of the worker 400 and programming can be reduced.

In the work robot adjustment method, a configuration in which a work robot (humanoid robot 20) is operated on the basis of learning, and processing is repeated until automatically learned work and the motion of the work robot become the same motion, route (movement), speed, and the like is adopted. As a result, the time for confirming whether the motion of the work robot has accuracy with the work of the worker 400 is shortened.

In the present embodiment, the same robot (humanoid robot 20) is used as a mobile robot and a work robot. Therefore, it is not necessary to manufacture robots for divided processes, and thus the costs and time for adjusting work robots are reduced.

In the work robot adjustment method, a configuration in which the motion of the work robot (humanoid robot 20) and the motion of the worker are adjusted to match each other is adopted. As a result, the accuracy of the motion of the work robot and the work of the worker 400 is secured.

In the work robot adjustment method, a configuration in which the result of automatic learning is applied to a plurality of work robots (humanoid robots 20), and processing is repeated until the motions of the plurality of work robots become identical is adopted. As a result, the accuracy of the motion of the work robot and the work of the worker 400 is secured.

### (Modified Example of Sensor Mounting Member)

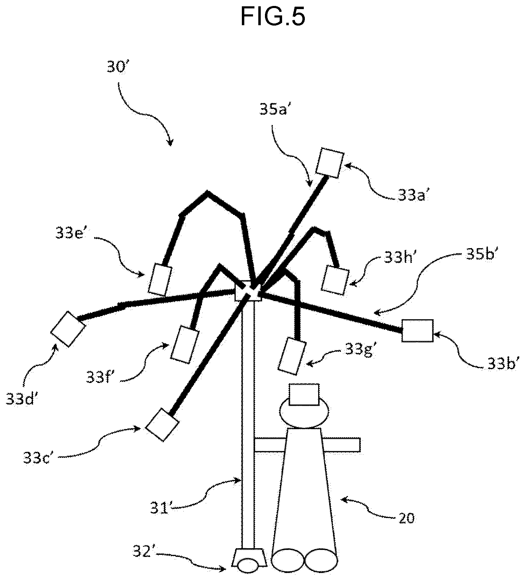

Fig. 5 is an example of a modified example of the sensor mounting member.

The difference between the sensor mounting member 30' and the sensor mounting member 30 is that three or more (eight in Fig. 5) sensor mounting member sensors 33a' to 33g' are provided in the sensor mounting member 30'.

Specifically, the sensor mounting member 30' includes a mounting member main body 30', a mounting member moving mechanism 22', a plurality of sensor mounting member sensors 33a' to 33g' (a plurality of imaging devices), and a plurality of extension members 35a' and 35b'. In Fig. 5, in order to avoid complication of the figure, only reference numerals 35a' and 35b' are attached to the extension members.

The sensor mounting member 30' has an external appearance like spider legs according to the plurality of extension members. In the sensor mounting member 30', the plurality of sensor mounting member sensors 33a' to 33g' are disposed in different directions and/or at different heights.

According to the sensor mounting member 30', the plurality of sensors (imaging devices) are disposed, and a large number of sensors (imaging devices) can be moved at a time via the mounting member moving mechanism 32'. As a result, for example, even in a workplace where a space is narrow for disposing a plurality of sensor mounting members, work of the worker can be sensed from various heights, positions, and/or directions.

Although the embodiments of the present disclosure have been described above, the present disclosure is not limited to the above-described embodiments of the present disclosure, and various modifications and applications can be made without departing from the gist of the present disclosure.

In the present embodiment, it has been described that there are a plurality of mobile robots (humanoid robots) and a plurality of sensor mounting members. However, the present disclosure is not limited thereto, and for example, one mobile robot including a sensor may be moved to record work of a worker.

In the present embodiment, it has been described that automatic learning is performed in learning of S103. However, learning is not necessarily automatic learning, and may be other known machine learning, for example, deep learning, unsupervised/supervised learning, reinforcement learning, or the like.

In the present embodiment, one sensor mounting member is coupled to one mobile robot (humanoid robot). However, the present disclosure is not limited thereto, and for example, a plurality of sensor mounting members may be coupled to one mobile robot.

**In** the present embodiment, it has been described that the mobile robot and the work robot are the same humanoid robot. However, the mobile robot and the work robot may be different robots.

### (Embodiment 2)

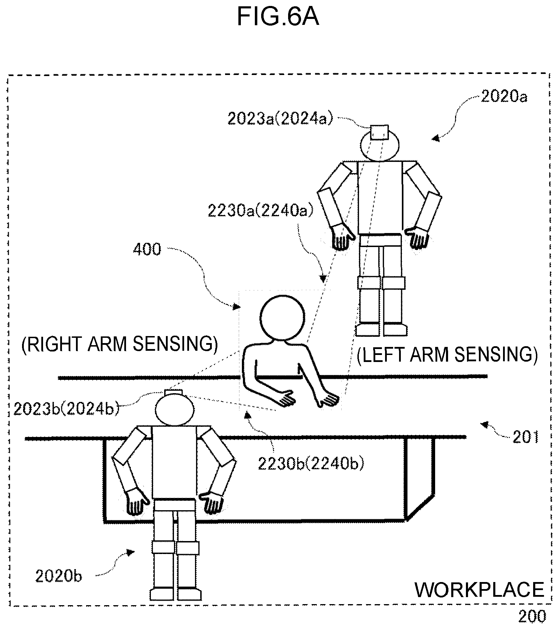

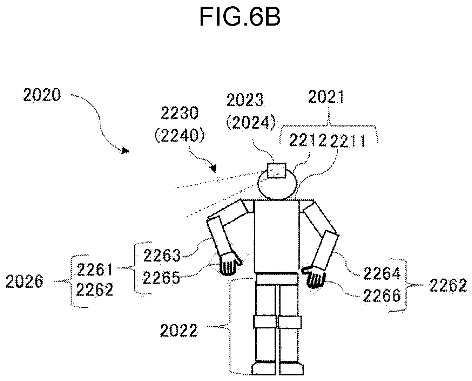

Fig. 6A and Fig. 6B are diagrams for describing a sensing system.

Fig. 6A is a diagram showing an example of a system configuration in a sensing system of embodiment 2 according to the present disclosure. The sensing system includes a first humanoid robot 2020a and a second humanoid robot 2020b that function as mobile robots. The number of humanoid robots is not limited to two.

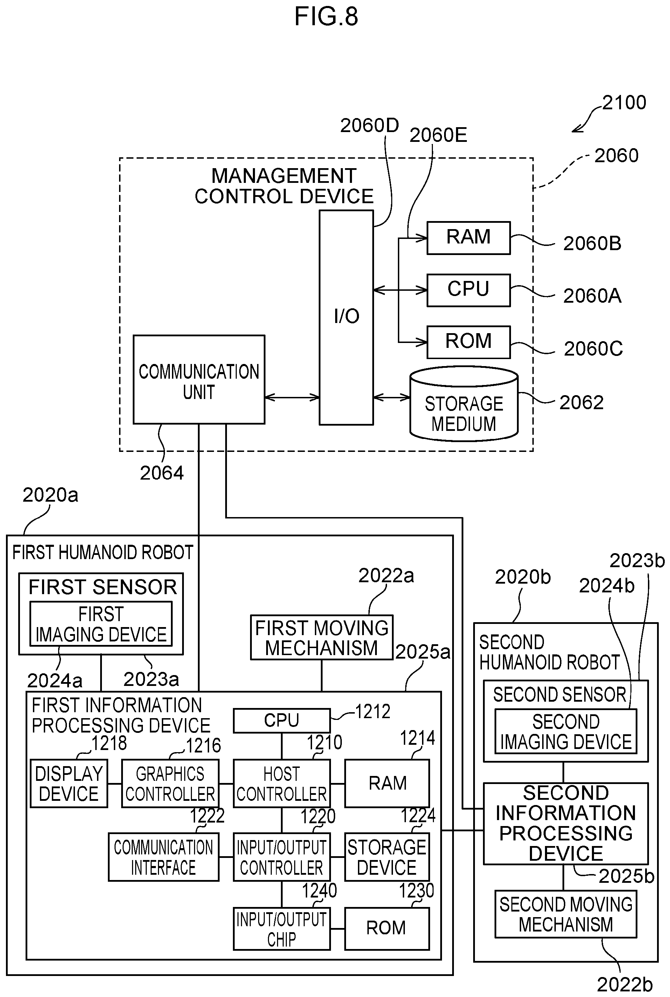

The humanoid robots 2020a and 2020b move to the vicinity of the worker 400 working on the work line 201 of the workplace 200 in response to an instruction from a management control device 2060 (refer to Fig. 8) which will be described later or an instruction from each of information processing devices 2025a and 2025b (refer to Fig. 8) provided in the humanoid robots 2020a and 2020b. The sensing system senses a predetermined motion of the worker 400 by a first sensor 2023a (first imaging device 2024a) included in the first humanoid robot 2020a and a second sensor 2023b (second imaging device 2024b) included in the second humanoid robot 2020b. The second sensor 2023b (second imaging device 2024b) senses a predetermined motion of the worker 400 at a position different from the position of the first sensor 2023a (first imaging device 2024a).

Fig. 6B is a diagram showing an example of the mobile robot shown in Fig. 6A. The humanoid robot 2020 functioning as a mobile robot includes a robot main body 2021, a robot moving mechanism 2022, a robot sensor 2023, a robot imaging device 2024 included in the robot sensor 2023, the information processing device 2025, and a robot arm 2026.

The humanoid robot 2020 can be moved by the robot moving mechanism 2022 provided below the robot main body 2021, and moves to the vicinity of the work line 201 in the workplace 200 in response to an instruction from the outside of the humanoid robot 2020 such as a management control device 2060, for example, or with reference to a program stored in the information processing device 2025.

The robot main body 2021 includes a robot body 2211 and a robot head 2212. The robot body 2211 and the robot head 2212 constitute a first drive mechanism, and a sensing region 2230 (imaging region 2240) of the robot sensor 2023 (robot imaging device 2024) can be changed. The configuration of the drive mechanism is not particularly limited, and for example, a servomotor (not illustrated) may rotate the robot head 2212 by a predetermined angle with respect to the robot body 2211 or rotate the robot body 2211 by a predetermined angle with respect to the robot moving mechanism 22.

The robot moving mechanism 2022 is provided below the robot body 2211, the robot arm 2026 is provided on a side of the robot body 2211, and the robot sensor 2023 is provided on the robot head 2212. Furthermore, the information processing device 2025 is provided inside the robot main body 2021.

The robot moving mechanism 2022 may have any configuration, and may be provided with, for example, a rotating body driven by a motor, or may have a configuration in which a shape of a leg portion is similar to that of a human leg. As an example, in a case where the robot moving mechanism 2022 is configured to resemble the shape of a human leg, a servomotor is provided at a position corresponding to a human joint, and a moving mechanism is configured by rotating the servomotor by a predetermined angle.

The robot sensor 2023 is preferably provided on the robot head 2212 and senses the worker 400. Further, robot sensor 2023 sequentially acquires information indicating at least a distance and an angle between an object around the humanoid robot 2020 on which the humanoid robot 2020 works and the robot arm 2026. As an example of the robot sensor 2023, cameras with higher performance, thermo cameras, high-pixel/telephoto/ultra-wide angle/360-degree/high-performance cameras, a radar, a solid-state LiDAR, a LiDAR, a multi-color laser coaxial displacement meter, vision recognition, or various other sensors can be adopted. These are also examples of the robot imaging device 2024. Furthermore, other examples of the robot sensor 2023 include a vibratory meter, a hardness meter, a micro vibratory meter, an ultrasonic measuring device, a vibration measuring device, an infrared measuring device, an ultraviolet measuring device, an electromagnetic wave measuring device, a thermometer, a hygrometer, a spot AI weather forecast, a high-precision multi-channel GPS, low-altitude satellite information, long tail incident AI data, or the like.

Examples of sensor information acquired from the robot sensor 2023 include an image, a distance, vibration, heat, an odor, a color, a sound, an ultrasonic wave, a radio wave, an ultraviolet ray, an infrared ray, humidity, and the like, and preferably, information on an image and a distance is acquired by the robot imaging device 2024. The robot sensor 2023 (robot imaging device 2024) performs such sensing every nanosecond as an example. Sensor information is used for, for example, motion capture of a motion of the worker 400, a 3D map of the workplace 200, navigation of movement and motion of the worker 400 in the workplace 200, and analysis of cornering, speed, and the like.

The robot arm 2026 includes a right arm 2261 and a left arm 2262. The right arm 2261 includes a right grip support portion 2263 and a right grip portion 2265, and the left arm 2262 includes a left grip support portion 2264 and a left grip portion 2266. The right grip support portion 2263 is a mechanism for supporting the right grip portion 2265, the left grip support portion 2264 is a mechanism for supporting the left grip portion 2266, and as an example, the right grip support portion and the left grip support portion may be similar in shape to human arms. The grip portions 2265 and 2266 are, for example, mechanisms for gripping work parts and the like, and may be similar in shape to a human hand as an example.

The robot arm 2026 constitutes a second drive mechanism. The configuration of the drive mechanism is not particularly limited, and for example, in a case where the robot arm 2026 resembles the shape of a person, a configuration in which a servomotor is provided at each joint location such as a location corresponding to a shoulder of a person, a location corresponding to an elbow, a location corresponding to a wrist, and a location corresponding to a finger joint, and is rotated by a predetermined angle may be adopted.

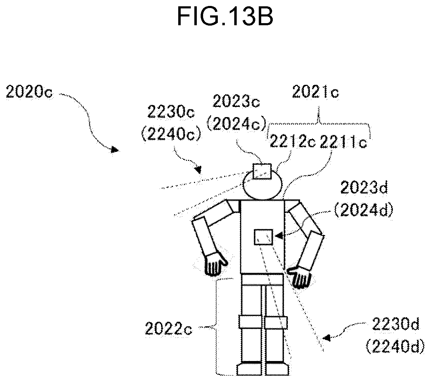

In the humanoid robot 2020, for example, a sensor may be further provided in the robot body 2211 (refer to Fig. 13B). In this case, the sensor is different in height position from the robot sensor 2023 provided on the robot head 2212. Since the height position is different, the sensor can sense the motion of the worker 400 from a different angle.

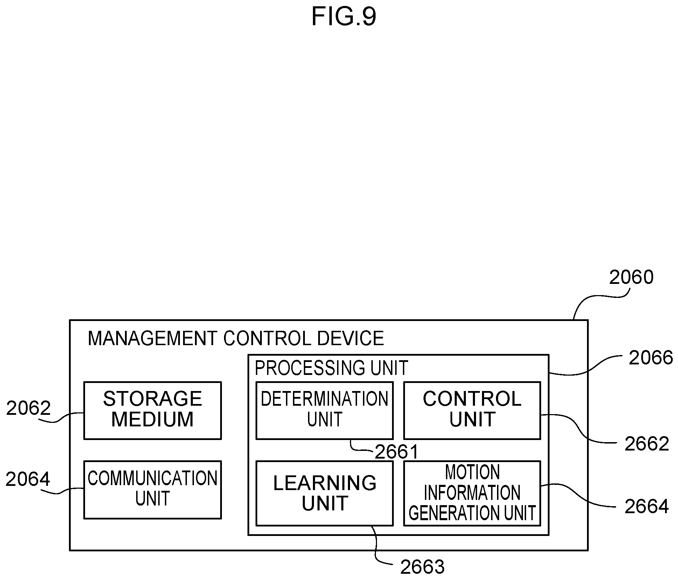

Referring back to Fig. 6A, in a case where the first sensor 2023a (first imaging device 2024a) and the second sensor 2023b (second imaging device 2024b), which are robot sensors (robot imaging devices), sense the motion of the worker 400, the sensing system operates the moving mechanisms and the drive mechanisms of the humanoid robots 2020a and 2020b such that the second sensor 2023b (second imaging device 2024b) senses a predetermined motion of the worker 400 at a position different from the position of the first sensor 2023a (first imaging device 2024a) and that the sensing regions 2230a and 2230b (imaging region 2240a and 2240b) of the sensors sense different predetermined parts of the worker 400. However, the sensing regions 2230a and 2230b (imaging regions 2240a and 2240b) of the sensors do not need to be entirely different, and may be set such that at least parts of the predetermined parts are different. Examples of the predetermined parts include a neck, an arm, and a wrist of the worker. Further, for recognition of the predetermined part by each sensor, a known image recognition technique may be used, or the predetermined part may be recognized by learning using a learning unit 2663 (refer to Fig. 9).

In the present embodiment, the moving mechanism 2022 and the drive mechanism of the humanoid robot are operated such that the sensing region 2230a (imaging region 2240a) of the first sensor 2023a (first imaging device 2024a) provided in the first humanoid robot 2020a senses the left arm of the worker 400, and the sensing region 2230b (imaging region 2240b) of the second sensor 2023b (second imaging device 2024b) provided in the second humanoid robot 2020b senses the right arm of the worker 400.

While sensing is performed by each sensor, the sensing system determines whether or not a predetermined part that the worker 400 moves during a predetermined motion is sensed from first information acquired by the first sensor 2023a (the first imaging device 2024a) and second information acquired by the second sensor 2023b (the second imaging device 2024b). The predetermined motion is diverse, and examples thereof include assembling of parts, movement of parts, painting of products, movement of the worker themselves, and the like.

If it is determined that the predetermined part that the worker 400 moves during the predetermined motion is not sensed, the sensing system operates the first moving mechanism 2022a (refer to Fig. 8) of the first humanoid robot 2020a and/or the second moving mechanism 2022b (refer to Fig. 8) of the second humanoid robot 2020b such that the predetermined part is sensed.

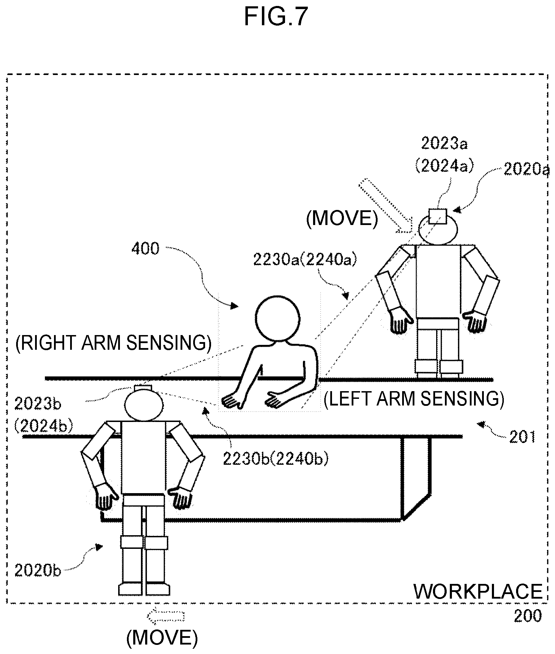

Fig. 7 is a diagram showing an example when a mobile robot moves in the sensing system of the present embodiment.

As shown in Fig. 7, when the worker 400 performs a predetermined motion, for example, the left arm of the worker 400 may be hidden behind the back when viewed from the back side of the worker 400. Therefore, it is determined whether or not the predetermined part that the worker 400 moves during a predetermined motion is sensed, and when it is determined that the predetermined part is not sensed, the sensing system operates the first moving mechanism 2022a of the first humanoid robot 2020a such that the predetermined part is sensed. As a result, the first humanoid robot 2020a can move to a position where the first sensor 2023a (first imaging device 2024a) easily performs sensing, and the first sensor 22023a (first imaging device 2024a) can sufficiently sense the predetermined part (left arm in the present embodiment). Note that, in Fig. 7, since the position of the right arm of the worker 400 varies according to the predetermined motion, the second moving mechanism 2022b of the second humanoid robot 2020b (second sensor 2023b (second imaging device 2024b)) that has sensed the right arm is also operated.

The first information and the second information are stored, and the sensing system learns a predetermined motion of the worker on the basis of the stored first information and second information. This learning is performed, for example, by automatic learning which is learning for automatically creating a trained model or automatically performing determination/analysis using the trained model.

The sensing system generates motion information that gives a motion instruction to the work robot such that the work robot performs the work of the worker 400 with reference to the learning result and work manual information of the worker 400 and/or process schedule information. This makes it possible to cause the work robot to perform work of a person. The work manual information includes, for example, a name and content of each work item, an order of work items, information of a standard work time required for each work item, and the like. In addition, the process schedule information includes, for example, information indicating a work time and a start time/end time of the entire work, information indicating a work time and a start time/end time of each work item, information indicating a worker of each work item, and the like.

Fig. 8 is a block diagram showing an example of a configuration and functions of the sensing system 2100 of the present embodiment.

The sensing system 2100 includes a first humanoid robot 2020a, a second humanoid robot 2020b, and a management control device 2060. The first humanoid robot 2020a and the second humanoid robot 2020b are connected to a communication unit 2064 of the management control device 2060 through wireless or wired communication, respectively, receive an instruction from the management control device 2060, and transmit information acquired by each sensor. The first humanoid robot 2020a and the second humanoid robot 2020b may also be connected to each other through wireless or wired communication to transmit and receive information and instructions acquired by the respective sensors.

The first humanoid robot 2020a includes a first moving mechanism 2022a, a first sensor 2023a that is a robot sensor, a first imaging device 2024a that is a robot imaging device included in the first sensor 2023, a first information processing device 2025a, a first drive mechanism, and a second drive mechanism. The second humanoid robot 2020b also includes a second moving mechanism 2022b, a second sensor 2023b that is a robot sensor, a second imaging device 2024b that is a robot imaging device included in the second sensor 2023, a second information processing device 2025b, and two drive mechanisms. In the present embodiment, the first humanoid robot 2020a and the second humanoid robot 2020b have the same configuration.

The first information processing device 2025a according to the present embodiment includes a central processing unit (CPU) 1212, a random access memory (RAM) 1214, and a graphics controller 1216, which are mutually connected by a host controller 1210. The first information processing device 2025a also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The first information processing device 2025a also includes a read only memory (ROM) 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the first information processing device 2025a. In addition, the storage device 1224 may store first information and second information. The DVD drive reads a program or data from a DVD-ROM or the like and provides the program or data to the storage device 1224. The IC card drive reads a program and data from an IC card and/or writes a program and data to the IC card.

The ROM 1230 stores therein a boot program and the like executed by the first information processing device 2025a at the time of activation, and/or a program depending on hardware of the first information processing device 2025a. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. Programs are read from a computer-readable storage medium, installed in the storage device 1224, the RAM 1214, or the ROM 1230, which is also an example of a computer-readable storage medium, and executed by the CPU 1212. Information processing described in such programs is read by the first information processing device 2025a, and provides cooperation between the programs and the various types of hardware resources. A device or a method may be configured by realizing operation or processing of information according to use of the first information processing device 2025a.

For example, in a case where communication is executed between the first information processing device 2025a and an external device, the CPU 1212 may execute a communication program loaded in the RAM 1214 and command the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to a network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute, on data read from the RAM 1214, various types of processing including various types of operations, information processing, condition determination, conditional branching, unconditional branching, information retrieval/replacement, and the like, which are described throughout the present disclosure and specified by a command sequence of a program, and write back results to the RAM 1214. In addition, the CPU 1212 may search for information in a file, a database, or the like in a recording medium.

The programs or software module described above may be stored in a computer-readable storage medium on or near the first information processing device 2025a. Furthermore, a recording medium such as a hard disk or a RAM provided in a server system connected to a dedicated communication network or the Internet can be used as a computer-readable storage medium, thereby providing programs to the first information processing device 2025a via a network.

The same applies to the second information processing device 2025b.

The management control device 2060 is a control device that gives an instruction to the humanoid robots 2020a and 2020b in order to realize the sensing system 2100. In addition, the management control device 2060 acquires sensor information (first information and second information) accumulated in the storage device 1224.

The management control device 2060 includes a CPU 2060A, a RAM 2060B, a ROM 2060C, an input/output unit (I/O) 2060D, a bus 2060E such as a data bus or a control bus that connects these components, and a communication unit 2068. A storage medium 2062 is connected to the I/O 2060D.

Further, a communication unit 2064 that transmits/receives sensor information, work manual information, process schedule information, and the like to/from the control system of humanoid robot 2020 is connected to the I/O 2060D.

Fig. 9 is a block diagram showing an example of functions of the management control device 2060 in the sensing system of the present embodiment.

The management control device 2060 includes a storage medium 2062, a communication unit 2064, and a processing unit 2066.

The storage medium 2062 includes, for example, at least one of a semiconductor storage device, a magnetic tape device, a magnetic disk device, or an optical disk device. The storage medium 2062 stores a driver program, an operating system program, an application program, data, and the like used for processing in the processing unit 2066. For example, the storage medium 2062 stores the first information and the second information. In addition, the storage medium 2062 stores work manual information of the worker 400 and/or process schedule information.

The communication unit 2064 includes a wireless communication interface circuit such as Wi-Fi (registered trademark) and/or a wired communication interface circuit such as Ethernet (registered trademark). The communication unit 2064 transmits/receives various types of information to/from the humanoid robots 2020a and 2020b through an interface circuit.

The processing unit 2066 includes one or a plurality of processors and peripheral circuits thereof. The processing unit 2066 integrally controls the overall operation of the sensing system 2100, and is, for example, a CPU. The processing unit 2066 executes processing with reference to programs (driver program, operating system program, application program, etc.) stored in the storage medium 2062. Further, the processing unit 2066 can execute a plurality of programs (application programs and the like) in parallel.

The processing unit 2066 includes a determination unit 2661, a control unit 2662, a learning unit 2663, and a motion information generation unit 2664. Each of these units is a functional module realized by a program executed by a processor included in the processing unit 2060. Alternatively, these units may be mounted on the processing unit 2066 as firmware.

The determination unit 2661 determines, from the first information and the second information, whether or not a predetermined part movable by the worker 400 during a predetermined motion is sensed. In addition, the determination unit 2661 determines whether or not a predetermined part sensed by the first sensor 2023a (first imaging device 2024a) is the same as a predetermined part sensed by the second sensor 2023b (second imaging device 2024b).

When the determination unit 2661 determines that the predetermined part of the worker 400 is not sensed, the control unit 2662 operates the first moving mechanism 2022a of the humanoid robot 2020a and/or the second moving mechanism 2022b of the humanoid robot 2020b such that the predetermined part is sensed. In a case where it is determined that the predetermined part sensed by first sensor 2023a (first imaging device 2024a) is the same as the predetermined part sensed by second sensor 2023b (second imaging device 2024b), the control unit 2662 operates the first moving mechanism 2022a of the humanoid robot 2020a and/or the second moving mechanism 2022b of the humanoid robot 2020b such that the predetermined part sensed by first sensor 2023a (first imaging device 2024a) is different from the predetermined part sensed by second sensor 2023b (second imaging device 2024b).

The learning unit 2663 learns the predetermined motion of the worker 400 with reference to the first information and the second information stored in the storage medium 2062 and/or the storage device 1224.

The motion information generation unit 2664 generates motion information that gives a motion instruction to the humanoid robot 2020 functioning as a work robot with reference to the learning result of learning unit 2663. Note that the motion information generation unit 2664 may refer to the work manual information and/or the process schedule information when generating the motion information.

### (Processing of Sensing System of Embodiment 2 of Present Disclosure)

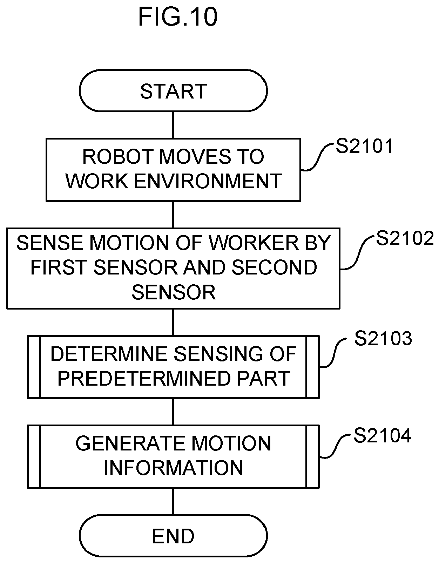

Fig. 10 is an example of a flowchart showing processing of the sensing system of the present embodiment.

First, the information processing device 2025 instructs a plurality of (two in the present embodiment) humanoid robots 2020 functioning as mobile robots to move to the workplace 200 according to an instruction from the management control device 2060 or an instruction to read a program stored in the storage medium 2062 or the storage device 1224 (step S2101). The movement is performed by the operation of the robot moving mechanism 2022 of each humanoid robot 2020.

At the time of movement, an instruction is given such that the sensing regions 2230 (imaging regions 2240) of a plurality of robot sensors 2023 (robot imaging devices 2024) sense the worker 400 in different directions. Such disposition of the plurality of humanoid robots 2020 is performed, for example, by storing a floor diagram of the workplace 200 in advance in the storage device 1224 and/or the storage medium 2062, and associating the position of each humanoid robot 2020 with the stored floor diagram. Alternatively, the disposition of the humanoid robots 2020 may be based on positions optimized through machine learning.

Next, a predetermined motion of the worker 400 on the work line 201 is sensed by the plurality of sensors 2023a and 2023b (a plurality of imaging devices 2024a and 2024b) (step S2102). In the present embodiment, the control unit 2662 gives an instruction such that the sensing region 2230a (imaging region 2240a) of the first sensor 2023a (first imaging device 2024a) senses the left arm of the worker 400 and the sensing region 2230b (imaging region 2240b) of the second sensor 2023b (second imaging device 2024b) senses the right arm of the worker 400, and operates the moving mechanism 2022 and the drive mechanism of each humanoid robot.

The first information acquired by the first sensor 2023a (first imaging device 2024a) and the second information acquired by the second sensor 2023b (second imaging device 2024b) are stored in the storage medium 2062 via the storage device 1224 and/or the communication unit 2064. The storage device 1224 and the storage medium 2062 function as a storage unit.

When the first information and the second information are acquired, it is determined whether or not a predetermined part of the worker 400 is sensed (step S2103). In a case where the determination unit 2661 determines that the predetermined part is not sensed, the control unit 2662 operates the first moving mechanism 2022a and/or the second moving mechanism 2022b such that the predetermined part is sensed.

The management control device 2060 learns the predetermined motion with reference to the first information and the second information accumulated, that is, stored in the storage device 1224 and/or the storage medium 2062, and generates motion information that gives a motion instruction to the humanoid robot 2020 functioning as a work robot with reference to the learning result (step S2104).

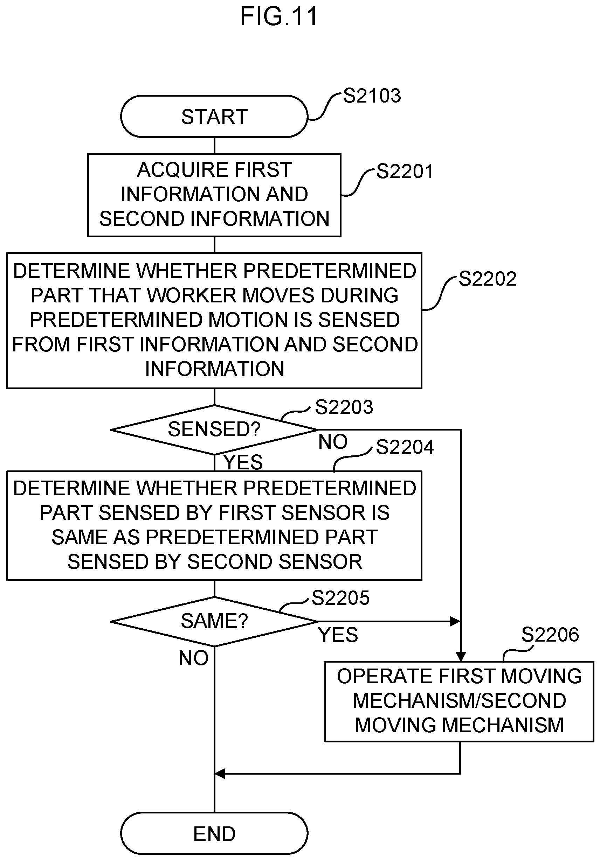

Fig. 11 is an example of a flowchart showing more detailed processing of the predetermined part sensing determination processing shown in step S2103 of Fig. 10.

When the first information and the second information are acquired (step S2201), the determination unit 2661 determines whether or not a predetermined part movable by the worker 400 during a predetermined motion is sensed from the first information and the second information (steps S2202 and S2203). As an example, while the first sensor 2023a (first imaging device 2024a) receives an instruction to sense the left arm of the worker 400 and the second sensor 2023b (second imaging device 2024b) receives an instruction to sense the right arm of the worker 400, a situation in which the left arm or the right arm is hidden behind the back may occur during a predetermined motion of the worker 400. Therefore, the determination unit 2661 determines whether or not the first sensor 2023a (first imaging device 2024a) senses the left arm as a predetermined part with reference to the first information and the second information.

When it is determined that sensing has not been performed (NO in S2203), the control unit 2662 operates the first moving mechanism 2022a and/or the second moving mechanism 2022b such that the predetermined part is sensed (step S2206). As an example, the control unit 2662 operates the first moving mechanism 2022a to move the first humanoid robot 2020a such that the first sensor 2023a (first imaging device 2024a) can sense the left arm that is a part of the predetermined part of the worker 400. The control unit 2662 operates the second moving mechanism 2022b to move the second humanoid robot 2020b such that the second sensor 2023b (second imaging device 2024b) can sense the right arm that is the other part of the predetermined part of the worker 400. As a result, it is possible to avoid a situation in which the predetermined part is not sensed due to a predetermined motion or movement of the worker 400, and it is possible to perform sufficient sensing. In addition, since the sensors sense a part of the predetermined part and the other part, it is possible to efficiently acquire data (information) necessary for learning the work of the worker 400.

On the other hand, when it is determined that sensing has been performed (YES in S2203), the determination unit 2661 determines whether or not a predetermined part sensed by the first sensor 2023a (first imaging device 2024a) is the same as a predetermined part sensed by the second sensor 2023b (second imaging device 2024b) (steps S2204 and S2205). As an example, although the first sensor 2023a (first imaging device 2024a) senses the left arm of the worker 400, and the second sensor 2023b (second imaging device 2024b) senses the right arm of the worker 400 at the start of sensing, a situation may occur in which the same predetermined part (for example, the back) is sensed by a predetermined motion of the worker 400. Therefore, the determination unit 2661 determines whether or not the predetermined parts sensed by the respective sensors are the same.

When it is determined that the predetermined parts sensed by the sensors are the same (YES in S2205), the control unit 2662 operates the first moving mechanism 2022a and/or the second moving mechanism 2022b such that the predetermined part sensed by the first sensor 2023a (first imaging device 2024a) and the predetermined part sensed by the second sensor 2023b (second imaging device 2024b) are different (S2206). As an example, in a case where both the first sensor 2023a (first imaging device 2024a) and the second sensor 2023b (second imaging device 2024b) sense the back of the worker 400, the control unit 2662 operates the first moving mechanism 2022a and the second moving mechanism 2022b such that the first sensor 2023a (first imaging device 2024a) senses the left arm of the worker and the second sensor 2023b (second imaging device 2024b) senses the right arm of the worker. As a result, it is possible to avoid a situation in which a plurality of sensors sense the same predetermined part, and it is possible to efficiently acquire data necessary for learning work.

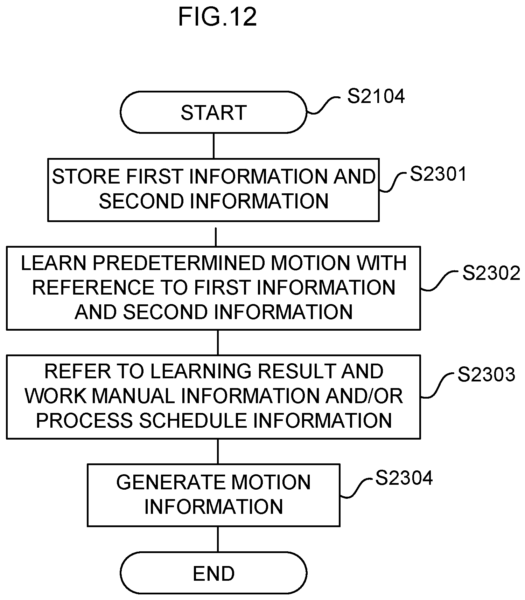

Fig. 12 is an example of a flowchart showing more detailed processing of the motion information generating process shown in step S2104 of Fig. 10.

The first information and the second information are stored in the storage device 1224 and/or the storage medium 2062 (step S2301), and the learning unit 2663 learns the motion of the worker 400 with reference to the first information and the second information stored in the storage device 1224 and/or the storage medium 2062 (step S2302). In learning, motion capture of the motion of the worker 400, a 3D map of the workplace 200, navigation of movement and motion of the worker 400 in the workplace 200, cornering, speed, and the like are analyzed, and the optimal motion of the humanoid robot 2020 capable of functioning as a work robot is learned by automatic learning. As a result, it is possible to analyze the predetermined motion of the worker 400 from multiple aspects at a time, and it is possible to reduce the time required and costs for motion analysis of the worker 400 and programming.

Thereafter, with reference to the result of learning by the learning unit 2663 (step S2303), the motion information generation unit 2664 generates motion information giving a motion instruction to the humanoid robot 2020 functioning as a work robot (step S2304). When generating the motion information, the motion information generation unit 2664 may refer to work manual information of the sensing target and/or process schedule information (S2303). By referring to the generated motion information, the humanoid robot 2020 functioning as a work robot can perform the work (predetermined motion) of worker 400.

### (Operation and Effect of Sensing System According to Embodiment 2)

According to the sensing system 2100 according to the present embodiment, in a case where a predetermined part movable by the worker 400 who is a sensing target during a predetermined motion is not sensed, the first moving mechanism 2022a operates such that the predetermined part is sensed, and thus it is possible to prevent a situation in which the predetermined part is not sensed by the predetermined motion of the worker 400, and it is possible to perform sufficient sensing.

Further, according to the sensing system 2100 according to the present embodiment, while the sensor 2023 (imaging device 2024) is provided in the humanoid robot 2020 that is a mobile robot, the humanoid robot 2020 moves to an appropriate position according to not only a program stored in advance and a machine learning result but also the sensing result. Therefore, as compared with a case where a fixed sensor is disposed in the workplace 200, it is possible to adjust a sufficient sensing environment without causing a situation such as redisposition of sensors or an increase in the number of sensors.

In addition, according to the sensing system 2100 according to the present embodiment, each of a plurality of (two in the present embodiment) mobile robots is provided with a moving mechanism, and in a case where a predetermined part movable by the worker 400 who is a sensing target during a predetermined motion is not sensed, each moving mechanism operates such that the predetermined part is sensed, and thus the predetermined motion of the worker 400 can be sensed from a plurality of different angles.

Furthermore, according to the sensing system 2100 according to the present embodiment, the moving mechanism is operated such that one of a plurality of (two in the present embodiment) sensors 2023 (the imaging devices 2024) senses a part of the predetermined part of the worker 400, and the moving mechanism is operated such that another sensor (the imaging device) senses another part of the predetermined part, and thus the predetermined motion of the worker 400 can be sensed at a plurality of predetermined parts from a plurality of different angles. As a result, a plurality of mobile robots can perform sensing while moving in cooperation, and sufficient sensing can be performed.

According to the sensing system 2100 according to the present embodiment, sensor information (the first information and the second information in the present embodiment) acquired by each sensor is stored, a predetermined motion of the worker 400 is learned with reference to the stored sensor information, and motion information giving a motion instruction to a humanoid robot functioning as a work robot is generated with reference to the learning result, and therefore, motion information reflecting sufficient sensing results is generated. Accordingly, a work robot (humanoid robot 2020) that can perform the work of the worker 400 can efficiently be manufactured.

Furthermore, according to the sensing system 2100 according to the present embodiment, motion information is generated with reference to work manual information and/or process schedule information at the time of generating the motion information. The worker 400 does not always perform a motion faithfully to the work, and may perform useless motion or omit necessary motion in some cases. Therefore, by referring to the work manual information and the process schedule information, it is possible to prevent an unnecessary or inappropriate predetermined motion of the worker 400 from being reflected in the motion information.

### (Modified Example 1 of Embodiment 2)

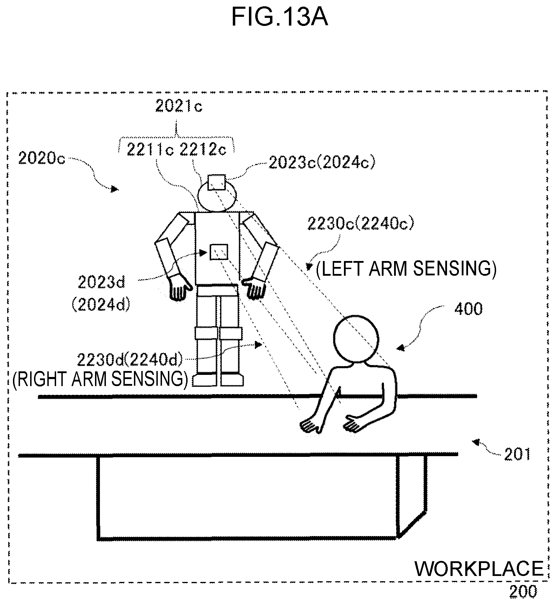

Fig. 13A and Fig. 13B are diagrams showing an example of a sensing system according to modified example 1 of the present embodiment.

Fig. 13A is a diagram showing an example of a system configuration in the sensing system according to modified example 1 of embodiment 2 according to the present disclosure. The present sensing system is characterized in that a humanoid robot 2020c functioning as a mobile robot is provided with a body sensor 2023d (body imaging device 2024d) corresponding to a second sensor. In the present sensing system, the management control device 2060 is not always necessary, and the humanoid robot 2020c can constitute the sensing system alone.

Fig. 13B is a diagram showing an example of the mobile robot shown in Fig. 13A. The humanoid robot 2020c functioning as a mobile robot includes a robot main body 2021c, a robot moving mechanism 2022c, a head sensor 2023c, a head imaging device 2024c included in the head sensor 2023c, the body sensor 2023d, the body imaging device 2024d included in the body sensor 2023d, an information processing device 2025c, and a robot arm.

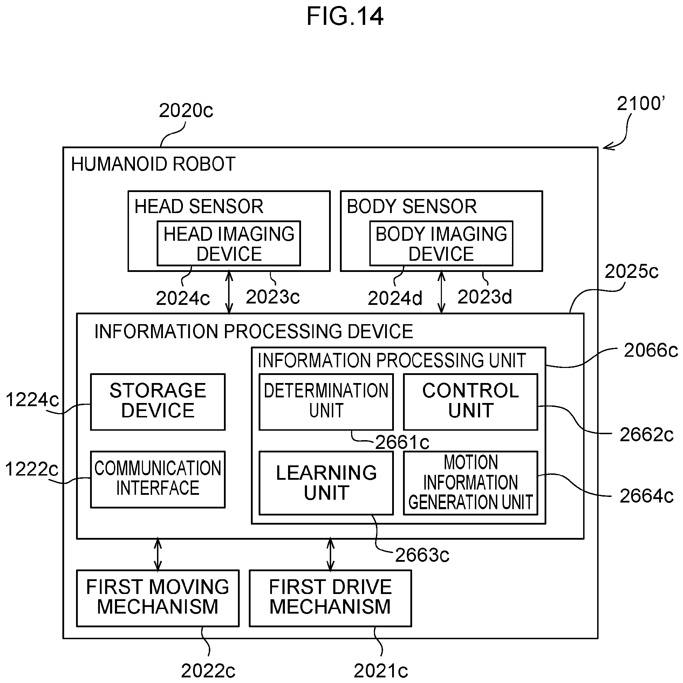

The robot main body 2021c includes a robot body 2211 and a robot head 2212. The robot body 2211 and the robot head 2212 constitute a first drive mechanism 2021c (refer to Fig. 14), and it is possible to change a sensing region 2230c (imaging region 2240c) of the head sensor 2023c (head imaging device 2024c) and a sensing region 2230d (imaging region 2240d) of the body sensor 2023d (body imaging device 2024d). The robot moving mechanism 2022c functions as a first moving mechanism.

The head sensor 2023c (head imaging device 2024c) functions as a first sensor, and the body sensor 2023d (body imaging device 2024d) functions as a second sensor. Since the head sensor 2023c (head imaging device 2024c) and the body sensor 2023d (body imaging device 2024d) are disposed at different height positions, the body sensor 2023d (body imaging device 2024d) functioning as the second sensor senses a predetermined motion of a sensing target at a position different from the head sensor 2023c (head imaging device 2024c).

The configuration of the information processing device 2025c is the same as that of the first information processing device 2025a of the first humanoid robot 2200a. The robot arm is the same as that of the first humanoid robot 2020a.

Fig. 14 is a block diagram showing an example of functions of the mobile robot in the present sensing system. In the sensing system 2100', an information processing device 2025c includes an information processing unit 2066c, a communication interface 1222c, and a storage device 1224c, and the information processing unit 2066c includes a determination unit 2661c, a control unit 2662c, a learning unit 2663c, and a motion information generation unit 2664c. That is, in the sensing system 2100', the information processing unit 2066c performs processing similar to the processing unit 2066 of the management control device 2060. Note that the information processing device 2025c is configured to be able to communicate with the head sensor 2023c (head imaging device 2024c), the body sensor 2023d (head imaging device 2024d), the first moving mechanism 2022c, and the first drive mechanism 2021c.

In the humanoid robot 2020c of the sensing system 2100', since information processing unit 2066c is provided in the information processing device 2025c, the humanoid robot 2020c constitutes the sensing system alone.

Referring to Fig. 13, for example, the control unit 2662c of the humanoid robot 2020c instructs the head sensor 2023c (head imaging device 2024c) functioning as the first sensor to sense the left arm of the worker 400 and instructs the body sensor 2023d (body imaging device 2024d) functioning as the second sensor to sense the right arm of the worker 400. Then, the determination unit 2661c determines whether or not a predetermined part movable by the worker 400 during a predetermined motion is sensed from the sensor information (the first information and the second information) acquired by the sensors, and in a case where it is determined that the predetermined part is not sensed, the control unit 2662c operates the first moving mechanism 2022c and/or the first drive mechanism 2021c such that the predetermined part is sensed.

Furthermore, the determination unit 2661c determines whether or not a predetermined part sensed by the head sensor 2023c (head imaging device 2024c) is the same as a predetermined part sensed by the body sensor 2023d (body imaging device 2024d), and in a case where it is determined that the predetermined parts sensed by the respective sensors (imaging devices) are the same, the control unit 2662c operates the first moving mechanism 2022c and/or the first drive mechanism 2021c such that the predetermined parts sensed by the respective sensors (imaging devices) are different.

### (Operation and Effect of Modified Example 1)

According to the present sensing system, the humanoid robot 2020c can constitute the sensing system alone, and thus sensing can sufficiently be performed even in a place where communication with the management control device 2060 cannot be performed, for example.

Furthermore, since the humanoid robot 2020c includes a plurality of (two in the present modified example) sensors (imaging devices), for example, sensing can be sufficiently performed even in a narrow place for sensing the worker 400.

In the present sensing system, the number of humanoid robots functioning as mobile robots is not necessarily one, but may be plural. In this case, as the number of humanoid robots increases, the number of sensors increases by a multiple of the number of humanoid robots, and a large amount of sensor information can be acquired at a time.

### (Modified Example 2 of Embodiment 2)

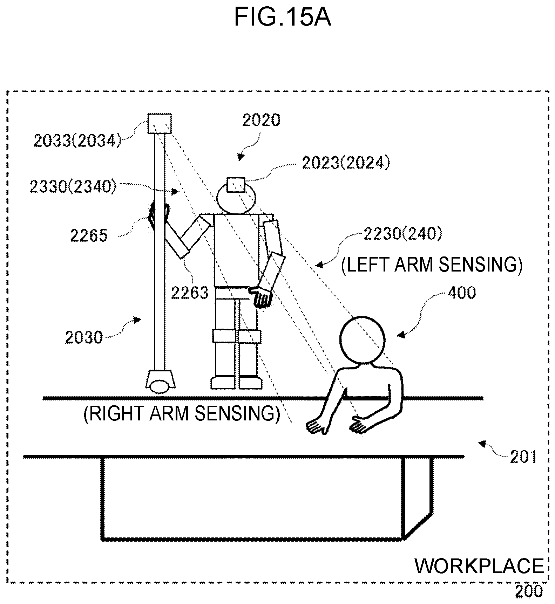

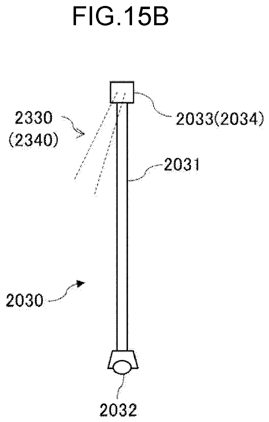

Fig. 15A and Fig. 15B are diagrams showing an example of a sensing system according to modified example 2 of the present embodiment.

Fig. 15A is a diagram showing an example of a system configuration in a sensing system according to modified example 2 of embodiment 2. The present sensing system is characterized by including a sensor mounting member 2030 in addition to the humanoid robot 2020 functioning as a mobile robot.

Fig. 15B is a diagram showing an example of the sensor mounting member shown in Fig. 15A. The sensor mounting member 2030 includes a mounting member main body 2031, a mounting member moving mechanism 2032, a mounting member sensor 2033, and a mounting member imaging device 2034. The sensor mounting member 2030 can be moved by the mounting member moving mechanism 2032 provided below the mounting member main body 2031. However, the mounting member moving mechanism 2032 may not be provided.

The mounting member main body 2031 is, for example, a rod-like or wand-like member, and a material thereof is not particularly limited. The length of the mounting member main body 2031 is greater than the height of the humanoid robot 2020, and is, for example, 2.1 meters. The mounting member moving mechanism 2032 is provided below the mounting member main body 2031, preferably at the lower end thereof, and the mounting member sensor 2033 is provided above the mounting member main body 2031, preferably at the upper end thereof.

The mounting member moving mechanism 2032 includes a rotating body such as a caster, for example, and assists movement of the sensor mounting member 2030 in accordance with movement of the humanoid robot 2020. Although it is not assumed that the sensor mounting member 2030 autonomously moves in the present embodiment, a mounting member control unit (not illustrated) that gives an instruction to the mounting member moving mechanism 2032 may be provided, and the mounting member moving mechanism 2032 may be moved on the basis of a signal from the mounting member control unit.

Referring also to Fig. 15A, the mounting member sensor 2033 (the mounting member imaging device 2034) functioning as the second sensor is provided above the mounting member main body 2031 and senses the worker 400. An example of the mounting member sensor 2033 is similar to the robot sensor 2023, and an example of the mounting member imaging device 2034 is also similar to an example of the robot imaging device 2024. In addition, an example of acquired sensor information is similar to that of the robot sensor 2023, and an example of a sensing timing of sensor information is similar to that of the robot sensor 2023.

The mounting member imaging device 2034 is included in the mounting member sensor 2033. The mounting member sensor 2033 including the mounting member imaging device 2034 is disposed at a position higher than the height of the humanoid robot 2020. As a result, the mounting member sensor 2033 can sense the motion of the worker 400 at a position higher than the robot sensor 2023.

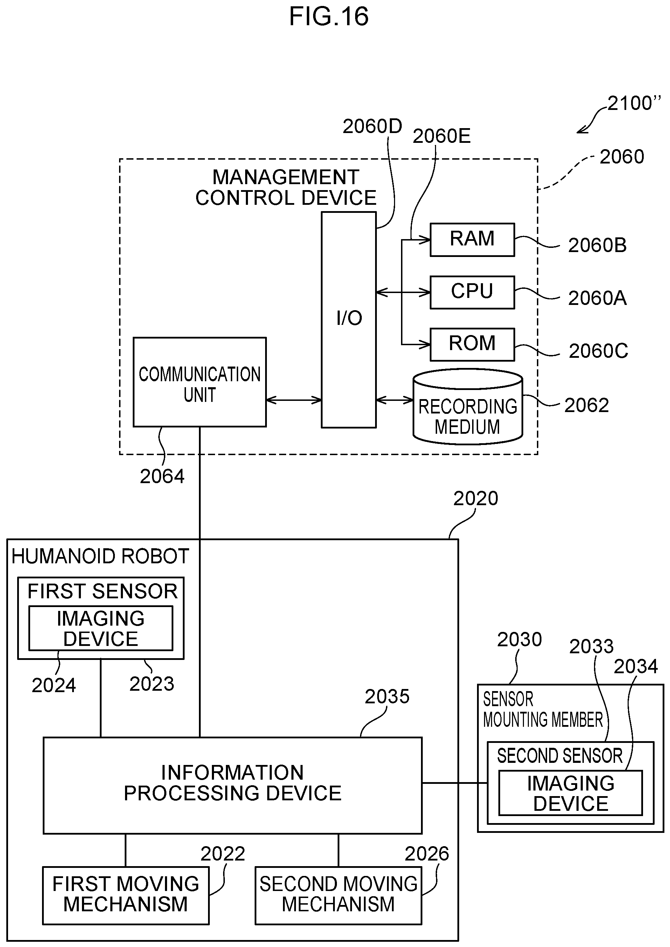

Fig. 16 is a diagram showing an example of a configuration and functions of the sensing system according to modified example 2 of embodiment 2. In the sensing system 2100", the sensor mounting member 2030 is configured to be able to communicate with the information processing device 2025 of the humanoid robot 2020 in a wireless or wired manner. However, the sensor mounting member 2030 may be configured to be able to communicate with the communication unit 2064 of the management control device 2060 instead of or together with the information processing device 2025. Configurations of the humanoid robot 2020 and the management control device 2060 of the sensing system 2100" are similar to those of the sensing system 2100.

Referring also to Fig. 15, the humanoid robot 2020 grips the sensor mounting member 2030 with a right grip portion 2265 (or left grip portion 2266) that is a part of the robot arm 2026 constituting the second drive mechanism. The mounting member sensor 2033 (mounting member imaging device 2034) of the sensor mounting member 2030 can change the sensing region 2330 (imaging region 2340) thereof by the second drive mechanism.

In the sensing system 2100", for example, the control unit 2662 instructs the robot sensor 2023 (robot imaging device 2224) functioning as the first sensor to sense the left arm of the worker 400 and instructs the mounting member sensor 2033 (mounting member imaging device 2034) functioning as the second sensor to sense the right arm of the worker 400. Then, the determination unit 2661 determines whether or not a predetermined part movable by the worker 400 during a predetermined motion is sensed from the sensor information (the first information and the second information) acquired by each sensor, and in a case where it is determined that the predetermined part is not sensed, the control unit 2662 operates the first moving mechanism 2022 and/or the second drive mechanism 2026 such that the predetermined part is sensed. Furthermore, in a case where the determination unit 2661 determines that the predetermined parts sensed by the respective sensors (imaging devices) are the same, the control unit 2662 operates the first moving mechanism 2022 and/or the second drive mechanism 2026 such that the predetermined parts sensed by the respective sensors (imaging devices) are different.

### (Operation and Effect of Modified Example 2)

According to the present sensing system, since the mounting member sensor 2033 (the mounting member imaging device 2034) is configured as the second sensor, for example, sensing can be sufficiently performed even in a narrow place for sensing the worker 400.

Further, according to the present sensing system, in the sensor mounting member 2030, the mounting member sensor 2030 (mounting member imaging device 2040) is disposed at a position higher than the height of the humanoid robot 2020. Therefore, the motion of the worker 400 can be sensed from a more overhead position, and for example, it is easy to avoid a situation in which it is difficult to perform sensing due to the back of the worker 400, and it is possible to efficiently acquire data necessary for learning the work of the worker 400.

In the present sensing system, the number of humanoid robots functioning as mobile robots is not limited to one, and the number of sensor mounting members is not limited to one. For example, a plurality of humanoid robots 2020 each having two sensor mounting members held by both holders 2265 and 2266 may be provided. In this case, the number of sensors can also be increased, and a large amount of sensor information can be acquired at a time.

Although the embodiments of the present disclosure have been described above, the present disclosure is not limited to the above-described embodiments of the present disclosure, and various modifications and applications can be made without departing from the gist of the present disclosure.

The sensing system 2100 of the present embodiment has been described assuming that two mobile robots (humanoid robots) each including a sensor and a moving mechanism are used. However, the number of mobile robots may be equal to or greater than this. For example, when the number of mobile robots including sensors and moving mechanisms is large, a plurality of sensors can be disposed to sense a predetermined motion of the worker 400 from different positions, heights, and/or directions. As a result, various types of data necessary for learning of a predetermined motion of the worker 400 can be easily acquired, and sensing can be performed such that each predetermined part of the worker 400 can be entirely covered.

In the present embodiment, it has been described that the first sensor (first imaging device) senses the left arm of the worker, and the second sensor (second imaging device) senses the left arm of the worker. However, a predetermined part that is a sensing target is not limited thereto, and the predetermined part sensed by each sensor is not limited thereto. For example, the first sensor (first imaging device) may sense a fingertip of the right hand of the worker, and the second sensor (second imaging device) may sense a motion of the neck of the worker.

In addition, in the present embodiment, it has been described that learning of a predetermined motion of the worker is performed by automatic learning. However, learning is not necessarily automatic learning, and may be other known machine learning, for example, deep learning, unsupervised/supervised learning, reinforcement learning, or the like.

In the present embodiment, it has been described that the mobile robot and the work robot are the same humanoid robot. In this case, it is possible to use the mobile robot together with the work robot, and it is possible to save costs related to robot manufacturing. However, the mobile robot and the work robot may be different robots.

In the present embodiment, a worker (person) has been described as a sensing target. However, the present disclosure is not limited thereto, and for example, a robot capable of imitating a predetermined motion of the worker may be used as a sensing target.

### (Embodiment 3)

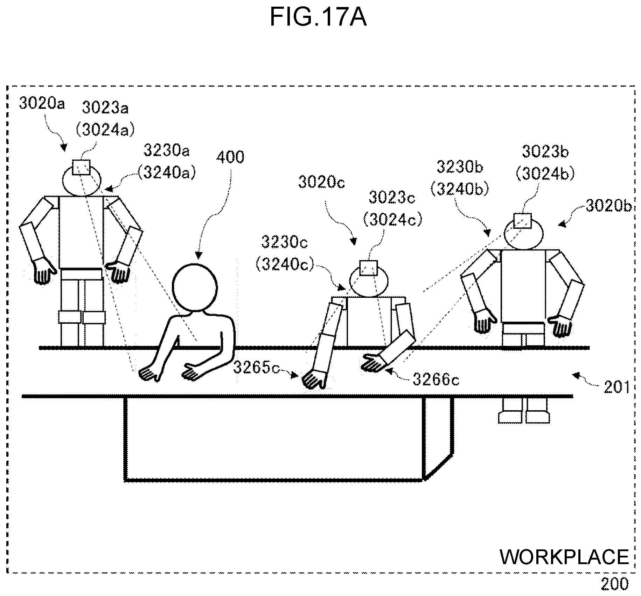

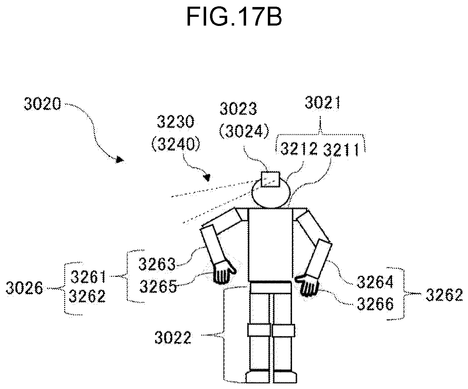

Fig. 17A and Fig. 17B are diagrams for describing a sensing system.

Fig. 17A is a diagram showing an example of a system configuration in a sensing system of embodiment 3 according to the present disclosure. The sensing system includes a first humanoid robot 3020a and a second humanoid robot 3020b functioning as mobile robots, and third humanoid robot 3020c functioning as a work robot. The number of humanoid robots that function as mobile robots and work robots is not limited thereto.

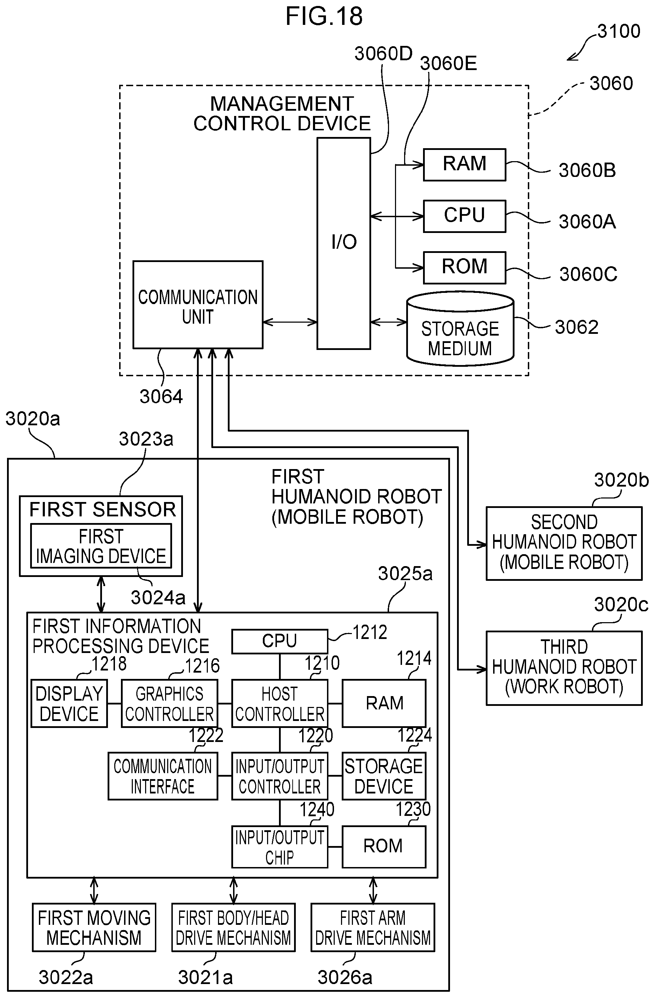

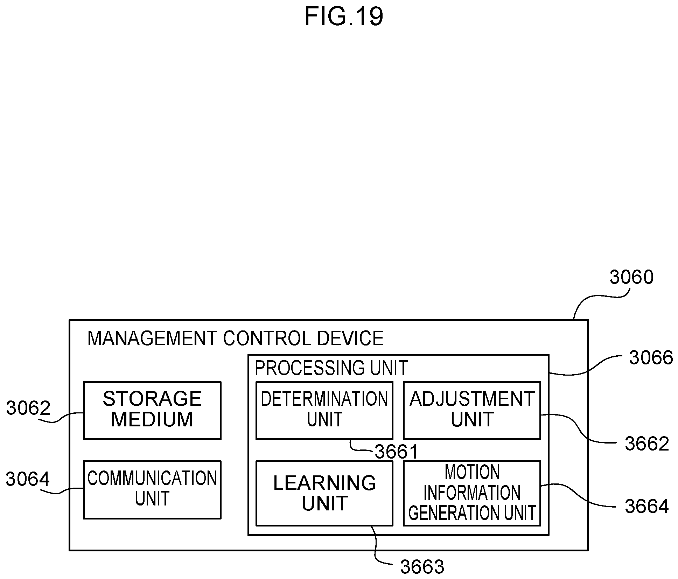

The first humanoid robot 3020a moves to the vicinity of the worker 400 who works on the work line 201 in the workplace 200 in response to an instruction from a management control device 3060 (refer to Fig. 18) which will be described later or an instruction from the first information processing device 3025a (refer to Fig. 18) provided in first humanoid robot 3020a. The sensing system senses a predetermined motion of the worker 400 by a first robot sensor 3023a (first robot imaging device 3024a) provided in the first humanoid robot 3020a. The predetermined motion is diverse, and examples thereof include assembling of parts, movement of parts, painting of products, movement of the worker themselves, and the like. Note that, for sensing the worker 400, a known image recognition technique may be used, or the worker 400 and a predetermined motion thereof may be recognized by learning using a learning unit 2663 (refer to Fig. 19). The same applies to sensing of a work robot which will be described later.

The sensing system learns the predetermined motion of the worker 400 with reference to first information acquired by the first robot sensor 3023a (first robot imaging device 3024a) functioning as the first sensor. The sensing system generates motion control information giving a motion instruction to the third humanoid robot 3020c with reference to the result of learning of the predetermined motion.

The second humanoid robot 3020b moves to the vicinity of the third humanoid robot 3020c that works on the work line 201 in the workplace 200 in response to an instruction from the management control device 3060 or an instruction from a second information processing device provided in the second humanoid robot 3020b. Similarly, the third humanoid robot 3020c moves to the vicinity of the worker 400 in the workplace 200 in response to an instruction from the management control device 3060 or an instruction from a third information processing device provided in the third humanoid robot 3020c.

The sensing system operates the third humanoid robot 3020c with reference to the motion control information. The sensing system senses the robot motion of the third humanoid robot 3020c by the second robot sensor 3023b (second robot imaging device 3024b) provided in the second humanoid robot 3020b. Accordingly, in the sensing system, the robot motion of the third humanoid robot 3020c functioning as the work robot can be checked.

The sensing system compares the first information with the second information acquired by the second robot sensor 3023b (second robot imaging device 3024b) functioning as the second sensor, and adjusts the motion control information such that the robot motion of the third humanoid robot 3020c approximates a predetermined motion. As a result, the robot motion of the third humanoid robot 3020c can be adjusted to an appropriate motion.

Fig. 17B is a diagram showing an example of the humanoid robot 3020 shown in Fig. 17A. The humanoid robot 3020 functioning as a mobile robot and a work robot includes a robot main body 3021, a robot moving mechanism 3022, a robot sensor 3023, a robot imaging device 3024 included in the robot sensor 3023, an information processing device 3025, and a robot arm 3026.

The humanoid robot 3020 can be moved by the robot moving mechanism 3022 provided below the robot main body 3021, and moves to the vicinity of the work line 201 in the workplace 200 in response to an instruction from the outside of the humanoid robot 3020 such as a management control device 3060, for example, or with reference to a program stored in the information processing device 3025.

The robot main body 3021 includes a robot body 3211 and a robot head 3212. The robot body 3211 and the robot head 3212 constitute a body/head drive mechanism, and a sensing region 3230 (imaging region 3240) of the robot sensor 3023 (robot imaging device 3024) can be changed. The configuration of the drive mechanism is not particularly limited, and for example, a servomotor (not illustrated) may rotate the robot head 3212 by a predetermined angle with respect to the robot body 3211 or rotate the robot body 3211 by a predetermined angle with respect to the robot moving mechanism 3022.

The robot moving mechanism 3022 is provided below the robot body 3211, the robot arm 3026 is provided on a side of the robot body 3211, and the robot sensor 3023 is provided on the robot head 3212. Furthermore, the information processing device 3025 is provided inside the robot main body 3021.

The robot moving mechanism 3022 may have any configuration, and may be provided with, for example, a rotating body driven by a motor, or may have a configuration in which a shape of a leg portion is similar to that of a human leg. As an example, in a case where the robot moving mechanism 3022 is configured to resemble the shape of a human leg, a servomotor is provided at a position corresponding to a human joint, and the moving mechanism is configured by rotating the servomotor by a predetermined angle.

The robot sensor 3023 functioning as the first sensor and the second sensor is preferably provided on the robot head 3212, and senses the worker 400 and a work robot. Further, the robot sensor 3023 sequentially acquires information indicating at least a distance and an angle between an object around the humanoid robot 3020 on which the humanoid robot 3020 works and the robot arm 3026. As an example of the robot sensor 3023, cameras with higher performance, thermo cameras, high-pixel/telephoto/ultra-wide angle/360-degree/high-performance cameras, a radar, a solid-state LiDAR, a LiDAR, a multi-color laser coaxial displacement meter, vision recognition, or various other sensors can be adopted. These are also examples of the robot imaging device 3024. Furthermore, other examples of the robot sensor 3023 include a vibratory meter, a hardness meter, a micro vibratory meter, an ultrasonic measuring instrument, a vibration measuring instrument, an infrared measuring instrument, an ultraviolet measuring instrument, an electromagnetic wave measuring instrument, a thermometer, a hygrometer, a spot AI weather forecast, a high-precision multi-channel GPS, low-altitude satellite information, long tail incident AI data, or the like.

Examples of the sensor information acquired from the robot sensor 3023 include an image, a distance, vibration, heat, an odor, a color, a sound, an ultrasonic wave, a radio wave, an ultraviolet ray, an infrared ray, humidity, and the like, and preferably, information on an image and a distance is acquired by the robot imaging device 3024. The robot sensor 3023 (robot imaging device 3024) performs such sensing every nanosecond as an example. Sensor information is used for, for example, motion capture of a motion of the worker 400, a 3D map of the workplace 200, navigation of movement and motion of the worker 400 in the workplace 200, and analysis of cornering, speed, and the like.

The robot arm 3026 includes a right arm 3261 and a left arm 3262. The right arm 3261 includes a right grip support portion 3263 and a right grip portion 3265, and the left arm 3262 includes a left grip support portion 3264 and a left grip portion 3266. The right grip support portion 3263 is a mechanism for supporting the right grip portion 3265, and the left grip support portion 3264 is a mechanism for supporting the left grip portion 3266, and as an example, the right grip support portion and the left grip support portion may be similar in shape to human arms. The grip portions 3265 and 3266 are, for example, mechanisms for gripping parts for work and the like, and may be, for example, similar to the shape of a human hand.

The robot arm 3026 constitutes an arm drive mechanism. The configuration of the drive mechanism is not particularly limited, and for example, in a case where the robot arm 3026 resembles the shape of a person, a configuration may be adopted in which a servomotor is provided at each joint location such as a location corresponding to a shoulder of the person, a location corresponding to an elbow, a location corresponding to a wrist, and a location corresponding to a finger joint, and is rotated by a predetermined angle.

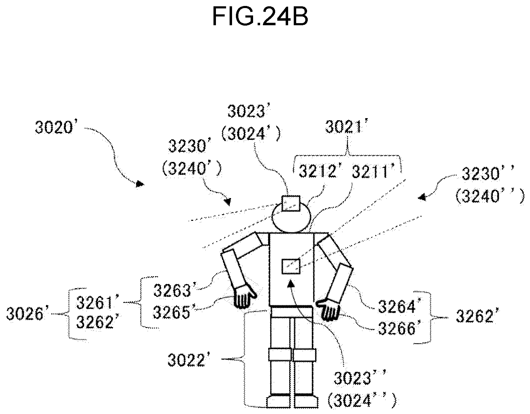

In the humanoid robot 3020, for example, a sensor may be further provided in the robot body 3211 (refer to Fig. 24B). In this case, the sensor is different in height position from the robot sensor 3023 provided on the robot head 3212. Since the height position is different, the sensor can sense the motion of the worker 400 from a different angle.

Fig. 18 is a block diagram showing an example of a configuration and functions of the sensing system 3100 according to the present embodiment.

The sensing system 3100 includes a first humanoid robot 3020a, a second humanoid robot 3020b, a third humanoid robot 3020c, and a management control device 3060. Each of the first humanoid robot 3020a, the second humanoid robot 3020b, and the third humanoid robot 3020c is connected to the communication unit 3064 of the management control device 3060 through wireless or wired communication, receives an instruction from the management control device 3060, and transmits information acquired by each sensor. Note that the humanoid robots 3020a to 3020c may also be connected to each other via wireless or wired communication to transmit and receive information and instructions acquired by the respective sensors.

The first humanoid robot 3020a functioning as a mobile robot includes a first moving mechanism 3022a, a first robot sensor 3023a functioning as the first sensor, a first robot imaging device 3024a included in first robot sensor 3023a, a first information processing device 3025a, a first body/head drive mechanism 3021a, and a first arm drive mechanism 3026a. In the present embodiment, the second humanoid robot 3020b functioning as a mobile robot and the third humanoid robot 3020c functioning as a work robot are also identical in configuration to the first humanoid robot 3020a.

The first information processing device 3025a according to the present embodiment includes a central processing unit (CPU) 1212, a random access memory (RAM) 1214, and a graphics controller 1216, which are mutually connected by a host controller 1210. The first information processing device 3025a also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The first information processing device 3025a also includes a read only memory (ROM) 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the first information processing device 3025a. In addition, the storage device 1224 may store first information and second information. The DVD drive reads a program or data from a DVD-ROM or the like and provides the program or data to the storage device 1224. The IC card drive reads a program and data from an IC card and/or writes a program and data to the IC card.

The ROM 1230 stores therein a boot program and the like executed by the first information processing device 3025a at the time of activation, and/or a program depending on hardware of the first information processing device 3025a. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. Programs are read from a computer-readable storage medium, installed in the storage device 1224, the RAM 1214, or the ROM 1230, which is also an example of a computer-readable storage medium, and executed by the CPU 1212. Information processing described in such programs is read by the first information processing device 3025a, and provides cooperation between the programs and the various types of hardware resources. A device or a method may be configured by realizing operation or processing of information according to use of the first information processing device 3025a.

For example, in a case where communication is executed between the first information processing device 3025a and an external device, the CPU 1212 may execute a communication program loaded in the RAM 1214 and command the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to a network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute, on data read from the RAM 1214, various types of processing including various types of operations, information processing, condition determination, conditional branching, unconditional branching, information retrieval/replacement, and the like, which are described throughout the present disclosure and specified by a command sequence of a program, and write back results to the RAM 1214. In addition, the CPU 1212 may search for information in a file, a database, or the like in a recording medium.

The programs or software module described above may be stored in a computer-readable storage medium on a first information processing device 2305a or near the first information processing device 3025a. Furthermore, a recording medium such as a hard disk or a RAM provided in a server system connected to a dedicated communication network or the Internet can be used as a computer-readable storage medium, thereby providing programs to the first information processing device 3025a via a network.

The above description is also applied to the information processing devices provided in the second humanoid robot 3020b and the third humanoid robot 3020c.

The management control device 3060 is a control device that gives an instruction to the humanoid robots 3020a to 3020c in order to realize the sensing system 3100. In addition, the management control device 3060 acquires sensor information (first information and second information) accumulated in the storage device 1224.

The management control device 3060 includes a CPU 3060A, a RAM 3060B, a ROM 3060C, an input/output unit (I/O) 3060D, a bus 3060E such as a data bus or a control bus connecting these components, and a communication unit 3068. A storage medium 3062 is connected to the I/O 3060D.

In addition, a communication unit 3064 that transmits/receives sensor information, work manual information related to a predetermined motion of the worker 400, process schedule information, and the like to/from the control system of the humanoid robot 3020 is connected to the I/O 3060D. The work manual information includes, for example, a name and a content of each work item, an order of work items, information of a standard work time required for each work item, and the like. In addition, the process schedule information includes, for example, information indicating a work time and a start time/end time of the entire work, information indicating a work time and a start time/end time of each work item, information indicating a worker of each work item, and the like.

Fig. 19 is a block diagram showing an example of functions of the management control device 3060 in the sensing system of the present embodiment.

The management control device 3060 includes a storage medium 3062, a communication unit 3064, and a processing unit 3066.

The storage medium 3062 includes, for example, at least one of a semiconductor storage device, a magnetic tape device, a magnetic disk device, or an optical disk device. The storage medium 3062 stores a driver program, an operating system program, an application program, data, and the like used for processing in the processing unit 3066. For example, the storage medium 3062 stores the first information and the second information. In addition, the storage medium 3062 stores work manual information of the worker 400. The storage medium 3062 may store process schedule information.

The communication unit 3064 includes a wireless communication interface circuit such as Wi-Fi (registered trademark) and/or a wired communication interface circuit such as Ethernet (registered trademark). The communication unit 3064 transmits/receives various types of information to/from the humanoid robots 3020a to 3020c through an interface circuit.

The processing unit 3066 includes one or a plurality of processors and peripheral circuits thereof. The processing unit 3066 integrally controls the overall operation of the sensing system 3100, and is, for example, a CPU. The processing unit 3066 executes processing with reference to programs (a driver program, an operating system program, an application program, etc.) stored in the storage medium 3062. In addition, the processing unit 3066 can execute a plurality of programs (application programs and the like) in parallel.

The processing unit 3066 includes a determination unit 3661, an adjustment unit 3662, a learning unit 3663, and a motion information generation unit 3664. Each of these units is a functional module realized by a program executed by a processor included in the processing unit 3066. Alternatively, these units may be implemented in the processing unit 3066 as firmware.

The determination unit 3661 determines whether there is manual information related to a predetermined motion, and when there is the work manual information, determines whether a result of learning of the predetermined motion contradicts the work manual information.

The adjustment unit 3662 compares the first information with the second information, and adjusts motion control information such that the robot motion of the third humanoid robot 3020c approximates the predetermined motion. Preferably, the adjustment unit 3662 adjusts the motion control information such that the robot motion approximates the predetermined motion in an overlap period. The overlap period is a period in which a first sensing period and a second sensing period overlap. Here, the first sensing period is a period in which the first robot sensor 3023a (first robot imaging device 3024a) functioning as the first sensor senses the worker 400 and acquires the first information. The second sensing period is a period in which the second robot sensor 3023b (second robot imaging device 3024b) functioning as the second sensor senses the robot motion of the third humanoid robot 3020c to acquire the second information. That is, the overlap period is a period in which acquisition of the first information and acquisition of the second information are simultaneously performed.

The learning unit 3663 learns a predetermined motion of the worker 400 with reference to the first information stored in the storage medium 3062 and/or the storage device 1224. This learning is performed, for example, by automatic learning which is learning for automatically creating a trained model or automatically performing determination/analysis using the trained model.

The motion information generation unit 3664 generates motion control information giving a motion instruction to the third humanoid robot 3020c functioning as a work robot with reference to the result of learning of the predetermined motion of the worker 400 by the learning unit 3663. The motion information generation unit 3664 may refer to the work manual information when generating the motion control information. Accordingly, even when the predetermined motion of the worker 400 is inappropriate, the predetermined motion is not reflected, and the third humanoid robot 3020c can be caused to perform an appropriate motion (work).

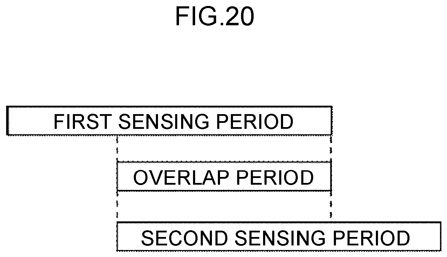

Fig. 20 is a diagram showing an example of each sensing period in the present sensing system 3100. **In** the present sensing system 3100, the first sensor performs sensing and the second sensor performs sensing such that an overlap period occurs. Such sensing is performed in accordance with an instruction from the management control device 3060.

**In** the present sensing system 3100, the robot motion of the third humanoid robot 3020c is started from the middle of sensing a predetermined motion of the worker 400 (that is, the first sensing period), and the adjustment unit 3662 adjusts the motion control information such that the robot motion approximates the predetermined motion of the worker 400 during the middle of sensing the robot motion of the third humanoid robot 3020c (that is, the second sensing period). As a result, the robot motion of the third humanoid robot 3020c that is a work robot can be adjusted on the spot.

### (Processing of Sensing System of Embodiment 3 of Present Disclosure)

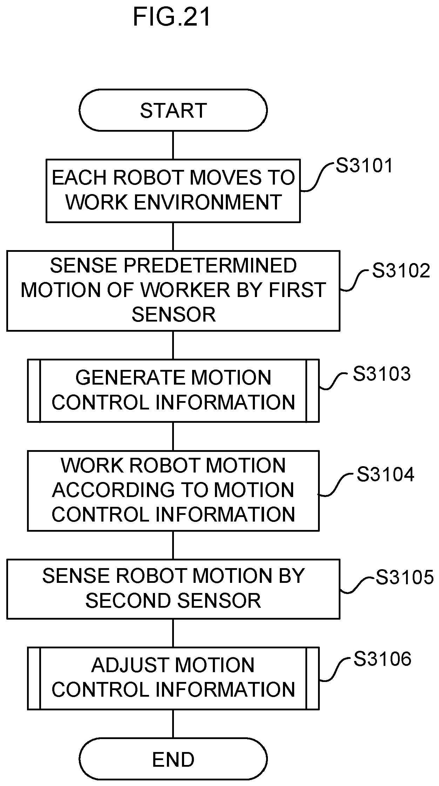

Fig. 21 is an example of a flowchart showing processing of the sensing system of the present embodiment.

First, the information processing device of each humanoid robot 3020 instructs a plurality of (three in the present embodiment) humanoid robots 3020 functioning as a mobile robot and a work robot to move to the workplace 200 according to an instruction of the management control device 3060 or an instruction to read a program stored in the storage medium 3062 or the storage device 1224 (step S3101). The movement is performed by the operation of the robot moving mechanism 3022 of each humanoid robot 3020.

At the time of movement, an instruction is given such that the sensing region 3230a (imaging region 3240a) of the first robot sensor 3023a (first robot imaging device 3024a) included in the first humanoid robot 3020a targets the worker 400, and the sensing region 3230b (imaging region 3240b) of the second robot sensor 3023b (second robot imaging device 3024b) included in the second humanoid robot 3020b targets the third humanoid robot 3020c. Such disposition of the plurality of humanoid robots 3020 is performed, for example, by storing a floor diagram of the workplace 200 in advance in the storage device 1224 and/or the storage medium 3062, and associating the position of each humanoid robot 3020 with the stored floor diagram. Alternatively, disposition of the humanoid robot 3020 may be based on a position optimized through machine learning.

Next, the first robot sensor 3023a (first robot imaging device 3024a) senses a predetermined motion of the worker 400 on the work line 201 (step S3102). **In** the present embodiment, the processing unit 3066 instructs the sensing region 3230a (imaging region 3240a) of the first sensor 3023a (first imaging device 3024a) to target the predetermined motion of the worker 400, and in response to this, the first information processing device 3025a operates the first moving mechanism 3022a and the body/head drive mechanism 3021a of the first humanoid robot 3020a.

The first information acquired by the first robot sensor 3023a (first robot imaging device 3024a) is stored in the storage medium 3062 via the storage device 1224 and/or the communication unit 3064. The storage device 1224 and the storage medium 3062 function as a storage unit.

The management control device 3060 learns the predetermined motion with reference to the first information accumulated, in other words, stored, in the storage unit, and generates motion control information giving a motion instruction to the third humanoid robot 3020c functioning as a work robot with reference to the learning result (step S3103). S3103 is preferably performed in the first sensing period. Accordingly, the sensing system 3100 can operate the third humanoid robot 3020c from a stage in which the worker 400 performs the predetermined motion for work.

The management control device 3060 operates the third humanoid robot 3020c with reference to the motion control information (Step S3104). The third humanoid robot 3020c operates according to the motion instruction given by the motion control information.

The robot motion of the third humanoid robot 3020c is sensed by the second robot sensor 3023b (second robot imaging device 3024b) before and after the robot motion (S3104) of the third humanoid robot 3020c on the basis of the motion control information (step S3105). As a result, the robot motion of the third humanoid robot 3020c can be checked.

In the present embodiment, the processing unit 3066 instructs the sensing region 3230b (imaging region 3240b) of the second robot sensor 3023b (second robot imaging device 3024b) to target the robot motion of the third humanoid robot 3020c, and in response to this, the second information processing device of the second humanoid robot 3020b operates the second moving mechanism and the second body/head drive mechanism of the second humanoid robot 3020b. The second information acquired by the second sensor 3023b (second imaging device 3024b) is stored in the storage unit.

The management control device 3060 adjusts the motion control information such that the robot motion approximates the predetermined motion (step S3106). Preferably, step S3106 is performed in the overlap period. In order to realize this, the management control device 3060 simultaneously performs acquisition of the first information by the first sensor and acquisition of the second information by the second sensor. Accordingly, the sensing system 3100 can adjust the robot motion of the third humanoid robot 3020c to approximate the predetermined motion of the worker 400 from the stage in which the worker 400 is performing the predetermined motion.

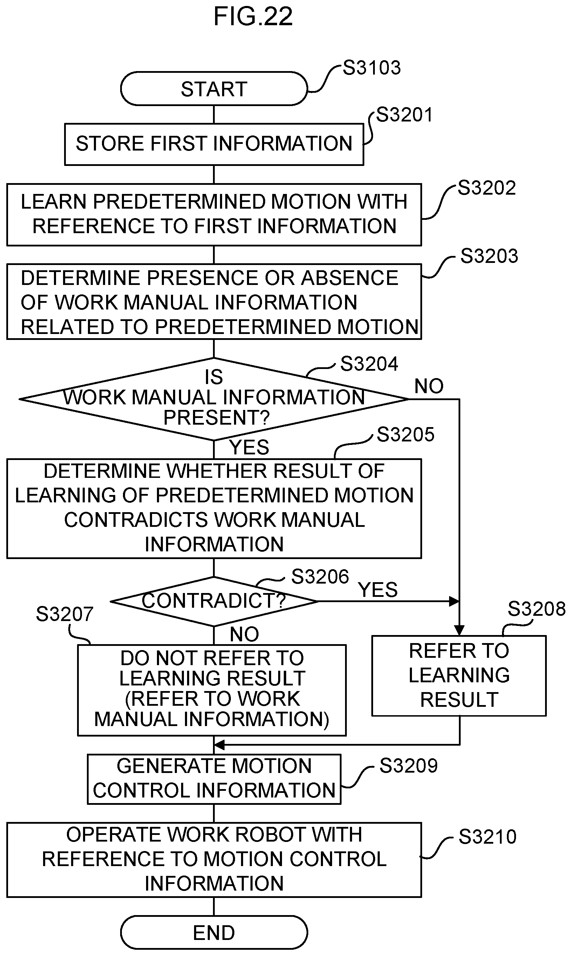

Fig. 22 is an example of a flowchart showing more detailed processing of the motion control information generation processing shown in step S3103 of Fig. 21.

The first information is stored in the storage unit (step S3201), and the learning unit 3663 learns a predetermined motion of the worker 400 with reference to the first information stored in the storage unit (step S3202). In the learning, motion capture of the motion of the worker 400, a 3D map of the workplace 200, navigation of movement and motion of the worker 400 in the workplace 200, cornering, speed, and the like are analyzed, and the optimal motion of the humanoid robot 3020 capable of functioning as a work robot is learned by automatic learning. As a result, it is possible to analyze the predetermined motion of the worker 400 from multiple aspects at a time, and it is possible to reduce the time required and costs for motion analysis of the worker 400 and programming.

Here, the determination unit 3661 determines the presence or absence of manual motion information related to the predetermined motion (steps S3203 and S3204). When the manual motion information related to the predetermined motion is not present (NO in S3204), the motion information generation unit 3664 generates motion control information giving a motion instruction to the third humanoid robot 3020c (step S3209) with reference to the result of learning of the predetermined motion by learning unit 3663 (step S3208). Then, the processing unit 3066 operates the third humanoid robot 3020c with reference to the motion control information (step S3210). Accordingly, the third humanoid robot 3020c can perform the robot motion corresponding to the work (predetermined motion) of the worker 400.

On the other hand, when there is manual motion information related to the predetermined motion (YES in S3204), the determination unit 3661 determines whether the result of learning of the predetermined motion contradicts the work manual information (steps S3205 and S3206). When the determination unit 3661 determines that the result of learning of the predetermined motion contradicts the work manual information (YES in S3206), there is a possibility that the motion of the worker 400 is not suitable for the content of the work item included in the work manual information. Therefore, when it is determined that the result of learning of the predetermined motion contradicts the work manual information, the motion information generation unit 3664 does not adopt the result of learning of the predetermined motion when generating the motion control information (step S3208). In this case, the motion information generation unit 3664 refers to the work manual information (step S3207) and generates motion control information (step S3209). Then, the processing unit 3066 operates the third humanoid robot 3020c with reference to the motion control information (step S3210). As a result, it is possible to prevent an unnecessary or inappropriate predetermined motion by the worker 400 from being reflected in the motion control information and to cause the third humanoid robot 3020c to perform an appropriate motion.

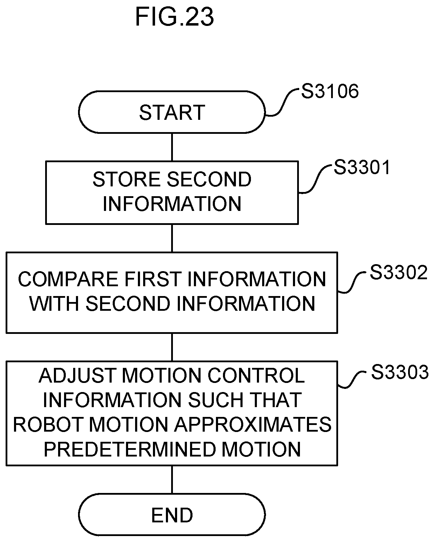

Fig. 23 is an example of a flowchart showing more detailed processing of the motion control information adjustment processing shown in step S3106 of Fig. 21.

The second information is stored in the storage unit (step S3301), and the adjustment unit 3662 compares the first information with the second information (step S3302), and adjusts the motion control information such that the robot motion approximates the predetermined motion (step S3303). That is, the robot motion of the third humanoid robot 3020c is adjusted to approximate the predetermined motion of the worker 400.

### (Operation and Effect of Sensing System According to Embodiment 3)

According to the sensing system 3100 according to the present embodiment, the first information acquired by the first sensor that senses a predetermined motion of the worker 400 is compared with the second information acquired by the second sensor that senses a work robot, and motion control information is adjusted such that the robot motion of the work robot approximates the predetermined motion. This makes it possible to adjust the motion of the work robot to be appropriate while checking the robot motion of the work robot.

As an example, in the case of work in which the worker 400 repeatedly performs the same predetermined motion, first, the worker 400 is caused to perform a first predetermined motion, and the sensing system 3100 acquires the first information. Then, while the worker 400 performs a second predetermined motion, the sensing system 3100 generates motion control information to operate the work robot. Since the worker 400 performs the second predetermined motion even during this process, the sensing system 3100 generates motion control information on the basis of the first information obtained by the second predetermined motion, and adjusts the motion control information such that the robot motion of the work robot approximates the predetermined motion of the worker 400. By repeating this, the sensing system 3100 can adjust the robot motion of the work robot such that the robot motion approximates the predetermined motion of the worker 400.

In addition, according to the sensing system 3100 according to the present embodiment, since the management control device 3060 simultaneously performs acquisition of the first information and acquisition of the second information, it is possible to provide a system capable of adjusting the motion of the work robot on the spot while collating predetermined motions of the work robot and the worker 400.

Furthermore, according to the sensing system 3100 according to the present embodiment, the motion control information is generated with reference to the work manual information at the time of generating the motion control information. The worker 400 does not always perform a motion faithfully to the work, and may perform useless motion or omit necessary motion in some cases. Therefore, by referring to the work manual information, appropriate motion information can be reflected in the motion control information, and the work robot can be adjusted to operate more appropriately.

Furthermore, according to the sensing system 3100 according to the present embodiment, the result of learning of a predetermined motion by the learning unit 3663, which contradicts the work manual information, is not adopted at the time of generating the motion control information. As a result, it is possible to prevent an unnecessary or inappropriate predetermined motion by the worker 400 from being reflected in the motion control information.

### (Modified Example 1 of Embodiment 3)

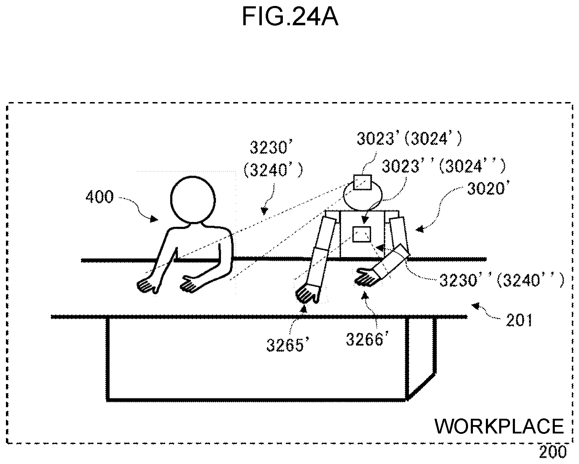

Fig. 24A and Fig. 24B are diagrams showing an example of a sensing system according to modified example 1 of the present embodiment.

Fig. 24 is a diagram showing an example of a system configuration in the sensing system according to modified example 1 of embodiment 3 according to the present disclosure. The present sensing system is characterized in that, in a humanoid robot 3020' functioning as a work robot, a head sensor 3023' (head imaging device 3024") functions as a first sensor, and a body sensor 3023" (body imaging device 3024") functioning as a second sensor is provided in the humanoid robot 3020'. **In** the sensing system, the management control device 3060 is not always necessary, and the humanoid robot 3020' can constitute the sensing system alone.

Fig. 24B is a diagram showing an example of a work robot shown in Fig. 24A. The humanoid robot 3020' functioning as a work robot has the same configuration as the first humanoid robot 3020a except for including the body sensor 3023" (body imaging device 3024"). Specifically, the humanoid robot 3020' includes a robot main body 3021', a robot moving mechanism 3022', a head sensor 3023', a head imaging device 3024' included in the head sensor 3023', a body sensor 3023", a body imaging device 3024" included in body sensor 3023", an information processing device 3025', and a robot arm 3026'.

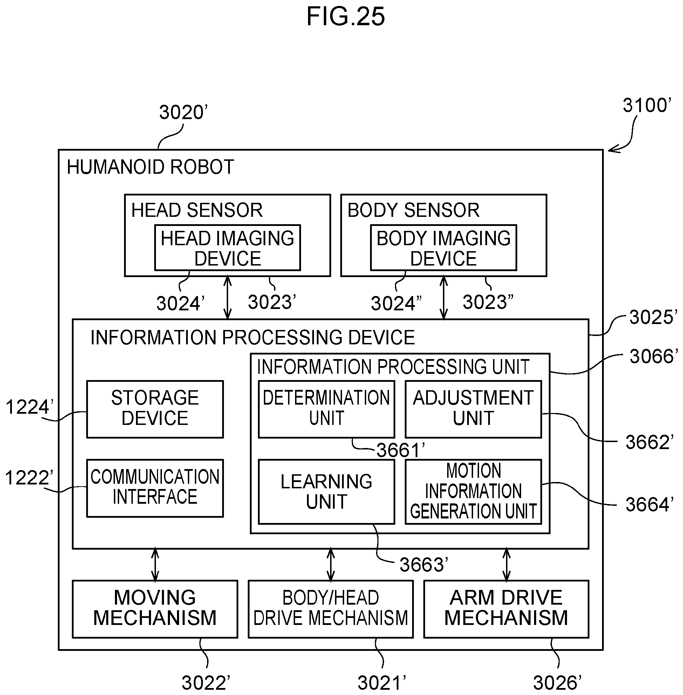

The robot main body 3021' includes a robot body 3211' and a robot head 3212'. The robot body 3211' and the robot head 3212' constitute a body/head drive mechanism 3021' (refer to Fig. 25), and a sensing region 3230' (imaging region 3240') of the head sensor 3023' (head imaging device 3024') and a sensing region 3230" (imaging region 3240") of the body sensor 3023" (body imaging device 3024") can be changed.

The head sensor 3023' (head imaging device 3024') functions as a first sensor, and the body sensor 3023" (body imaging device 3024") functions as a second sensor. The body sensor 3023" (body imaging device 3024") senses a motion of the robot arm 3026' as a robot motion, for example. Since the head sensor 3023' (head imaging device 3024') and the body sensor 3023" (body imaging device 3024") are disposed at different height positions, the body sensor 3023" (body imaging device 3024") functioning as the second sensor senses a predetermined motion of the sensing target at a position different from the head sensor 3023' (head imaging device 3024'). Note that the roles of the head sensor 3023' (head imaging device 3024') and the body sensor 3023" (body imaging device 3024") may be reversed.

Fig. 25 is a block diagram showing an example of functions of the work robot in the present sensing system 3100'. **In** the sensing system 3100', the information processing device 3025' includes an information processing unit 3066', a communication interface 1222', and a storage device 1224', and the information processing unit 3066' includes a determination unit 3661', an adjustment unit 3662', a learning unit 3663', and a motion information generation unit 3664'. That is, in the sensing system 3100', the information processing unit 3066' performs processing similar to the processing unit 3066 of the management control device 3060. Note that the information processing device 3025' is configured to be able to communicate with the head sensor 3023' (head imaging device 3024'), the body sensor 3023" (head imaging device 3024"), the first moving mechanism 3022', the head/body drive mechanism 3021', and the arm drive mechanism 3026'.

The humanoid robot 3020' of the sensing system 3100' includes the information processing unit 3066' in the information processing device 3025', and thus the humanoid robot 3020' constitutes the sensing system alone.

Referring to Fig. 24, for example, the adjustment unit 3662' of the humanoid robot 3020' instructs the head sensor 3023' (head imaging device 3024') functioning as the first sensor to sense a predetermined motion of the worker 400, and instructs the body sensor 3023" (body imaging device 3024") functioning as the second sensor to sense the arm 3026' of the humanoid robot 3020'. Then, motion control information is generated from sensor information (first information and second information) acquired by each sensor through learning of the learning unit 3663', and the adjustment unit 3662' compares the first information with the second information and adjusts the motion control information such that the robot motion of the humanoid robot 3020' approximates the predetermined motion of the worker 400.

### (Operation and Effect of Modified Example 1)

According to the present sensing system, the humanoid robot 3020' can constitute the sensing system alone, and thus the robot motion can be adjusted to an appropriate motion while the robot motion of the work robot is checked even in a place where communication with the management control device 3060 cannot be performed, for example.

Furthermore, since the humanoid robot 3020' includes a plurality of (two in the present modified example) sensors (imaging devices), for example, even in a narrow place for sensing the worker 400, it is possible to adjust the robot motion of the work robot to an appropriate motion while checking the robot motion.

In the present sensing system, the number of humanoid robots functioning as work robots is not necessarily one, but may be plural. In this case, as the number of humanoid robots increases, the number of humanoid robots that perform work increases, and a large number of works can be simultaneously processed in parallel at one time.

### (Modified Example 2 of Embodiment 3)

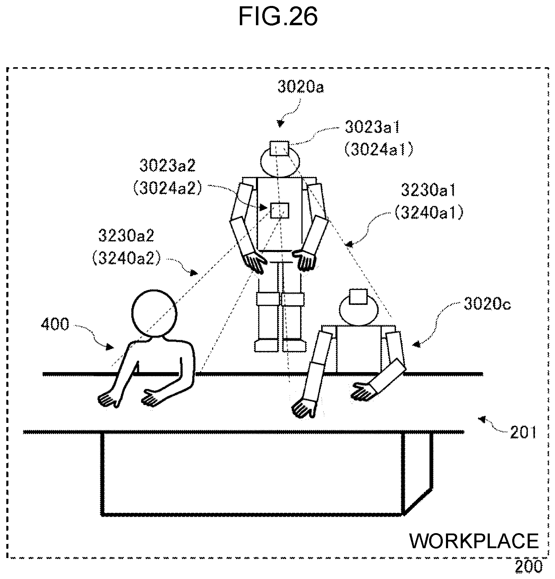

Fig. 26 is a diagram showing an example of a system configuration in a sensing system according to modified example 2 of the present embodiment.

The present sensing system is characterized in that the first humanoid robot 3020a having the same function as the humanoid robot 3020' described in modified example 1 senses the worker 400 and the third humanoid robot 3020c functioning as a work robot. Specifically, an instruction is given such that a sensing region 3230a1 (imaging region 3240a1) of a head sensor 3023a1 (head imaging device 3024a1) of the first humanoid robot 3020a targets the third humanoid robot 3020c, and a sensing region 3230a2 (imaging region 3240a2) of a body sensor 3023a2 (body imaging device 3024a2) of the first humanoid robot 3020a targets the worker 400. In the present sensing system, the management control device 3060 is not necessarily required as long as the first humanoid robot 3020a and the third humanoid robot 3020c are configured to communicate with each other. Furthermore, each sensing region of the head sensor 3023a1 (head imaging device 3024a1) and the body sensor 3023a2 (body imaging device 3024a2) may have a configuration opposite to the above.

In the present sensing system, since the entire third humanoid robot 3020c can be sensed, the robot motion of the third humanoid robot 3020c can be more easily checked and appropriately controlled as compared with modified example 1.

Modified example 1 also has an advantage that the sensing system can be configured more easily than modified example 2 when there is no space in which the first humanoid robot 3020a is disposed. Further, modified example 1 is also advantageous than modified example 2 in that it is not necessary to provide a communication configuration between the first humanoid robot 3020a and the third humanoid robot 3020c, and the humanoid robot can be integrally omitted.

### (Modified Example 3 of Embodiment 3)

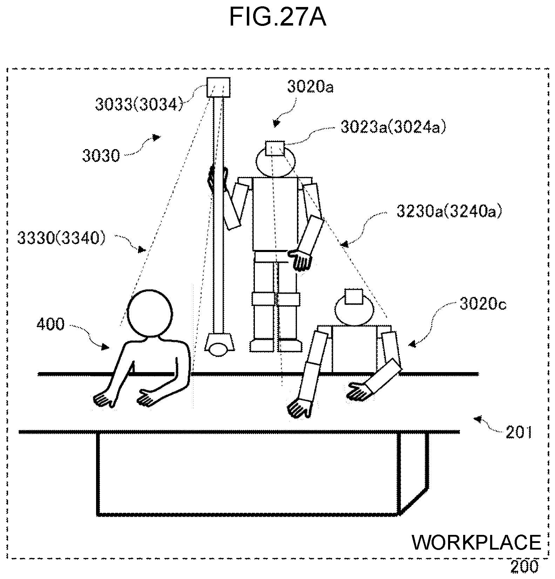

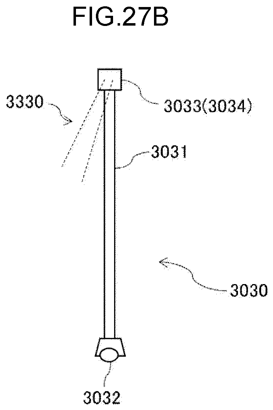

Fig. 27A and Fig. 27B are diagrams showing an example of a sensing system according to modified example 3 of the present embodiment.

Fig. 27A is a diagram showing an example of a system configuration in the sensing system according to modified example 3 of embodiment 3. The present sensing system is characterized in that the first humanoid robot 3020a functioning as a mobile robot grips a sensor mounting member 3030.

Fig. 27B is a diagram showing an example of the sensor mounting member shown in Fig. 27A. The sensor mounting member 3030 includes a mounting member main body 3031, a mounting member moving mechanism 3032, a mounting member sensor 3033, and a mounting member imaging device 3034. The sensor mounting member 3030 can be moved by the mounting member moving mechanism 3032 provided below the mounting member main body 3031. However, the mounting member moving mechanism 3032 may not be provided.

The mounting member main body 3031 is, for example, a rod-like or wand-like member, and a material thereof is not particularly limited. The length of the mounting member main body 3031 is greater than the height of the humanoid robot 3020, and is, for example, 2.1 meters. The mounting member moving mechanism 3032 is provided below the mounting member main body 3031, preferably at the lower end thereof, and the mounting member sensor 3033 is provided above the mounting member main body 3031, preferably at the upper end thereof.

The mounting member moving mechanism 3032 includes a rotating body such as a caster, for example, and assists movement of the sensor mounting member 3030 in accordance with movement of the humanoid robot 3020. Although it is not assumed that the sensor mounting member 3030 autonomously moves in the present embodiment, a mounting member control unit (not illustrated) that gives an instruction to the mounting member moving mechanism 3032 may be provided, and the mounting member moving mechanism 3032 may be moved on the basis of a signal from the mounting member control unit.

Referring also to Fig. 27A, the mounting member sensor 3033 (the mounting member imaging device 3034) functioning as a first sensor is provided above the mounting member main body 3031 and senses the worker 400. An example of the mounting member sensor 3033 is similar to the robot sensor 3023, and an example of the mounting member imaging device 3034 is also similar to an example of the robot imaging device 3024. **In** addition, an example of acquired sensor information is similar to that of the robot sensor 3023, and an example of a sensing timing of the sensor information is similar to that of the robot sensor 3023.

The mounting member imaging device 3034 is included in the mounting member sensor 3033. The mounting member sensor 3033 including the mounting member imaging device 3034 is disposed at a position higher than the height of the humanoid robot 3020. As a result, the mounting member sensor 3033 can sense the motion of the worker 400 at a position higher than the robot sensor 3023.

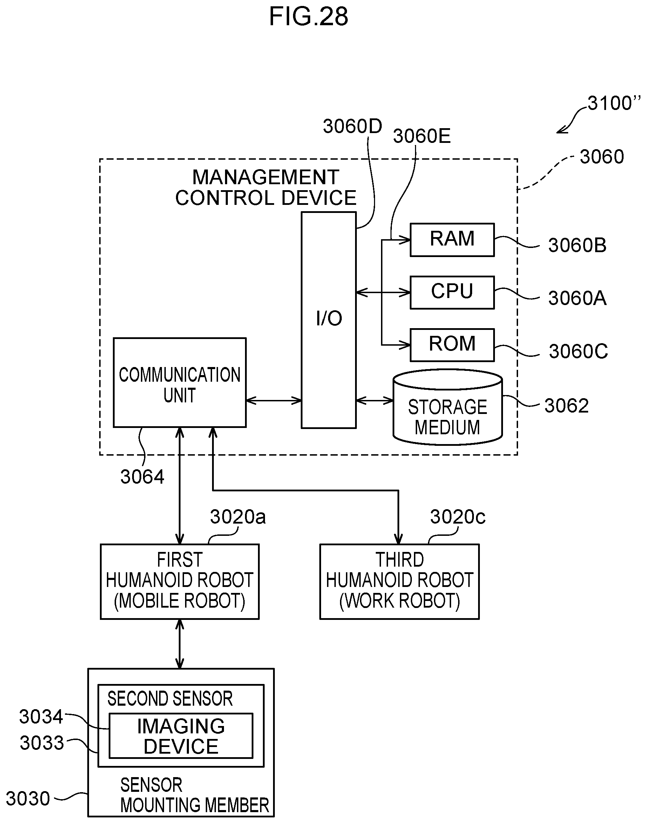

Fig. 28 is a diagram showing an example of a configuration and functions of the sensing system according to modified example 3 of embodiment 3. **In** the sensing system 3100", the sensor mounting member 3030 is configured to be able to communicate with the first information processing device of the first humanoid robot 3020a in a wireless or wired manner. However, the sensor mounting member 3030 may be configured to be able to communicate with the communication unit 3064 of the management control device 3060 instead of or together with the first information processing device. Configurations of the first humanoid robot 3020a, the third humanoid robot 3020c functioning as a work robot, and the management control device 3060 of the sensing system 3100" are similar to those of the sensing system 3100.

Referring also to Fig. 27, the first humanoid robot 3020a grips the sensor mounting member 3030 with a right grip portion (or a left grip portion) that is a part of the robot arm constituting an arm drive mechanism. The mounting member sensor 3033 (mounting member imaging device 3034) of the sensor mounting member 3030 can change the sensing region 3330 (imaging region 3340) thereof by the arm drive mechanism.

**In** the sensing system 3100", for example, the processing unit of the management control device 3060 instructs the mounting member sensor 3033 (mounting member imaging device 3034) functioning as the first sensor to sense the worker 400, and instructs the first robot sensor 3023a (the first robot imaging device 3024a) functioning as the second sensor to sense the third humanoid robot 3020c. Then, motion control information is generated from sensor information (first information and second information) acquired by each sensor through learning by the learning unit of the management control device 3060, and the adjustment unit of the management control device 3060 compares the first information with the second information, and adjusts the motion control information such that the robot motion of the third humanoid robot 3020c approximates the predetermined motion of the worker 400. Note that the roles (functions as the first sensor and the second sensor) of the mounting member sensor 3033 (mounting member imaging device 3034) and the first robot sensor 3023a (first robot imaging device 3024a) may be reversed. That is, a configuration in which the first robot sensor 3023a (first robot imaging device 3024a) is instructed to sense the worker 400 and the mounting member sensor 3033 (mounting member imaging device 3034) is instructed to sense the third humanoid robot 3020c may be adopted.

### (Operation and Effect of Modified Example 3)

According to the present sensing system, since the mounting member sensor 3033 (mounting member imaging device 3034) is configured as the second sensor, for example, at the time of sensing the worker 400, even in a narrow place for installing a plurality of humanoid robots functioning as mobile robots, it is possible to appropriately perform control while checking the motion of the work robot.

Further, according to the present sensing system, in the sensor mounting member 3030, the mounting member sensor 3030 (mounting member imaging device 3040) is disposed at a position higher than the height of the humanoid robot 3020. Therefore, the motion of the worker 400 (or the work robot) can be sensed at a more overhead position, and it is easy to avoid a situation in which it is difficult to perform sensing due to the back of the worker 400 or the work robot, for example, and it is possible to efficiently acquire data necessary for learning the work of the worker 400 or the work robot.

**In** the present sensing system, the number of humanoid robots functioning as mobile robots is not limited to one, and the number of sensor mounting members is not limited to one. For example, a plurality of humanoid robots 3020 each having two sensor mounting members held by both holders 3265 and 3266 may be provided. **In** this case, the number of sensors can also be increased, and a large amount of sensor information can be acquired at a time. The number of humanoid robots functioning as work robots is not limited to one.

Although the embodiments of the present disclosure have been described above, the present disclosure is not limited to the above-described embodiments of the present disclosure, and various modifications and applications can be made without departing from the gist of the present disclosure.

**In** the sensing system 3100 of the present embodiment, a configuration in which two mobile robots (humanoid robots) each including a sensor and a moving mechanism and one work robot (humanoid robot) are used, and one mobile robot is disposed for one worker 400 and one work robot has been described. However, the relationship between the mobile robot and the worker 400 and the work robot is not limited thereto. For example, when the number of mobile robots including sensors and moving mechanisms is large, a plurality of sensors can be disposed to sense a predetermined motion of the worker 400 and a robot motion of the work robot from different positions, heights, and/or directions. As a result, various types of data necessary for learning a predetermined motion of the worker 400 and the robot motion of the work robot can be easily acquired, and sensing can be performed such that each motion of the worker 400 and the work robot can be entirely covered.

**In** the present embodiment, it has been described that the management control device 3060 simultaneously acquires the first information and the second information. However, the management control device 3060 may separately acquire the first information and the second information. **In** other words, the first sensing period in which the first information is acquired by sensing the worker 400 and the second sensing period in which the second information is acquired by sensing the robot motion of the third humanoid robot 3020c may not overlap. As a result, it is not necessary to operate the work robot simultaneously in parallel with the worker 400, and it is possible to flexibly adjust the robot motion in accordance with the predetermined motion of the worker 400.

**In** addition, in the present embodiment, it has been described that learning of a predetermined motion of the worker is performed by automatic learning. However, learning is not necessarily automatic learning, and may be other known machine learning, for example, deep learning, unsupervised/supervised learning, reinforcement learning, or the like.

**In** the present embodiment, it has been described that the mobile robot and the work robot are the same humanoid robot. **In** this case, it is possible to use the mobile robot together with the work robot, and it is possible to save costs related to robot manufacturing. However, the mobile robot and the work robot may be different robots.

**In** the present embodiment, a worker (person) has been described as a sensing target. However, the present disclosure is not limited thereto, and for example, a robot capable of imitating a predetermined motion of the worker may be used as a sensing target.

**In** the present embodiment, it has been described that the work robot is operated in the same workplace 200 as the worker 400 and near the worker 400. However, the work robot may not be disposed near the worker, or may not be disposed in the same workplace as the worker.

### (Embodiment 4)

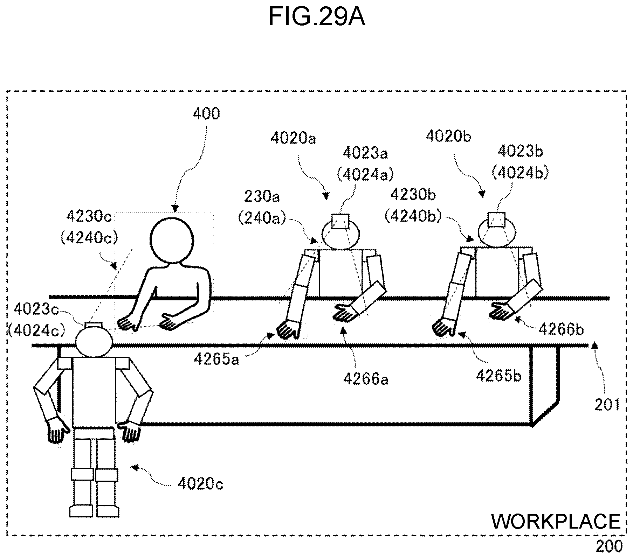

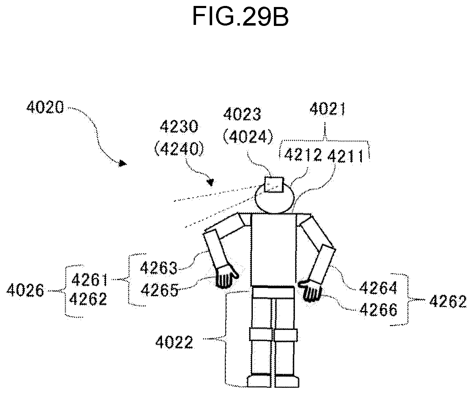

Fig. 29A and Fig. 29B are diagrams for describing a motion modification system.

Fig. 29A is a diagram showing an example of a system configuration in the motion modification system of embodiment 4 according to the present disclosure. The motion modification system includes a first humanoid robot 4020a and a second humanoid robot 4020b functioning as work robots, and a third humanoid robot 4020c functioning as a mobile robot. The number of humanoid robots is not limited thereto.

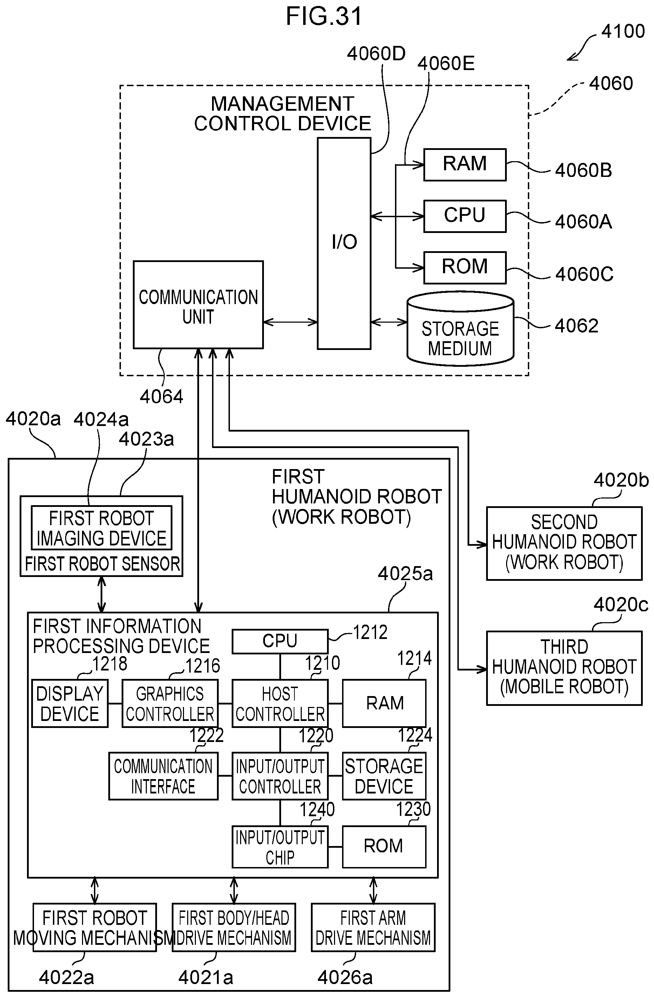

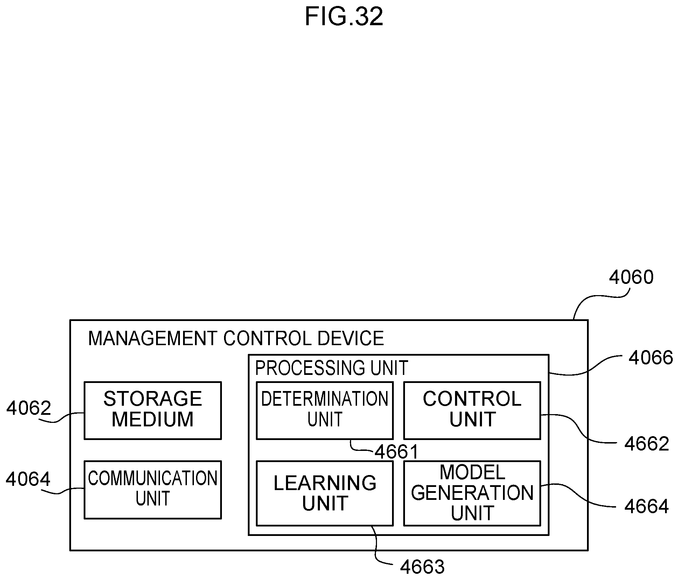

The humanoid robots 4020a to 4020c move to the vicinity of the worker 400 who works on the work line 201 of the workplace 200 in response to an instruction from a management control device 4060 (refer to Fig. 31) which will be described later or an instruction from information processing devices provided in the humanoid robots 4020a to 4020c. **In** the present motion modification system, a third robot sensor 4023c (third robot imaging device 4024c) provided in the third humanoid robot 4020c senses a predetermined motion of the worker 400. The predetermined motion is diverse, and examples thereof include assembling of parts, movement of parts, painting of products, movement of the worker themselves, and the like. Note that, for sensing of the worker 400, a known image recognition technique may be used, or the worker 400 and a predetermined motion thereof may be recognized by learning using a learning unit 4663 (refer to Fig. 32).

The present motion modification system learns a standard motion model corresponding to a predetermined motion of the worker 400 on the basis of sensing information corresponding to the predetermined motion of the worker 400 acquired using the third robot sensor 4023c (third robot imaging device 4024c). The standard motion model is a model representing the content of a work item of the worker 400, in other words, a set of motions designated in the work item. Then, the present motion modification system generates a modified motion model in which the execution time of each motion in the standard motion model is set to be shorter than a required time of each motion at the time of generating the standard motion model with reference to the standard motion model.

The present motion modification system operates the first humanoid robot 4020a and the second humanoid robot 4020b functioning as work robots according to an instruction from the management control device 4060 or an instruction from the information processing devices provided in the humanoid robots. At this time, the present motion modification system refers to the modified motion model.

The present motion modification system can improve the work efficiency of each humanoid robot by operating the first humanoid robot 4020a and the second humanoid robot 4020b with reference to the modified motion model in which the execution time of each motion is set short. As an example, in a case where there are 6 workers in one work line 201 of the workplace 200, and 100 products are originally completed per hour, 6 humanoid robots are disposed in the line 201, and the humanoid robots are operated at a speed 10 times that of the standard motion model. **In** other words, the present motion modification system operates each humanoid robot with reference to the motion modification model set such that motion is performed in 1/10 execution time of the motion in the standard motion model. This makes it possible to complete 1000 products per hour.

**In** the present motion modification system, the first humanoid robot 4020a and the second humanoid robot 4020b functioning as work robots may sense robot motions thereof using a first robot sensor 4023a (first robot imaging device 4024a) and a second robot sensor 4023b (second robot imaging device 4024b) provided in the respective robots.

As an example, the first humanoid robot 4020a operates a first body/head drive mechanism 4021a (refer to Fig. 31) such that the sensing region 4230a (imaging region 4240a) of the first robot sensor 4023a (first robot imaging device 4024a) targets first grip portions 4265a and 4266a of the first humanoid robot 4020a in response to an instruction from the management control device 4060 or an instruction from the first information processing device 4025a. Similarly, the second humanoid robot 4020b operates a second body/head drive mechanism such that the sensing region 4230b (imaging region 4240b) of the second robot sensor 4023b (second robot imaging device 4024b) targets second grip portions 4265b and 4266b of the second humanoid robot 4020b. As a result, it is possible to confirm whether or not the robot motion of each humanoid robot is a robot motion with reference to the modified motion model.

Fig. 29B is a diagram showing an example of the humanoid robot shown in Fig. 29A. The humanoid robot 4020 functioning as a work robot and a mobile robot includes a robot main body 4021, a robot moving mechanism 4022, a robot sensor 4023, a robot imaging device 4024 included in the robot sensor 4023, an information processing device 4025, and a robot arm 4026.

The humanoid robot 4020 can be moved by the robot moving mechanism 4022 provided below the robot main body 4021, and moves to the vicinity of the work line 201 in the workplace 200 in response to an instruction from the outside of the humanoid robot 4020 such as the management control device 4060, or with reference to a program stored in the information processing device 4025.

The robot main body 4021 includes a robot body 4211 and a robot head 4212. The robot body 4211 and the robot head 4212 constitute a body/head drive mechanism, and the sensing region 4230 (imaging region 4240) of the robot sensor 4023 (robot imaging device 4024) can be changed. The configuration of the drive mechanism is not particularly limited, and for example, a servo motor (not illustrated) may rotate the robot head 4212 by a predetermined angle with respect to the robot body 4211 or rotate the robot body 4211 by a predetermined angle with respect to the robot moving mechanism 4022.

The robot moving mechanism 4022 is provided below the robot body 4211, the robot arm 4026 is provided on a side of the robot body 4211, and the robot sensor 4023 is provided on the robot head 4212. Furthermore, the information processing device 4025 is provided inside the robot main body 4021.

The robot moving mechanism 4022 may have any configuration, and may be provided with, for example, a rotating body driven by a motor, or may have a configuration in which a shape of a leg portion is similar to that of a human leg. As an example, in a case where the robot moving mechanism 4022 is configured to resemble the shape of a human leg, a servo motor is provided at a location corresponding to a human joint, and the moving mechanism is configured by rotating the servo motor by a predetermined angle.

The robot sensor 4023 is preferably provided on the robot head 4212, and senses the worker 400, another work robot, or a robot motion of another humanoid robot 4020, preferably a robot motion of the robot arm 4026, and more preferably a robot motion of grip portions 4255 and 4256. Further, the robot sensor 4023 sequentially acquires information indicating at least a distance and an angle between an object around the humanoid robot 4020 on which the humanoid robot 4020 works and the robot arm 4026. As an example of the robot sensor 4023, cameras with higher performance, thermo cameras, high-pixel/telephoto/ultra-wide angle/360-degree/high-performance cameras, a radar, a solid-state LiDAR, a LiDAR, a multi-color laser coaxial displacement meter, vision recognition, or various other sensors can be adopted. These are also examples of the robot imaging device 4024. Furthermore, other examples of the robot sensor 4023 include a vibratory meter, a hardness meter, a micro vibratory meter, an ultrasonic measuring device, a vibration measuring device, an infrared measuring device, an ultraviolet measuring device, an electromagnetic wave measuring device, a thermometer, a hygrometer, a spot AI weather forecast, a high-precision multi-channel GPS, low-altitude satellite information, long tail incident AI data, and the like.

Examples of sensing information acquired from the robot sensor 4023 include an image, a distance, vibration, heat, an odor, a color, a sound, an ultrasonic wave, a radio wave, an ultraviolet ray, an infrared ray, humidity, and the like, and preferably, information on an image and a distance is acquired by the robot imaging device 4024. The robot sensor 4023 (robot imaging device 4024) performs such sensing every nanosecond as an example. The sensing information is used, for example, for analysis of motion capture of the motion of the worker 400, a 3D map of the workplace 200, navigation of movement and motion of the worker 400 in the workplace 200, cornering, speed, and the like.

The robot arm 4026 includes a right arm 4261 and a left arm 4262. The right arm 4261 includes a right grip support portion 4263 and a right grip portion 4265, and the left arm 4262 includes a left grip support portion 4264 and a left grip portion 4266. The right grip support portion 4263 is a mechanism for supporting the right grip portion 4265, and the left grip support portion 4264 is a mechanism for supporting the left grip portion 4266, and as an example, the right grip support portion and the left grip support portion may be similar in shape to human arms. The grip portions 4265 and 4266 are, for example, mechanisms for gripping work parts and the like, and may be shaped like a human hand as an example.

The robot arm 4026 constitutes an arm drive mechanism. The configuration of the drive mechanism is not particularly limited, and for example, in a case where the robot arm 4026 resembles the shape of a person, a configuration in which a servo motor is provided at each joint location such as a location corresponding to a shoulder of the person, a location corresponding to an elbow, a location corresponding to a wrist, and a location corresponding to a finger joint, and is rotated by a predetermined angle may be adopted.

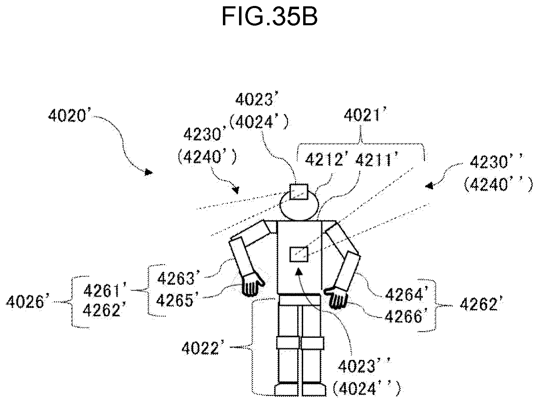

In the humanoid robot 4020, for example, a sensor may be further provided in the robot body 4211 (refer to Fig. 35B). In this case, the sensor is different in height position from the robot sensor 4023 provided on the robot head 4212. Since the height position is different, the sensor can sense the motion of the worker 400 from a different angle.

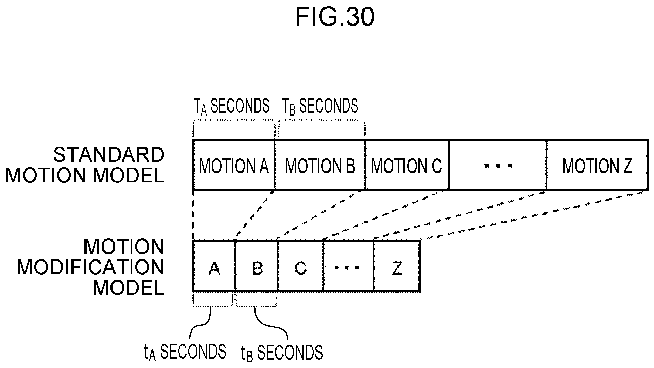

Fig. 30 is a diagram showing an example of a relationship between a standard motion model and a motion modification model in the motion modification system.

As described above, the standard motion model is a model representing a set of motions designated in a work item, and includes a plurality of motions. As an example, there are a total of 26 motions designated by a work item, and the motions are defined as motion A, motion B, and motion C to motion Z.

On the other hand, the motion modification model is a model in which the execution time of each motion in the standard motion model is set to be shorter than a required time for each motion at the time of generating the standard motion model. For example, it is assumed that it takes T_{A} seconds for motion A and T_{B} seconds for motion B as a required time for each motion in the standard motion model. In this case, in the motion modification model, t_{A} seconds shorter than T_{A} seconds for the same motion A and t_{B} seconds shorter than T_{B} seconds for motion B are set as execution times. The same applies to motions C to Z. As a result, the execution time when a work robot is executed using the motion modification model can be made shorter than that when the work robot is executed using the standard motion model.

Note that, in the motion modification model, for at least one motion, the execution time of the motion may be made shorter than the required time for the motion in the standard motion model, and for all the motions included in the standard motion model, the execution times thereof may not be made shorter than the required times for the motions in the standard motion model. In other words, if the execution time of at least one motion is shorter than the required time for the motion in the standard motion model, the execution time of each motion in the standard motion model is set shorter than the required time for each motion at the time of generating the standard motion model.

Fig. 31 is a block diagram showing an example of a configuration and functions in the motion modification system 4100 of the present embodiment.

The motion modification system 4100 includes a first humanoid robot 4020a, a second humanoid robot 4020b, a third humanoid robot 4020c, and a management control device 4060. Each of the first humanoid robot 4020a, the second humanoid robot 4020b, and the third humanoid robot 4020c is connected to a communication unit 4064 of the management control device 4060 through wireless or wired communication, receives an instruction from the management control device 4060, and transmits information acquired by each sensor. Note that the humanoid robots 4020a to 4020c may also be connected to each other via wireless or wired communication to transmit and receive information and instructions acquired by the respective sensors.

The first humanoid robot 4020a functioning as a work robot includes a first body/head drive mechanism 4021a, a first robot moving mechanism 4022a, a first robot sensor 4023a, a first robot imaging device 4024a included in the first robot sensor 4023a, a first information processing device 4025a, and a first arm drive mechanism 4026a. In the present embodiment, the second humanoid robot 4020b functioning as a work robot and the third humanoid robot 4020c functioning as a mobile robot also have the same configuration as the first humanoid robot 4020a.

The first information processing device 4025a according to the present embodiment includes a central processing unit (CPU) 1212, a random access memory (RAM) 1214, and a graphics controller 1216, which are mutually connected by a host controller 1210. The first information processing device 25a also includes input/output units such as a communication interface 1222, a storage device 1224, a DVD drive, and an IC card drive, which are connected to the host controller 1210 via the input/output controller 1220. The DVD drive may be a DVD-ROM drive, a DVD-RAM drive, or the like. The storage device 1224 may be a hard disk drive, a solid state drive, or the like. The first information processing device 4025a also includes a read only memory (ROM) 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the first information processing device 4025a. Furthermore, the storage device 1224 may store sensing information. The DVD drive reads a program or data from a DVD-ROM or the like and provides the program or data to the storage device 1224. The IC card drive reads a program and data from an IC card and/or writes a program and data to the IC card.

The ROM 1230 stores therein a boot program and the like executed by the first information processing device 4025a at the time of activation, and/or a program depending on hardware of the first information processing device 4025a. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. Programs are read from a computer-readable storage medium, installed in the storage device 1224, the RAM 1214, or the ROM 1230, which is also an example of a computer-readable storage medium, and executed by the CPU 1212. Information processing described in such programs is read by the first information processing device 4025a, and provides cooperation between the programs and the various types of hardware resources. A device or a method may be configured by realizing operation or processing of information according to use of the first information processing device 4025a.

For example, in a case where communication is executed between the first information processing device 4025a and an external device, the CPU 1212 may execute a communication program loaded in the RAM 1214 and command the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to a network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute, on data read from the RAM 1214, various types of processing including various types of operations, information processing, condition determination, conditional branching, unconditional branching, information retrieval/replacement, and the like, which are described throughout the present disclosure and specified by a command sequence of a program, and write back results to the RAM 1214. In addition, the CPU 1212 may search for information in a file, a database, or the like in a recording medium.

The programs or software module described above may be stored in a computer-readable storage medium on or near the first information processing device 4025a. Furthermore, a recording medium such as a hard disk or a RAM provided in a server system connected to a dedicated communication network or the Internet can be used as a computer-readable storage medium, thereby providing the program to the first information processing device 4025a via the network.

The content described so far is similar for each information processing device provided in each of the second humanoid robot 4020b and the third humanoid robot 4020c.

The management control device 4060 is a control device that gives instructions to the humanoid robots 4020a to 4020c in order to realize the motion modification system 4100. In addition, the management control device 4060 acquires sensing information accumulated in the storage device of each information processing device.

The management control device 4060 includes a CPU 4060A, a RAM 4060B, a ROM 4060C, an input/output unit (I/O) 4060D, a bus 4060E such as a data bus or a control bus connecting these components, and a communication unit 4068. A storage medium 4062 is connected to the I/O 4060D.

Further, a communication unit 4064 that transmits/receives sensing information, work manual information, process schedule information, and the like to/from the control system of the humanoid robot 4020 is connected to the I/O 4060D. The work manual information includes, for example, a name and a content of each work item, an order of work items, information of a standard work time required for each work item, and the like. In addition, the process schedule information includes, for example, information indicating a work time and a start time/end time of the entire work, information indicating a work time and a start time/end time of each work item, information indicating a worker of each work item, and the like.

Fig. 32 is a block diagram showing an example of functions of the management control device 4060 in the motion modification system of the present embodiment.

The management control device 4060 includes a storage medium 4062, a communication unit 4064, and a processing unit 4066.

The storage medium 4062 includes, for example, at least one of a semiconductor storage device, a magnetic tape device, a magnetic disk device, or an optical disk device. The storage medium 4062 stores a driver program, an operating system program, an application program, data, and the like used for processing in the processing unit 4066. For example, the storage medium 4062 stores sensing information. In addition, the storage medium 4062 stores work manual information of the worker 400 and/or process schedule information.

The communication unit 4064 includes a wireless communication interface circuit such as Wi-Fi (registered trademark) and/or a wired communication interface circuit such as Ethernet (registered trademark). The communication unit 4064 transmits/receives various types of information to/from the humanoid robots 4020a and 4020b through an interface circuit.

The processing unit 4066 includes one or a plurality of processors and peripheral circuits thereof. The processing unit 4066 integrally controls the overall operation of the motion modification system 4100, and is, for example, a CPU. The processing unit 4066 executes processing with reference to programs (a driver program, an operating system program, an application program, etc.) stored in the storage medium 4062. **In** addition, the processing unit 4066 can execute a plurality of programs (application programs and the like) in parallel.

The processing unit 4066 includes a determination unit 4661, a control unit 4662, a learning unit 4663, and a model generation unit 4664. Each of these units is a functional module realized by a program executed by a processor included in the processing unit 4066. Alternatively, these units may be implemented in the processing unit 4066 as firmware.

**In** a case where there is a plurality of sensing targets and there is a plurality of sensors to perform sensing, the determination unit 4661 determines whether or not the plurality of sensors respectively sense different sensing targets. For the determination, a known image recognition technique may be used, or a method of referring to learning by the learning unit 4663 may be used.

The control unit 4662 operates the first humanoid robot 4020a and/or the second humanoid robot 4020b functioning as work robots with reference to a modified motion model generated by the model generation unit 4664. Preferably, the control unit 4662 operates the robot moving mechanism, the body/head drive mechanism, and/or the arm drive mechanism of each humanoid robot with reference to the modified motion model.

The learning unit 4663 learns a standard motion model corresponding to a predetermined motion of the worker 400 on the basis of sensing information corresponding to the predetermined motion of the worker 400 acquired using the third robot sensor 4023c (third robot imaging device 4024c). This learning is performed, for example, by automatic learning which is learning for automatically creating a trained model or automatically performing determination/analysis using the trained model. The learning unit 4663 may refer to work manual information and/or process schedule information when generating the standard motion model. As a result, even if there is an inappropriate predetermined motion of the worker 400, the predetermined motion is not reflected, and each humanoid robot 4020 can be caused to perform an appropriate motion (work).

The model generation unit 4664 refers to the standard motion model and generates a modified motion model in which the execution time of each motion in the standard motion model is set to be shorter than a required time for each motion at the time of generating the standard motion model.

### (Processing of Motion Modification System of Embodiment 4 According to Present Disclosure)

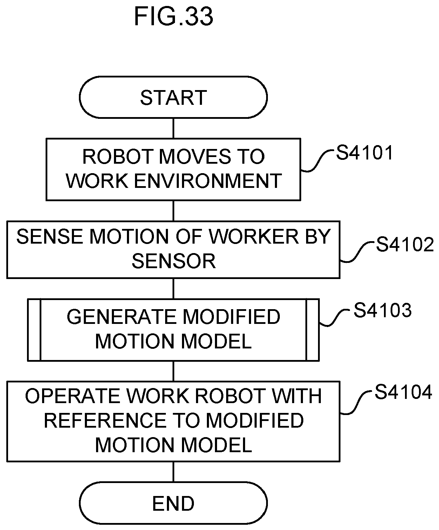

Fig. 33 is an example of a flowchart showing processing of the motion modification system of the present embodiment.

First, the third information processing device of the third humanoid robot 4020c instructs the third humanoid robot 4020c functioning as a mobile robot to move to the workplace 200 according to an instruction from the management control device 4060 or according to an instruction to read a program stored in the storage medium 4062 or a storage device of the third information processing device of the third humanoid robot 4020c (step S4101). The movement is performed by the operation of the third robot moving mechanism of the humanoid robot 4020c. At this time, a movement instruction may also be given to the humanoid robots 4020a and 4020b that function as work robots.

At the time of movement, an instruction is given such that the sensing region 4230c (imaging region 4240c) of the third robot sensor 4023c (third robot imaging device 4024c) of the third humanoid robot 4020c targets the worker 400. Such disposition of the third humanoid robot 4020c is performed by, for example, storing a floor drawing of the workplace 200 in the storage device and/or the storage medium 4062 of the third humanoid robot 4020c in advance, and associating the position of the third humanoid robot 4020c with the stored floor drawing. Alternatively, the disposition of the third humanoid robot 4020c may be based on a position optimized through machine learning. The same applies to the disposition of the first humanoid robot 4020a and the second humanoid robot 4020b.

Next, the third robot sensor 4023c (third robot imaging device 4024c) senses a predetermined motion of the worker 400 on the work line 201 (step S4102). **In** the present embodiment, the control unit 4662 gives an instruction such that the sensing region 4230c (imaging region 4240c) of the third robot sensor 4023c (third robot imaging device 4024c) targets the worker 400, and the third robot moving mechanism and each drive mechanism of the third humanoid robot 4020c operate.

The sensing information acquired by the third robot sensor 4023c (third robot imaging device 4024c) is stored in the storage medium 4062 via the storage device and/or the communication unit 4064 of the third humanoid robot 4020c. The storage device and the storage medium 4062 of each humanoid robot function as a storage unit.

The management control device 4060 learns the standard motion model corresponding to the predetermined motion of the worker 400 on the basis of the sensing information accumulated, in other words, stored, in the storage unit, and generates a modified motion model in which the execution time of each motion in the standard motion model is set to be shorter than the required time for each motion at the time of generating the standard motion model with reference to the standard motion model (step S4103). As an example, in a case where a required time for one motion in the standard motion model is 10 seconds, the execution time of the motion is set to 5 seconds in the modified motion model.

The control unit 4662 operates the first humanoid robot 4020a and the second humanoid robot 4020b functioning as work robots with reference to the generated modified motion model (step S4104). By referring to the generated modified motion model, the first humanoid robot 4020a and the second humanoid robot 4020b can perform the work (predetermined motion) of the worker 400 faster than the predetermined motion. For example, according to the example described above, in the modified motion model, since the motion is set to be performed in half the execution time of the motion in the standard motion model, each humanoid robot 4020 can perform the work at twice the speed of the predetermined motion of the worker 400.

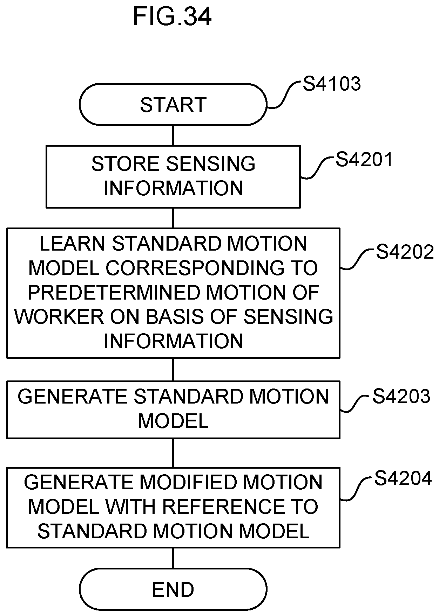

Fig. 34 is an example of a flowchart showing more detailed processing of the modified motion model processing shown in step S4103 of Fig. 33.

The sensing information is stored in the storage unit (step S4201), and the learning unit 4663 learns the standard motion model corresponding to the predetermined motion of the worker 400 on the basis of the sensing information corresponding to the predetermined motion of the worker 400 acquired using the third robot sensor 4023c (third imaging device 4024c) (step S4202).

The learning unit 4663 generates the standard motion model on the basis of the learning result (step S4203). Note that the learning unit 4663 may refer to work manual information of the worker 400 and/or process schedule information when generating the standard motion model.

The model generation unit 4664 generates a modified motion model with reference to the standard motion model (step S4204). Since the modified motion model is a model in which the execution time of each motion in the standard motion model is set to be shorter than the required time for each motion at the time of generating the standard motion model, the robot motions of the humanoid robots 4020a and 4020b operated with reference to the modified motion model is faster than the robot motions of the same robots operated with reference to the standard motion model.

### (Operation and Effect of Motion Modification System According to Embodiment 4)

According to the motion modification system 4100 of the present embodiment, since the work robot can be operated with reference to the modified motion model in which the required time for each motion is set to be shorter than the required time for each motion at the time of generating the standard motion model, the work robot can be caused to work efficiently.

Furthermore, according to the motion modification system 4100 according to the present embodiment, the standard motion model is generated with reference to the work manual information and/or the process schedule information at the time of generating the standard motion model. The worker 400 does not always perform a motion faithfully to the work, and may perform useless motion or omit necessary motion in some cases. Therefore, by referring to the work manual information and the process schedule information, it is possible to prevent an unnecessary or inappropriate predetermined motion by the worker 400 from being reflected in the standard motion model.

### (Modified Example 1 of Embodiment 4)

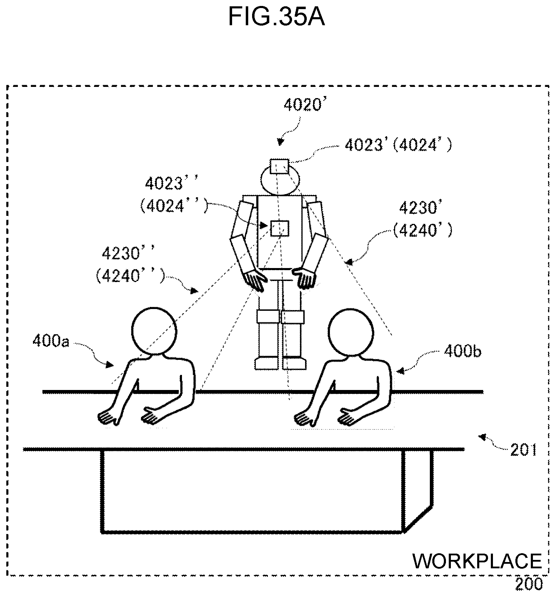

Fig. 35A and Fig. 35B are diagrams showing an example of a motion modification system according to modified example 1 of the present embodiment.

Fig. 35A is a diagram showing an example of a system configuration in the motion modification system according to modified example 1 of embodiment 4 according to the present disclosure. One of features of the motion modification system is to sense and learn each predetermined motion of a plurality of sensing targets (workers 400a and 400b). In addition, the motion modification system is also characterized in that a humanoid robot 4020' functioning as a mobile robot and a work robot is provided with a body sensor 4023" (body imaging device 4024"). In addition, in the motion modification system, the management control device 4060 is not necessarily required, and the humanoid robot 4020' can constitute the motion modification system alone.

Fig. 35B is a diagram showing an example of the humanoid robot shown in Fig. 35A. The humanoid robot 4020' functioning as a mobile and working robot includes a robot main body 4021', a robot moving mechanism 4022', a head sensor 4023', a head imaging device 4024' included in the head sensor 4023', a body sensor 4023", a body imaging device 4024" included in the body sensor 4023", an information processing device 4025', and a robot arm 4026'.

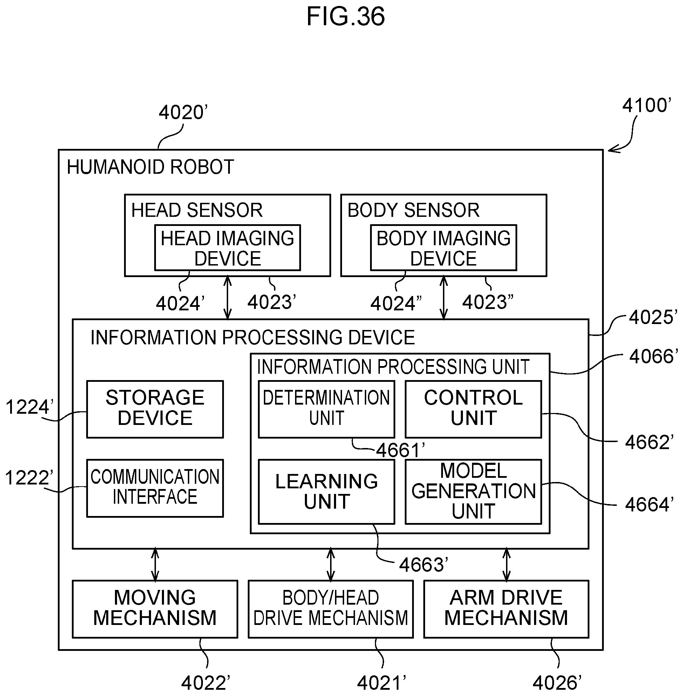

The robot main body 4021' includes a robot body 4211' and a robot head 4212'. The robot body 4211' and the robot head 4212' constitute a body/head drive mechanism 4021' (refer to Fig. 36), and the sensing region 4230' (imaging region 4240') of the head sensor 4023' (head imaging device 4024') and the sensing region 4230" (imaging region 4240") of the body sensor 4023" (body imaging device 4024") can be changed.

Since the head sensor 4023' (head imaging device 4024') and the body sensor 4023" (body imaging device 4024") are disposed at different height positions, the body sensor 4023" (body imaging device 4024") senses a predetermined motion of each sensing target (each of the workers 400a and 400b) at a position different from the head sensor 4023' (head imaging device 4024').

Fig. 36 is a block diagram showing an example of functions of the humanoid robot in the present motion modification system. In the motion modification system 4100', the information processing device 4025' includes an information processing unit 4066', a communication interface 1222', and a storage device 1224', and the information processing unit 4066' includes a determination unit 4661', a control unit 4662', a learning unit 4663', and a model generation unit 4664'. That is, in the motion modification system 4100', the information processing unit 4066' performs processing similar to that of the processing unit 4066 of the management control device 4060. Note that the information processing device 4025' is configured to be able to communicate with the head sensor 4023' (head imaging device 4024'), the body sensor 4023" (head imaging device 4024"), the body/head drive mechanism 4021', the robot moving mechanism 4022', and the arm drive mechanism 4026'.

The humanoid robot 4020' of the motion modification system 4100' includes the information processing unit 4066' in the information processing device 4025', and thus the humanoid robot 4020' constitutes the motion modification system alone.

Referring to Fig. 35A, for example, the control unit 4662' of the humanoid robot 4020' instructs the body sensor 4023" (body imaging device 4024") to sense the worker 400a, and instructs the head sensor 4023' (head imaging device 4024') to sense the worker 400b. **In** other words, the motion modification system 4100' includes a plurality of sensors for sensing a plurality of different sensing targets, and acquires a plurality of pieces of sensing information corresponding to predetermined motions of a plurality of workers acquired using the plurality of sensors. Note that the roles of the head sensor 4023' (head imaging device 4024') and the body sensor 4023" (body imaging device 4024") may be reversed. Furthermore, when each sensor performs sensing, the determination unit 4661' may determine whether or not each sensor senses a different target.

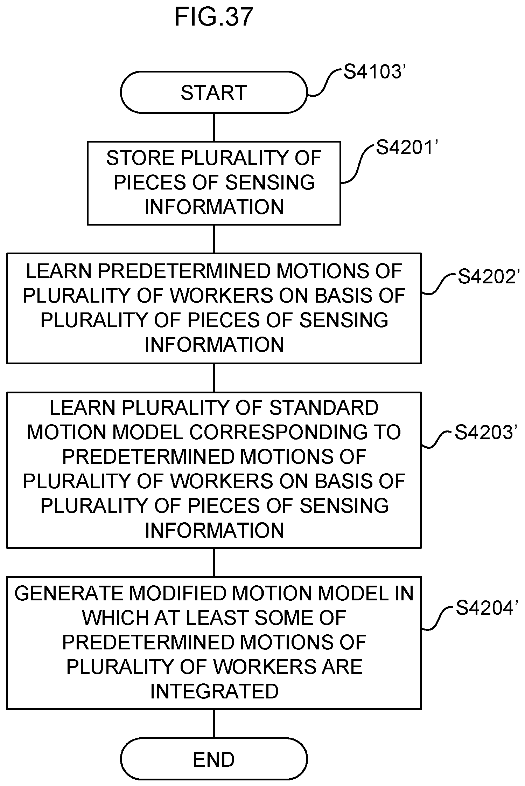

Fig. 37 is an example of a flowchart showing more detailed processing of the modified motion model generation processing in the motion modification system according to modified example 1 of embodiment 4 according to the disclosure.

The present motion modification system is different from embodiment 4 in that predetermined motions of a plurality of workers are sensed by a plurality of sensors in S4102. Further, the motion modification system includes step S4103' instead of step S4103.

**In** step S4103', first, sensing information acquired by the head sensor 4023' (head imaging device 4024') and the body sensor 4023" (body imaging device 4024") is stored in the storage unit (storage device 1224') (step S4201'). The learning unit 4663' learns predetermined motions of a plurality of workers (two workers in the present modified example) on the basis of a plurality of (two in the present modified example) pieces of sensing information (step S4202').

**In** addition, the learning unit 4663' learns a plurality of (two in the present modified example) standard motion models corresponding to the predetermined motions of the plurality of workers on the basis of the plurality of pieces of sensing information (step S4203'). For example, in a case where the work of the worker 400a is a motion including motions A to M while the work of the worker 400b is a motion including motions N to Z, standard motion models include a first standard motion model including motions A to M and a second standard motion model including motions N to Z. At the time of generating the standard motion models, the learning unit 4663' may refer to work manual information and/or process schedule information.

The model generation unit 4664' generates a modified motion model in which at least some of predetermined motions of the plurality of workers are integrated (step S4204').

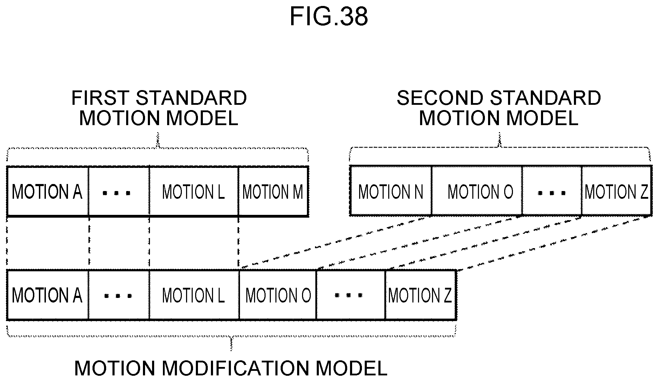

Fig. 38 is a diagram showing an example of a relationship between a standard motion model and a motion modification model in the motion modification system according to modified example 1 of embodiment 4 according to the present disclosure.

For example, in the first standard motion model including motions A to M, it is assumed that motion M is a motion of movement for passing a certain part. Similarly, in the second standard motion model including motions N to Z, it is assumed that motion N is a motion of movement for receiving the part. In this case, motion M and motion N are unnecessary when performed by an integrated work robot. Therefore, the model generation unit 4664' integrates motions A to L, which are a part of the motions in the first standard motion model, and motions O to Z, which are a part of the motions in the second standard motion model, and generates a modified motion model including motions A to L and motions O to Z. With this configuration, in the motion modification system 4100, when the humanoid robot 4020' also functioning as a work robot is operated with reference to the generated modified operation model, one humanoid robot 4020' can perform the predetermined motions performed by the plurality of workers while omitting an unnecessary motion as necessary. As a result, the work robot can be caused to work efficiently.

As an example of the present motion modification system, in a case where 100 products per hour are initially completed by 6 workers in one line 201 of the workplace 200, it is possible to complete 100 products per hour by disposing 3 humanoid robots 4020' in the line 201. In particular, as described above, when a plurality of workers perform different works, the humanoid robot 4020' can collectively perform the works while omitting unnecessary motions as necessary.

Note that the model generation unit 4664' may generate a second modified motion model in which the execution time of each motion is set to be shorter than the required time for each motion at the time of generating the modified motion model for the modified motion model. **In** this case, in the example described above, 200 products per hour can be completed by operating the humanoid robot 4020' with reference to the second modified motion model set to operate in half the execution time of the motion at the time of generating the modified motion model in the modified motion model.

### (Operation and Effect of Modified Example 1)

According to the present motion modification system, the humanoid robot 4020' can constitute the motion modification system alone, and therefore, even in a place where communication with the management control device 4060 cannot be performed, for example, the work robot can efficiently perform the work using a learning model in which the work of the worker has been learned.

**In** addition, since the present humanoid robot 4020' includes a plurality of (two in the present modified example) sensors (imaging devices), it is possible to perform work learning of workers even in a narrow place for sensing a plurality of workers, for example.

**In** addition, according to the motion modification system, a plurality of standard motion models corresponding to respective predetermined motion of the plurality of workers are learned, and a modified motion model in which at least some of the predetermined motions of the plurality of workers are integrated is generated with reference to the standard motion models, and thus the works (predetermined motions) of the plurality of workers can be performed by a smaller number of work robots than the number of workers, and the work efficiency can be improved. **In** addition, in the modified motion model, the second modified model in which the execution time of each motion is set to be shorter than the required time for each motion at the time of generating the modified motion model is generated, and the work robot is operated with reference to the second modified model, and thus the work robot can be caused to work more efficiently.

**In** the present motion modification system, one humanoid robot functioning as a mobile robot and a work robot is not necessarily provided as an example, and a plurality of humanoid robots may be provided. **In** this case, as the number of humanoid robots increases, the number of sensors increases by a multiple of the number of humanoid robots, a large amount of sensing information can be acquired at a time, and the number of work robots also increases, and thus, for example, in a case where each work robot is caused to perform the same work, work efficiency can be improved.

Although the embodiments of the present disclosure have been described above, the present disclosure is not limited to the above-described embodiments of the present disclosure, and various modifications and applications can be made without departing from the gist of the present disclosure.

In the motion modification system 4100 of the present embodiment, it has been described that there is one mobile robot (humanoid robot) that senses the worker 400. However, the number of mobile robots may be equal to or greater than this. For example, when the number of mobile robots including sensors and moving mechanisms is large, a plurality of sensors can be disposed to sense a predetermined motion of the worker 400 from different positions, heights, and/or directions. As a result, various types of data necessary for learning the predetermined motion of the worker 400 can be easily acquired, and sensing can be performed such that each predetermined motion of the worker 400 can be entirely covered.

In the present embodiment, it has been described that the standard motion model is generated (S4103) after sensing the worker 400 (S4102). However, it is not always necessary to continuously execute the sensing to the standard motion model generation over time. For example, while sensing information is stored when sensing is performed in S4102 (S4201), learning with reference to the sensing information (S4202) may be performed after a predetermined time (24 hours, one week, or the like) has elapsed from sensing. The same applies between steps of S4101 to S4105. Furthermore, contrary to the above example, S4103 to S4105 may be executed while S4102 is being performed. In this case, since the work robot is operated with reference to the modified motion model in the middle of the predetermined motion of the worker 400, the work efficiency can be further improved.

In addition, in the present embodiment, it has been described that learning of a predetermined motion of the worker is performed by automatic learning. However, learning is not necessarily automatic learning, and may be other known machine learning, for example, deep learning, unsupervised/supervised learning, reinforcement learning, or the like.

In the present embodiment, it has been described that the mobile robot and the work robot are the same humanoid robot. In this case, it is possible to use the mobile robot together with the work robot, and it is possible to save costs related to robot manufacturing. However, the mobile robot and the work robot may be different robots.

Furthermore, in the present embodiment, the example of the modified motion model set to operate in half an execution time or 1/10 of the execution time of a motion in the standard motion model has been described. However, the motion modification system is not particularly limited as long as the execution time of each motion in the standard motion model is set to be shorter than the required time for each motion at the time of generating the standard motion model.

### (Embodiment 5)

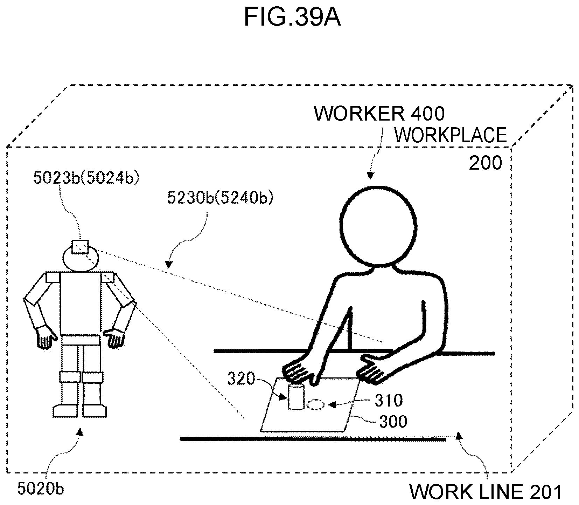

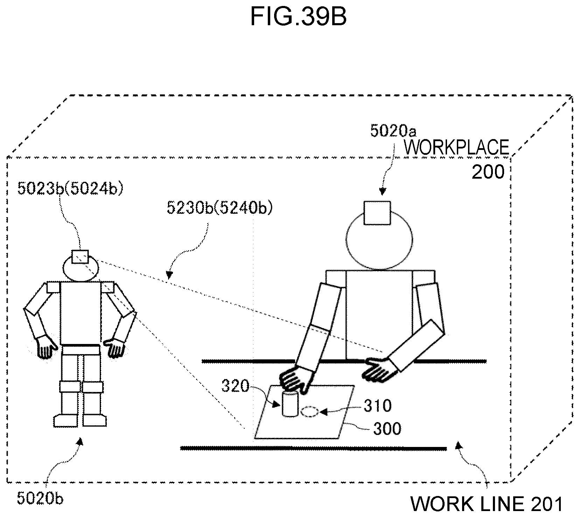

Fig. 39A and Fig. 39B are diagrams for describing a work reproduction system.

In the present work reproduction system, when an abnormal situation such as an accident or a malfunction occurs, the worker 400 is caused to perform a motion when the abnormal situation occurs, and a predetermined motion of the worker 400 is sensed by a second robot sensor 5023b (second robot imaging device 5024b). In addition, the present work reproduction system learns a standard motion model corresponding to the predetermined motion of the worker 400 on the basis of first sensing information corresponding to the predetermined motion of the worker 400. The standard motion model is a model representing a motion corresponding to the predetermined motion of the worker 400 and designated as a motion to be performed in a predetermined work item. Thereafter, the present work reproduction system causes a first humanoid robot 5020a, which is a work reproduction robot, to perform a reproduction motion once or more with reference to the standard motion model. The present work reproduction system receives input of information on an accident or a malfunction, and detects the occurrence of the accident or the malfunction on the basis of second sensing information corresponding to the reproduction motion of the first humanoid robot 5020a acquired using a sensor. This makes it possible to analyze a problem of the motion of the worker 400 and a defect in a standard motion used for the work of the worker 400.

Fig. 39A is a diagram showing an example of sensing when a worker reproduces a motion.

The present work reproduction system includes the first humanoid robot 5020a functioning as a work reproduction robot and the second humanoid robot 5020b functioning as a mobile robot. The number of humanoid robots is not limited to two.

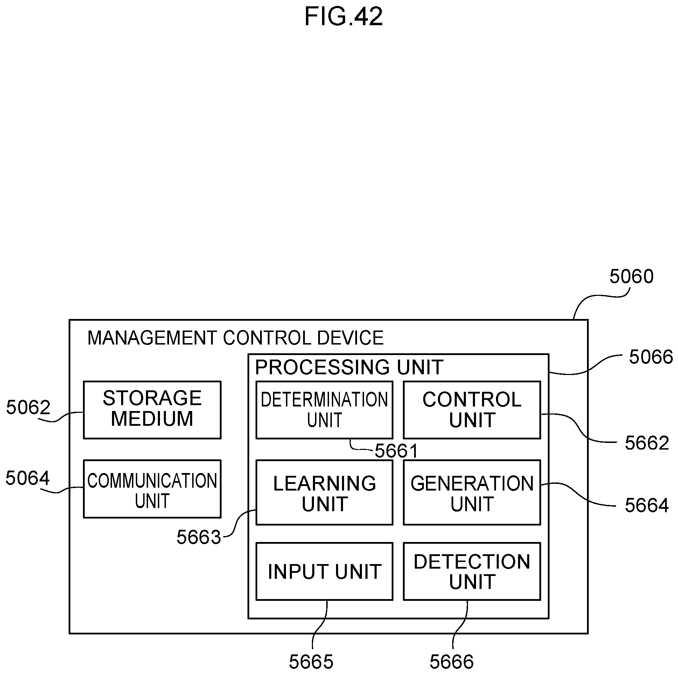

The work reproduction system senses the motion of the worker 400 by a second robot sensor 5023b (second robot imaging device 5024b) provided in the second humanoid robot 5020b. As an example of the motion of the worker 400, there is a motion in a case where a part 320 is disposed at a place different from the original disposition place 310 when the worker 400 assembles a printed circuit board 300 on the work line 201. For recognition of the motion of the worker 400 by the sensor, a known image recognition technique may be used, or the motion of the worker 400 may be recognized by learning using a learning unit 5663 (refer to Fig. 42). The same applies to ae reproduction motion of a work reproduction robot which will be described later.

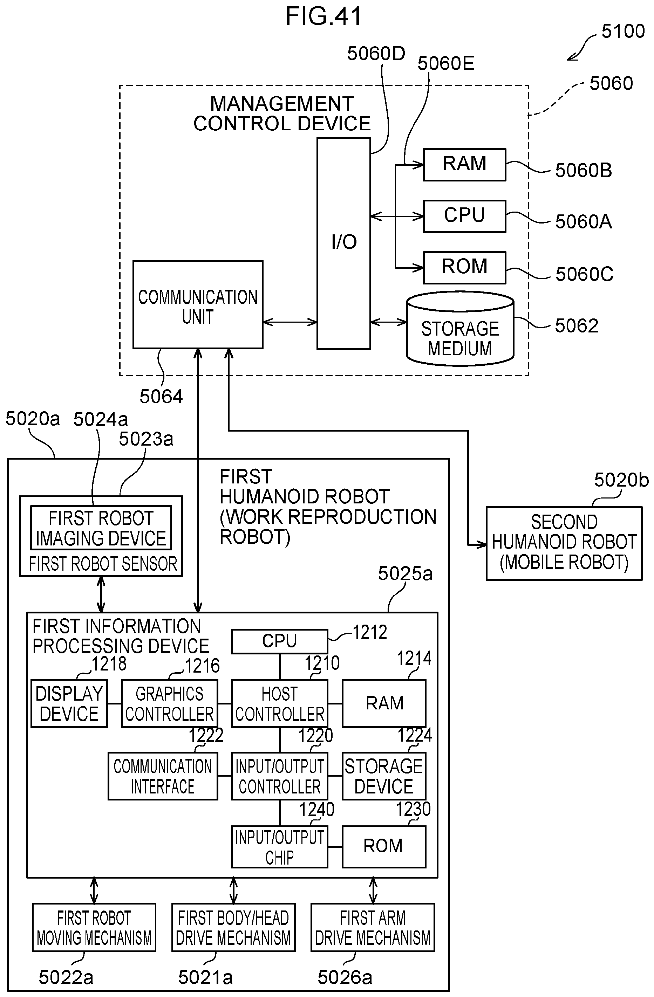

The second humanoid robot 5020b senses the motion of the worker 400 using a second robot sensor 5023b (second robot imaging device 5024b). The first sensing information acquired by the second robot sensor 5023b (second robot imaging device 5024b) is stored in a storage medium 5062 (refer to Fig. 41) of a management control device 5060 or a storage device of the second humanoid robot 5020b. The management control device 5060 learns the standard motion model corresponding to the predetermined motion of the worker 400 on the basis of the first sensing information corresponding to the predetermined motion of the worker 400. The standard motion model is stored in the storage medium 5062 of the management control device 5060, and/or a storage device 1224 (refer to Fig. 41) of a first information processing device 5025a of the first humanoid robot 5020a, and/or a storage device of a second information processing device of the second humanoid robot 5020b. Note that the predetermined motion includes various motions before and after occurrence of an abnormal situation, and includes, for example, a motion of grasping an object, a motion of assembling parts, and a motion of handling a tool.

Fig. 39B is a diagram showing an example of sensing when a motion is reproduced by a work reproduction robot. The management control device 5060 generates a motion instruction to operate the first humanoid robot 5020a with reference to the stored standard motion model. The motion instruction is an instruction generated with reference to the standard motion model, and is an instruction to operate the work reproduction robot (first humanoid robot 5020a in the present embodiment). Then, when the first humanoid robot 5020a is disposed in a reproduced site in which the site at the time of occurrence of the abnormal situation has been reproduced, for example, the management control device 5060 operates the first humanoid robot 5020a with reference to the motion instruction.

The management control device 5060 causes the first humanoid robot 5020a to perform the reproduction motion at least once or more, preferably a plurality of times with reference to the standard motion model. For example, in a normal line work, a work process is clearly defined, and an accident or a malfunction hardly occurs. Therefore, when an abnormal situation occurs, the occurrence of an accident or malfunction may not be detected simply by causing the first humanoid robot 5020a to perform the reproduction motion once. Therefore, the first humanoid robot 5020a is caused to perform the reproduction motion a plurality of times, and thus the occurrence of the accident or malfunction can easily be detected.

The management control device 5060 receives input of information on an accident or a malfunction, and detects the occurrence of the accident or the malfunction on the basis of second sensing information corresponding to the reproduction motion of the first humanoid robot 5020a acquired using the second robot sensor 5023b (second robot imaging device 5024b). Note that the accident information is, for example, information regarding an accident such as what time, where, who, and what kind of behavior have been performed. In addition, the malfunction information is information indicating a malfunction in a case where there is an error as a motion of a party concerned when an abnormal situation occurs.

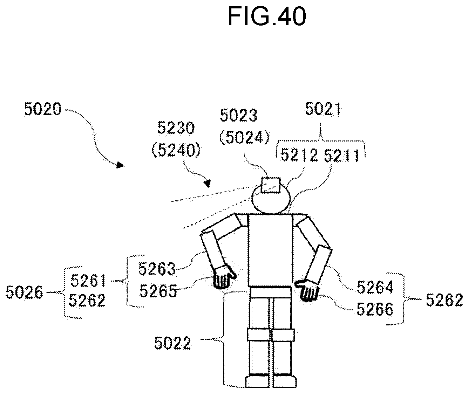

Fig. 40 is a diagram showing an example of a humanoid robot in the present work reproduction system. The humanoid robot 5020 functioning as a work robot and a mobile robot includes a robot main body 5021, a robot moving mechanism 5022, a robot sensor 5023, a robot imaging device 5024 that can be included in the robot sensor 5023, an information processing device 5025, and a robot arm 5026.

The humanoid robot 5020 can be moved by the robot moving mechanism 5022 provided below the robot main body 5021, and moves to, for example, the workplace 200 in response to an instruction from the outside of the humanoid robot 5020 such as the management control device 5060, or with reference to a program stored in the information processing device 5025.

The robot main body 5021 includes a robot body 5211 and a robot head 5212. The robot body 5211 and the robot head 5212 constitute a body/head drive mechanism, and the sensing region 5230 (imaging region 5240) of the robot sensor 5023 (robot imaging device 5024) can be changed. The configuration of the drive mechanism is not particularly limited, and for example, a servo motor (not illustrated) may rotate the robot head 5212 by a predetermined angle with respect to the robot body 5211 or rotate the robot body 5211 by a predetermined angle with respect to the robot moving mechanism 5022.

The robot moving mechanism 5022 is provided below the robot body 5211, the robot arm 5026 is provided on a side of the robot body 5211, and the robot sensor 5023 is provided on the robot head 5212. Further, the information processing device 5025 is provided inside the robot main body 5021.

The robot moving mechanism 5022 may have any configuration, and may be provided with, for example, a rotating body driven by a motor, or may have a configuration in which a shape of a leg is similar to that of a human leg. As an example, in a case where the robot moving mechanism 5022 is configured to resemble the shape of a human leg, a servo motor is provided at a location corresponding to a human joint, and the moving mechanism is configured by rotating the servo motor by a predetermined angle.

The robot sensor 5023 is provided on the robot head 5212, and can sense the motions of the worker 400 and the work reproduction robot. Further, the robot sensor 5023 sequentially acquires information indicating at least a distance and an angle between an object around the humanoid robot 5020 on which humanoid robot 5020 works and the robot arm 5026. As an example of the robot sensor 5023, cameras with higher performance, thermo cameras, high-pixel/telephoto/ultra-wide angle/360-degree/high-performance cameras, a radar, a solid-state LiDAR, a LiDAR, a multi-color laser coaxial displacement meter, vision recognition, or various other sensors can be adopted. These are also examples of the robot imaging device 5024. Furthermore, other examples of the robot sensor 5023 include a vibratory meter, a hardness meter, a micro vibratory meter, an ultrasonic measuring device, a vibration measuring device, an infrared measuring device, an ultraviolet measuring device, an electromagnetic wave measuring device, a thermometer, a hygrometer, a spot AI weather forecast, a high-precision multi-channel GPS, low-altitude satellite information, long tail incident AI data, or the like.

Examples of the sensor information acquired from the robot sensor 5023 include an image, a distance, vibration, heat, an odor, a color, a sound, an ultrasonic wave, a radio wave, an ultraviolet ray, an infrared ray, humidity, and the like, and preferably, information on an image and a distance is acquired by the robot imaging device 5024. The robot sensor 5023 (robot imaging device 5024) performs such sensing every nanosecond as an example. The sensor information is used, for example, for analysis of motion capture of motions of the worker 400 and the first humanoid robot 5020a, a 3D map of the workplace 200, navigation of movement and motions of the worker 400 and the first humanoid robot 5020a in the workplace 200, cornering, speed, and the like.

The robot arm 5026 includes a right arm 5261 and a left arm 5262. The right arm 5261 includes a right grip support portion 5263 and a right grip portion 5265, and the left arm 5262 includes a left grip support portion 5264 and a left grip portion 5266. The right grip support portion 5263 is a mechanism for supporting the right grip portion 5265, and the left grip support portion 5264 is a mechanism for supporting the left grip portion 5266, and as an example, the right grip support portion and the left grip support portion may be similar in shape to human arms. The grip portions 5265 and 5266 are, for example, mechanisms for gripping parts for work and the like, and may be, for example, similar to the shape of human hands.

The robot arm 5026 constitutes a second drive mechanism. The configuration of the drive mechanism is not particularly limited, and for example, in a case where the robot arm 5026 resembles the shape of a person, a configuration in which a servo motor is provided at each joint location such as a location corresponding to a shoulder of the person, a location corresponding to an elbow, a location corresponding to a wrist, and a location corresponding to a finger joint, and is rotated by a predetermined angle may be adopted.

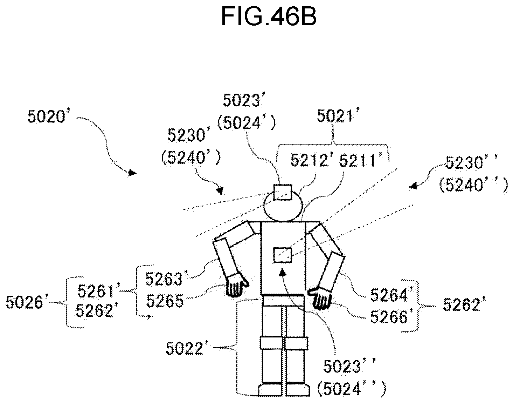

In the humanoid robot 5020, for example, a sensor may be further provided in the robot body 5211 (refer to Fig. 46B). In this case, the sensor is different in height position from the robot sensor 5023 provided on the robot head 5212. Since the height position is different, the sensor can sense the motions of the worker 400 and the first humanoid robot 5020a from a different angle.

Fig. 41 is a block diagram showing an example of a configuration and functions in the work reproduction system 5100 of the present embodiment.

The work reproduction system 5100 includes the first humanoid robot 5020a, the second humanoid robot 5020b, and the management control device 5060. The first humanoid robot 5020a and the second humanoid robot 5020b are connected to a communication unit 5064 of the management control device 5060 through wireless or wired communication, receive an instruction from the management control device 5060, and transmit information acquired by respective sensors. The first humanoid robot 5020a and the second humanoid robot 5020b may also be connected to each other through wireless or wired communication to transmit and receive information and instructions acquired by respective sensors.

The first humanoid robot 5020a functioning as a work reproduction robot includes a first robot moving mechanism 5022a, a first robot sensor 5023a, a first robot imaging device 5024a included in the first robot sensor 5023a, a first information processing device 5025a, a first body/head drive mechanism 5021a, and a first arm drive mechanism 5026a. In the present embodiment, the second humanoid robot 5020b functioning as a mobile robot also has the same configuration as the first humanoid robot 5020a.

The first information processing device 5025a according to the present embodiment includes a central processing unit (CPU) 1212, a random access memory (RAM) 1214, and a graphics controller 1216, which are mutually connected by a host controller 1210. The first information processing device 5025a also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The first information processing device 5025a also includes a read only memory (ROM) 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the first information processing device 5025a. Furthermore, the storage device 1224 may store sensing information. The DVD drive reads a program or data from a DVD-ROM or the like and provides the program or data to the storage device 1224. The IC card drive reads a program and data from an IC card and/or writes a program and data to the IC card.

The ROM 1230 stores therein a boot program and the like executed by the first information processing device 5025a at the time of activation, and/or a program depending on hardware of the first information processing device 5025a. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. Programs are read from a computer-readable storage medium, installed in the storage device 1224, the RAM 1214, or the ROM 1230, which is also an example of a computer-readable storage medium, and executed by the CPU 1212. Information processing described in such programs is read by the first information processing device 5025a, and provides cooperation between the programs and the various types of hardware resources. A device or a method may be configured by realizing operation or processing of information according to use of the first information processing device 5025a.

For example, in a case where communication is executed between the first information processing device 5025a and an external device, the CPU 1212 may execute a communication program loaded in the RAM 1214 and command the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to a network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute, on data read from the RAM 1214, various types of processing including various types of operations, information processing, condition determination, conditional branching, unconditional branching, information retrieval/replacement, and the like, which are described throughout the present disclosure and specified by a command sequence of a program, and write back results to the RAM 1214. In addition, the CPU 1212 may search for information in a file, a database, or the like in a recording medium.

The programs or software module described above may be stored in a computer-readable storage medium on or near the first information processing device 5025a. Furthermore, a recording medium such as a hard disk or a RAM provided in a server system connected to a dedicated communication network or the Internet can be used as a computer-readable storage medium, thereby providing the program to the first information processing device 5025a via the network.

The above description is also applied to the second information processing device provided in the second humanoid robot 5020b.

The management control device 5060 is a control device that gives an instruction to the humanoid robots 5020a and 5020b in order to realize the work reproduction system 5100. The management control device 5060 acquires sensing information accumulated in each storage device of the humanoid robots 5020a and 5020b.

The management control device 5060 includes a CPU 5060A, a RAM 5060B, a ROM 5060C, an input/output unit (I/O) 5060D, a bus 5060E such as a data bus or a control bus connecting the components, and a communication unit 5064. A storage medium 5062 is connected to the I/O 5060D.

Further, the communication unit 5064 that transmits/receives sensing information, work manual information, process schedule information, and the like to/from the control system of the humanoid robot 5020 is connected to the I/O 5060D. The work manual information includes, for example, a name and a content of each work item, an order of work items, information of a standard work time required for each work item, and the like. In addition, the process schedule information includes, for example, information indicating a work time and a start time/end time of the entire work, information indicating a work time and a start time/end time of each work item, information indicating a worker of each work item, and the like.

Fig. 42 is a block diagram showing an example of functions of the management control device 5060 in the work reproduction system of the present embodiment.

The management control device 5060 includes a storage medium 5062, a communication unit 5064, and a processing unit 5066.

The storage medium 5062 includes, for example, at least one of a semiconductor storage device, a magnetic tape device, a magnetic disk device, or an optical disk device. The storage medium 5062 stores a driver program, an operating system program, an application program, data, and the like used for processing in the processing unit 5066. For example, the storage medium 5062 stores sensing information. In addition, the storage medium 5062 may store work manual information of the worker 400 and/or process schedule information.

The communication unit 5064 includes a wireless communication interface circuit such as Wi-Fi (registered trademark) and/or a wired communication interface circuit such as Ethernet (registered trademark). The communication unit 5064 transmits/receives various types of information to/from the humanoid robots 5020a and 5020b through an interface circuit.

The processing unit 5066 includes one or a plurality of processors and peripheral circuits thereof. The processing unit 5066 integrally controls the overall operation of the work reproduction system 5100, and is, for example, a CPU. The processing unit 5066 executes processing with reference to programs (a driver program, an operating system program, an application program, etc.) stored in the storage medium 5062. In addition, the processing unit 5066 can execute a plurality of programs (application programs and the like) in parallel.

The processing unit 5066 includes a determination unit 5661, a control unit 5662, a learning unit 5663, a generation unit 5664, an input unit 5665, and a detection unit 5666. Each of these units is a functional module realized by a program executed by a processor included in the processing unit 5066. Alternatively, these units may be implemented in the processing unit 5066 as firmware.

The determination unit 5661 determines whether or not a sensing target (the worker 400 or the first humanoid robot 5020a) is sensed. As a determination method, a known image recognition technique may be used, or learning using the learning unit 5663 (refer to Fig. 42) may be used.

The control unit 5662 causes first humanoid robot 5020a to perform a reproduction motion once or more with reference to a standard motion model. When it is determined that the sensing target (the worker 400 or the first humanoid robot 5020a) is not sensed, the control unit 5662 operates the second body/head drive mechanism or the second robot moving mechanism of the second humanoid robot 5020b.

The learning unit 5663 learns a standard motion model corresponding to a predetermined motion of the worker 400 on the basis of first sensing information corresponding to the predetermined motion of the worker 400. This learning is performed, for example, by automatic learning which is learning for automatically creating a trained model or automatically performing determination/analysis using the trained model.

The generation unit 5664 generates a standard motion model with reference to a learning result by the learning unit 5663. In addition, the generation unit 5664 generates a motion instruction.

The input unit 5665 receives input of information on an accident or a malfunction. This input may be an input from the outside of the work reproduction system 5100, or may be input by storing information on an accident or a malfunction in advance in the storage medium 5062, the storage medium 1224 of the first information processing device 5025a, and/or the storage medium of the second information processing device and reading the information according to an instruction of the management control device 5060.

The detection unit 5666 detects the occurrence of an accident or a malfunction on the basis of second sensing information corresponding to the reproduction motion of the first humanoid robot 5020a acquired using the second robot sensor 5023b (second robot imaging device 5024b). As will be described later, the detection unit 5666 detects the occurrence of a motion different from the work manual information or the process schedule information on the basis of the second sensing information corresponding to the reproduction motion of the work reproduction robot acquired using the sensor. Note that examples of a detection target include a difference in change of each piece of information (data) over time, recognition of a significant deviation between pieces of data when the pieces of data are compared, and the like.

### (Processing of Work Reproduction System of embodiment 5 According to Present Disclosure)

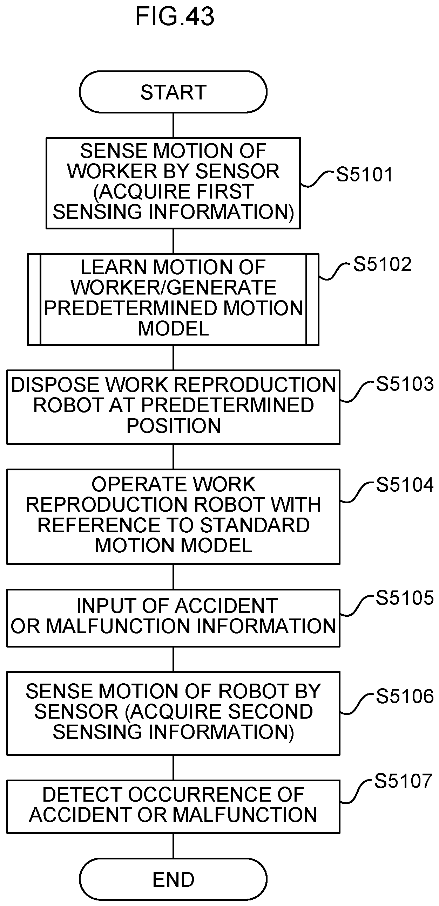

Fig. 43 is an example of a flowchart showing processing of the work reproduction system of the present embodiment.

First, the work reproduction system 5100 senses a motion of the worker 400 in the workplace 200 using the second robot sensor 5023b (second robot imaging device 5024b) of the second humanoid robot 5020b in response to an instruction from the management control device 5060 or an instruction to read a program stored in the storage medium 5062 or the storage device of the second information processing device (step S5101). The motion of the worker 400 is a motion that reproduces a motion actually performed by the worker 400 when an abnormal situation occurs, and preferably, the motion is performed in the workplace 200 that faithfully reproduces the situation when the abnormal situation occurs. The control unit 5662 or the second information processing device operates the second body/head drive mechanism or the second robot moving mechanism of the second humanoid robot 5020b such that a sensing region 5230b (imaging region 5240b) of the second robot sensor 5023b (second robot imaging device 5024b) of the second humanoid robot 5020b includes the motion of the worker 400.

The sensing information (first sensing information) acquired by the second robot sensor 5023b (second robot imaging device 5024b) is stored in the storage medium 5062 via the storage device and/or the communication unit 5064 of the second information processing device. The storage device and the storage medium 5062 of each information processing device function as a storage unit.

The management control device 5060 learns a standard motion model corresponding to a predetermined motion of the worker 400 on the basis of the first sensing information accumulated, in other words, stored, in the storage unit and generates a standard motion model with reference to the learning result (step S5102).

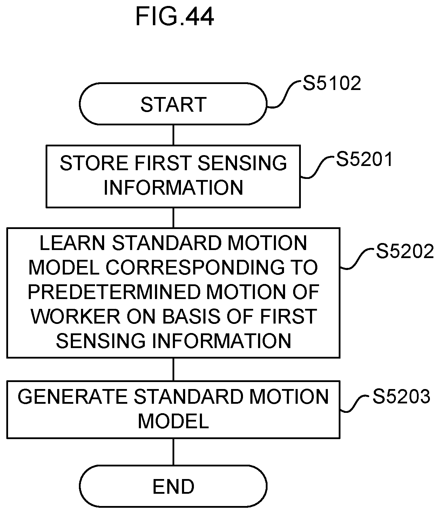

Fig. 44 is an example of a flowchart showing more detailed processing of the worker motion learning/standard motion model generation processing shown in step S5102 of Fig. 43.

When the first sensing information is acquired, the first sensing information is stored in the storage unit (step S5201), and the learning unit 5663 learns the standard motion model corresponding to the predetermined motion of the worker 400 on the basis of the first sensing information (step S5202). Then, the generation unit 5664 generates the standard motion model with reference to the learning result by the learning unit 5663 (step S5203).

Note that, in the learning by the learning unit 5663, motion capture of the motion of the worker 400, a 3D map of the workplace 200, navigation of movement and motion of the worker 400 in the workplace 200, cornering, speed, and the like may be analyzed, and an optimal motion of the humanoid robot 5020 that can also function as a work reproduction robot may be learned by automatic learning. As a result, it is possible to analyze the predetermined motion of the worker 400 from multiple aspects at a time, and it is possible to reduce the time required and costs for motion analysis of the worker 400 and programming.

Referring back to Fig. 43, the first humanoid robot 5020a is disposed at a predetermined position before and after the standard motion model is generated (step S5103). The disposition of the first humanoid robot 5020a at the predetermined position can be achieved by, for example, a method in which a floor diagram of the workplace 200, which is an example of the predetermined position, is stored in advance in the storage unit, the position of the first humanoid robot 5020a is associated with the stored floor diagram, and the first moving mechanism 5022a of the first humanoid robot 5020a is operated to move the first humanoid robot 5020a to the position. Alternatively, the disposition of the first humanoid robot 5020a may be based on a position optimized through machine learning. The predetermined position is preferably the workplace 200 that faithfully reproduces a situation at the time of occurrence of an abnormal situation.

The control unit 5662 causes the first humanoid robot 5020a to perform the reproduction motion once or more with reference to the standard motion model (step S5104). In other words, the first humanoid robot 5020a performs the reproduction motion once or more on the basis of the motion instruction.

Before or after the motion of first humanoid robot 5020a (S5104), the input unit 5665 receives input of information on an accident or a malfunction (step S5105).

The work reproduction system 5100 senses the reproduction motion of the first humanoid robot 5020a in the workplace 200 using the second robot sensor 5023b (second robot imaging device 5024b) of the second humanoid robot 5020b (step S5106). The sensing information (second sensing information) acquired by the second robot sensor 5023b (second robot imaging device 5024b) is stored in the storage unit.

The detection unit 5666 detects the occurrence of an accident or a malfunction on the basis of the second sensing information acquired using the second robot sensor 5023b (second robot imaging device 5024b) (step S5107).

### (Operation and Effect of Work Reproduction System According to Embodiment 5)

According to the work reproduction system 5100 of the present embodiment, a work reproduction robot is caused to perform a reproduction motion once or more with reference to a standard motion model, and the occurrence of an accident or a malfunction is detected on the basis of the second sensing information corresponding to the reproduction motion of the work reproduction robot. As a result, after a motion of the worker 400 at the time of occurrence of an abnormal situation is reproduced by the work reproduction robot, the occurrence of an accident or a malfunction can be detected through the reproduction motion of the work reproduction robot, and the cause of the abnormal situation can be easily clarified.

### (Modified Example 1 of Embodiment 5)

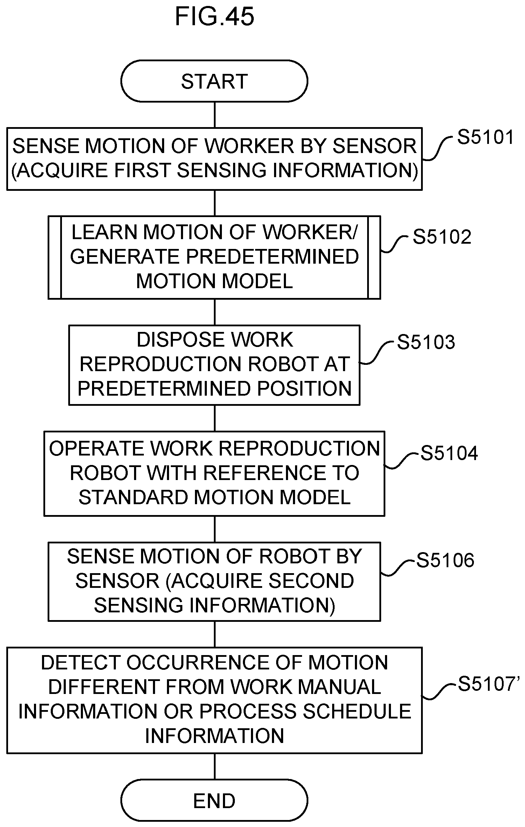

Fig. 45 is an example of a flowchart showing processing of a work reproduction system according to modified example 1 of embodiment 5 according to the present disclosure.

In the processing of the work reproduction system according to the present modified example, processing from S5101 to S5104 is the same, S5105 is omitted, and step S5107' is performed as processing after S5106.

In the present work reproduction system, the work manual information of the worker 400 or the process schedule information is stored in the storage unit, and the detection unit 5666 detects the occurrence of a motion different from the work manual information or the process schedule information on the basis of the second sensing information corresponding to the reproduction motion of the first humanoid robot 5020a acquired using the second robot sensor 5023b (second robot imaging device 5024b) (S5107').

The work manual information or the process schedule information is information indicating a motion or an order that is originally appropriate. Therefore, it is possible to check whether or not there is a defect in the standard motion by comparing the reproduction motion of the first humanoid robot 5020a performed with reference to the standard motion model with the work manual information or the process schedule information.

### (Modified Example 2 of Embodiment 5)

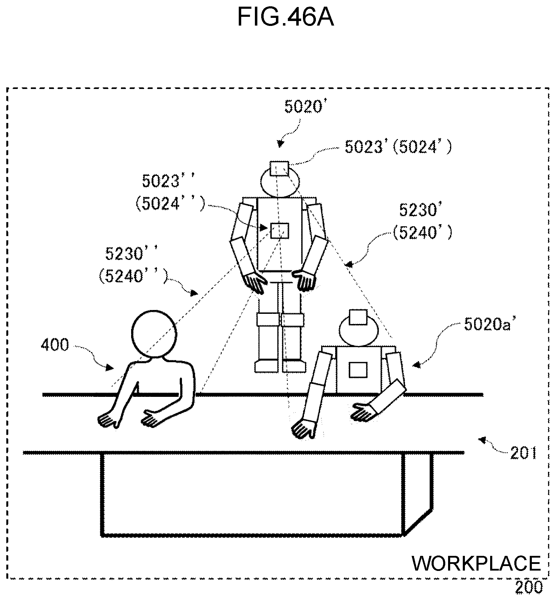

Fig. 46A and Fig. 46B are diagrams showing an example of a work reproduction system according to modified example 2 of the present embodiment.

Fig. 46A is a diagram showing an example of a system configuration in the work reproduction system according to modified example 2 of embodiment 5 according to the present disclosure. The present work reproduction system is characterized in that the second humanoid robot 5020' functioning as a mobile robot is provided with a body sensor 5023" (body imaging device 5024"). Specifically, an instruction is given such that a sensing region 5230' (imaging region 5240') of a head sensor 5023' (head imaging device 5024') of the second humanoid robot 5020' targets the first humanoid robot 5020a, and a sensing region 5230" (imaging region 5240") of the body sensor 5023" (body imaging device 5023") of the second humanoid robot 5020' targets the worker 400. **In** the present work reproduction system, the management control device 5060 is not necessarily required as long as the first humanoid robot 5020a and the second humanoid robot 5020' can communicate with each other.

Fig. 46B is a diagram showing an example of the humanoid robot shown in Fig. 46A. The second humanoid robot 5020' functioning as a mobile robot includes a robot main body 5021', a robot moving mechanism 5022', a head sensor 5023', a head imaging device 5024' included in head sensor 5023', the body sensor 5023", the body imaging device 5024" included in the body sensor 5023", an information processing device 5025', and a robot arm 5026'.

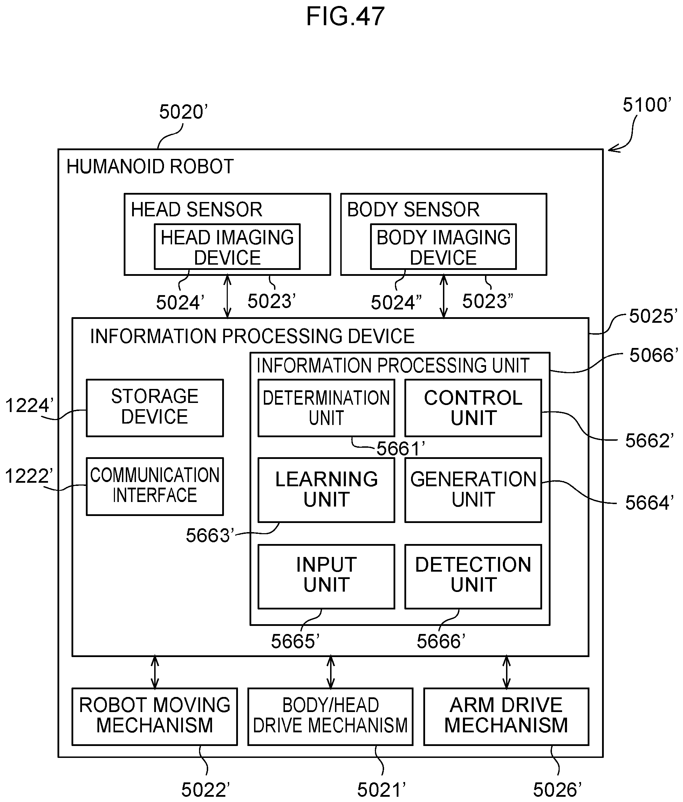

The robot main body 5021' includes a robot body 5211' and a robot head 5212'. The robot body 5211' and the robot head 5212' constitute a body/head drive mechanism 5021' (refer to Fig. 47), and the sensing region 5230' (imaging region 5240') of the head sensor 5023' (head imaging device 5024') and the sensing region 5230" (imaging region 5240") of the body sensor 5023" (body imaging device 5024") can be changed.

Since the head sensor 5023' (the head imaging device 5024') and the body sensor 5023" (body imaging device 5024") are disposed at different height positions, the body sensor 5023" (body imaging device 5024") and the head sensor 5023' (head imaging device 5024') sense the motion of the worker 400 or the first robot 5020a functioning as a work reproduction robot at different positions.

The configuration of the information processing device 5025' is similar to that of the first information processing device 5025a of the first humanoid robot 5020a. The robot arm 5026' is similar to that of the first humanoid robot 5020a.

Fig. 47 is a block diagram showing an example of functions of the humanoid robot 5020' in the work reproduction system. **In** the work reproduction system 5100', the information processing device 5025' includes an information processing unit 5066', a communication interface 1222', and a storage device 1224', and the information processing unit 5066' includes a determination unit 5661', a control unit 5662c', a learning unit 5663c', a generation unit 5664', an input unit 5665', and a detection unit 5666'. That is, in the work reproduction system 5100', the information processing unit 5066' performs processing similar to the processing unit 5066 of the management control device 5060. Note that the information processing device 5025' is configured to be able to communicate with the head sensor 5023' (head imaging device 5024'), the body sensor 5023" (head imaging device 5024"), the body/head drive mechanism 5021', the robot moving mechanism 5022', and the arm drive mechanism 5026'. Further, the storage unit 1224' may store work manual information or process schedule information.

**In** the second humanoid robot 5020' of the work reproduction system 5100', since the information processing device 5025' includes the information processing unit 5066', the first humanoid robot 5020a and the second humanoid robot 5020' are configured to be able to communicate with each other, and thus the work reproduction system can be configured without requiring the management control device 5060.

Referring to Fig. 46, for example, the control unit 5662' of the second humanoid robot 5020' instructs the body sensor 5023" (body imaging device 5024") to sense the worker 400, and instructs the head sensor 5023' (head imaging device 5024') functioning as the second sensor to sense the first humanoid robot 5020a functioning as a work reproduction robot. Note that the roles of the head sensor 5023' (head imaging device 5024') and the body sensor 5023" (body imaging device 5024") may be reversed. That is, the head sensor 5023' (head imaging device 5024') may be instructed to sense the worker 400, and the body sensor 5023" (body imaging device 5024") may be instructed to sense the first humanoid robot 5020a.

The work reproduction system 5100' causes the worker 400 to reproduce a motion at the time of occurrence of an abnormal situation, and then senses a predetermined motion of the worker 400 by the body sensor 5023" (body imaging device 5024"). The learning unit 5663' learns a standard motion model corresponding to a predetermined motion of the worker 400 on the basis of the first sensing information corresponding to the predetermined motion of the worker 400. The control unit 5662' causes first humanoid robot 5020a to perform a reproduction motion once or more with reference to the standard motion model. The input unit 5665' receives input of information on an accident or a malfunction. Then, the detection unit 5666' detects the occurrence of an accident or malfunction on the basis of the second sensing information corresponding to the reproduction motion of the first humanoid robot 5020a acquired using head sensor 5023' (head imaging device 5024'). As a result, the first humanoid robot 5020a functioning as a work reproduction robot can reproduce the motion of the worker 400 at the time of occurrence of the abnormal situation, and the occurrence of the accident or the malfunction can be detected through the reproduction motion the work reproduction robot, and thus the cause of the abnormal situation can be easily clarified.

**In** addition, the work reproduction system 5100' causes the worker 400 to reproduce a motion at the time of occurrence of an abnormal situation, and then senses a predetermined motion of the worker 400 by the body sensor 5023" (body imaging device 5024"). The learning unit 5663' learns a standard motion model corresponding to a predetermined motion of the worker 400 on the basis of the first sensing information corresponding to the predetermined motion of the worker 400. The control unit 5662' causes first humanoid robot 5020a to perform a reproduction motion once or more with reference to the standard motion model. The detection unit 5666' detects the occurrence of a motion different from the work manual information or the process schedule information on the basis of the second sensing information corresponding to the reproduction motion of the first humanoid robot 5020a acquired using the head sensor 5023' (head imaging device 5024'). As a result, the first humanoid robot 5020a functioning as a work reproduction robot can reproduce the motion of the worker 400 at the time of occurrence of the abnormal situation, and a defect in the standard motion can be ascertained through the reproduction motion of the work reproduction robot.

### (Operation and Effect of Modified Example 1)

According to the present work reproduction system, the humanoid robot 5020' can constitute the work reproduction system alone, and thus the work reproduction system in which the cause of an abnormal situation can easily be clarified can be provided, for example, even in a place where communication with the management control device 5060 cannot be performed.

**In** addition, since the humanoid robot 5020' includes a plurality of (two in the present modified example) sensors (imaging devices), for example, it is possible to provide a work reproduction system in which the cause of an abnormal situation can be easily clarified even in a narrow place for the worker 400 and a work reproduction robot to be disposed in parallel to reproduce work.

**In** the present work reproduction system, the number of humanoid robots functioning as mobile robots is not necessarily one, and may be plural. **In** this case, as the number of humanoid robots increases, the number of sensors increases by a multiple of the number of humanoid robots, and a large amount of sensing information can be acquired at a time.

Although the embodiments of the present disclosure have been described above, the present disclosure is not limited to the above-described embodiments of the present disclosure, and various modifications and applications can be made without departing from the gist of the present disclosure.

**In** the work reproduction system 5100 of the present embodiment, the configuration in which one mobile robot is disposed for each of the worker 400 and the work reproduction robot has been described. However, the number of mobile robots may be equal to or greater than this. For example, when the number of mobile robots including sensors and moving mechanisms is large, a plurality of sensors can be disposed to sense a motion of the worker 400 and the motion reproduction robot from different positions, heights, and/or directions. As a result, various types of data necessary for learning the motions of the worker 400 and the work reproduction robot can be easily acquired, and sensing can be performed such that the motions of the worker 400 and the work reproduction robot can be entirely covered.

**In** addition, in the work reproduction system 5100 of the present embodiment, the configuration in which one mobile robot (humanoid robot) including a sensor and a moving mechanism senses each of the worker 400 and the work reproduction robot has been described. According to this configuration, the mobile robot can be used together for each sensing, and costs and time required for manufacturing the robot can be reduced. However, sensing of the worker 400 and sensing of the work reproduction robot may be performed by different mobile robots. Furthermore, each sensing may not be performed by the mobile robot.

**In** addition, in the present embodiment, it has been described that learning of a predetermined motion of the worker is performed by automatic learning. However, learning is not necessarily automatic learning, and may be other known machine learning, for example, deep learning, unsupervised/supervised learning, reinforcement learning, or the like.

### (Embodiment 6)

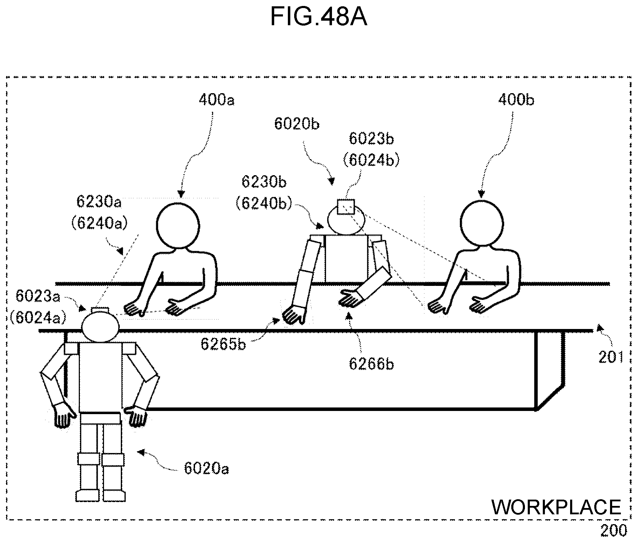

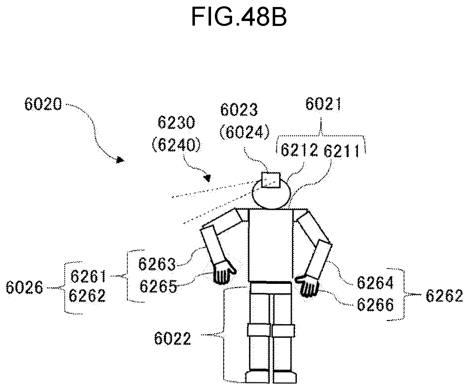

Fig. 48A and Fig. 48B are diagrams for describing a work proficiency system.

Fig. 48A is a diagram showing an example of a system configuration in a work proficiency system of embodiment 6 according to the present disclosure. The present work proficiency system includes a first humanoid robot 6020a functioning as a mobile robot and a second humanoid robot 6020b functioning as a work reproduction robot. The number of humanoid robots is not limited to two.

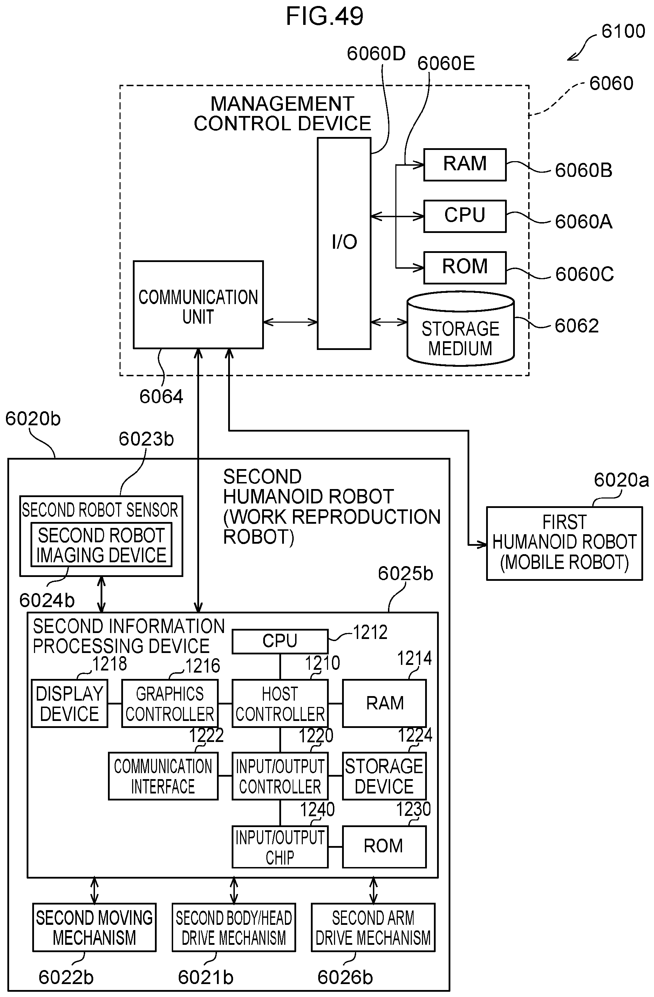

The first humanoid robot 6020a moves to the vicinity of a first worker 400a (skilled worker 400a) who works on the work line 201 in the workplace 200 in response to an instruction from a management control device 6060 (refer to Fig. 49) which will be described later or an instruction from an information processing device provided in the first humanoid robot 6020a. The skilled worker 400a is a worker who performs a predetermined motion as an example. The present work proficiency system senses the predetermined motion of the skilled worker 400a by a first robot sensor 6023a (first robot imaging device 6024a) provided in the first humanoid robot 6020a. Note that the predetermined motion is diverse, and examples thereof include assembling of parts, movement of parts, painting of products, and movement of a worker.

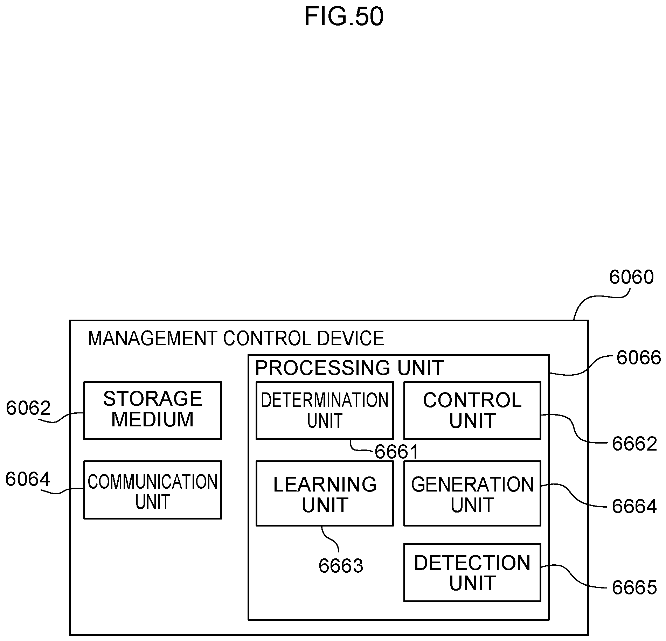

When the first robot sensor 6023a (first robot imaging device 6024a) senses the motion of the skilled worker 400a, the work proficiency system operates a first moving mechanism and a first body/head drive mechanism of the first humanoid robot 6020a such that the first robot sensor 6023a (first robot imaging device 6024a) senses the predetermined motion of the skilled worker 400a. For recognition of the predetermined motion of the skilled worker 400a by each sensor, a known image recognition technique may be used, or the predetermined motion of the skilled worker 400a may be recognized by learning using a learning unit 6663 (refer to Fig. 50).

The present work proficiency system stores a standard motion model learned on the basis of sensing information (first sensing information) corresponding to the predetermined motion of the skilled worker 400a. The standard motion model is a model representing a motion corresponding to the predetermined motion of the skilled worker 400a and designated as a motion to be performed in a predetermined work item.

The present work proficiency system causes the second humanoid robot 6020b to perform a reproduction motion with reference to the standard motion model. **In** addition, the present work proficiency system detects that a motion of the new worker 400b is different from the standard motion model on the basis of sensing information (second sensing information) corresponding to the motion of the new worker 400b acquired using the second robot sensor 6023b (second robot imaging device 6024b) that is a sensor capable of sensing the motion of the second worker 400b (new worker 400b). The new worker 400b is a worker to be trained in work.

According to the present work proficiency system, since the second humanoid robot 6020b is caused to perform the reproduction motion with reference to the standard motion model generated on the basis of the predetermined motion of the skilled worker 400a as an example, the second humanoid robot 6020b can execute the motion faithful to the work. That is, the reproduction motion of the second humanoid robot 6020b can play a role as an example. By referring to the reproduction motion of the second humanoid robot 6020b for another worker (new worker 400b), the work of the worker can be proficient.

Furthermore, in the present work proficiency system, the new worker 400b is caused to perform a predetermined motion as work, and the motion of the new worker 400b is sensed by the second robot sensor 6023b (second robot imaging device 6024b) of the second humanoid robot 6020b.

The present work proficiency system detects a point where the motion of the new worker 400b is different from the standard motion model on the basis of the sensing information (second sensing information) acquired by the second robot sensor 6023b (second robot imaging device 6024b). As a result, the work as an example of the skilled worker 400a can be compared with the work of the new worker 400b, and the work of the new worker 400b can be proficient.

As an example, in a case where it is desired to construct the same work line as a work line of a certain domestic factory in another factory (new factory) including overseas, according to the present work proficiency system, it is possible to send a work reproduction robot (second humanoid robot 6020b) that has learned the work of the domestic factory to the new factory and instruct the new worker of the new factory on the work.

Fig. 48B is a diagram showing an example of the humanoid robot shown in Fig. 48A. The humanoid robot 6020 functioning as a mobile robot and a work reproduction robot includes a robot main body 6021, a robot moving mechanism 6022, a robot sensor 6023, a robot imaging device 6024 included in robot sensor 6023, an information processing device 6025, and a robot arm 6026.

The humanoid robot 6020 can be moved by the robot moving mechanism 6022 provided below the robot main body 6021, and moves to the vicinity of the work line 201 in the workplace 200 or executes a work in response to an instruction from the outside of the humanoid robot 6020 such as the management control device 6060, or with reference to a program stored in the information processing device 6025.

The robot main body 6021 includes a robot body 6211 and a robot head 6212. The robot body 6211 and the robot head 6212 constitute a body/head drive mechanism, and a sensing region 6230 (imaging region 6240) of the robot sensor 6023 (robot imaging device 6024) can be changed. The configuration of the drive mechanism is not particularly limited, and for example, a servo motor (not illustrated) may rotate the robot head 6212 by a predetermined angle with respect to the robot body 6211 or rotate the robot body 6211 by a predetermined angle with respect to the robot moving mechanism 22.

The robot moving mechanism 6022 is provided below the robot body 6211, the robot arm 6026 is provided on a side of the robot body 6211, and the robot sensor 6023 is provided on the robot head 6212. Furthermore, the information processing device 6025 is provided inside the robot main body 6021.

The robot moving mechanism 6022 may have any configuration, and for example, the robot moving mechanism may be provided with a rotating body driven by a motor, or may have a configuration in which a shape of a leg portion is similar to that of a human leg. As an example, in a case where the robot moving mechanism 6022 is configured to resemble the shape of a human leg, a servo motor is provided at a location corresponding to a human joint, and the moving mechanism is configured by rotating the servo motor by a predetermined angle.

The robot sensor 6023 is preferably provided on the robot head 6212, and senses workers such as the skilled worker 400a and the new worker 400b. Further, the robot sensor 6023 sequentially acquires information indicating at least a distance and an angle between an object around the humanoid robot 6020 on which the humanoid robot 6020 works and the robot arm 6026. As an example of the robot sensor 6023, cameras with higher performance, thermo cameras, high-pixel/telephoto/ultra-wide angle/360-degree/high-performance cameras, a radar, a solid-state LiDAR, a LiDAR, a multi-color laser coaxial displacement meter, vision recognition, or various other sensors can be adopted. These are also examples of the robot imaging device 6024. Furthermore, other examples of the robot sensor 6023 include a vibratory meter, a hardness meter, a micro vibratory meter, an ultrasonic measuring device, a vibration measuring device, an infrared measuring device, an ultraviolet measuring device, an electromagnetic wave measuring device, a thermometer, a hygrometer, a spot AI weather forecast, a high-precision multi-channel GPS, low-altitude satellite information, long tail incident AI data, or the like.

Examples of the sensing information acquired from the robot sensor 6023 include an image, a distance, vibration, heat, an odor, a color, a sound, an ultrasonic wave, a radio wave, an ultraviolet ray, an infrared ray, humidity, and the like, and preferably, information on an image and a distance is acquired by the robot imaging device 6024. The robot sensor 6023 (robot imaging device 6024) performs such sensing every nanosecond as an example. The sensing information is used, for example, for analysis of motion capture of the motion of each worker, a 3D map of the workplace 200, navigation of movement and motion of each worker in the workplace 200, cornering, speed, and the like.

The robot arm 6026 includes a right arm 6261 and a left arm 6262. The right arm 6261 includes a right grip support portion 6263 and a right grip portion 6265, and the left arm 6262 includes a left grip support portion 6264 and a left grip portion 6266. The right grip support portion 6263 is a mechanism for supporting the right grip portion 6265, and the left grip support portion 6264 is a mechanism for supporting the left grip portion 6266, and as an example, the right grip support portion and the left grip support portion may be similar in shape to human arms. The grip portions 6265 and 6266 are, for example, mechanisms for gripping parts for work and the like, and may be, for example, similar to the shape of human hands.

The robot arm 6026 constitutes an arm drive mechanism. The configuration of the drive mechanism is not particularly limited, and for example, in a case where the robot arm 6026 resembles the shape of a person, a configuration in which a servo motor is provided at each joint location such as a location corresponding to a shoulder of the person, a location corresponding to an elbow, a location corresponding to a wrist, and a location corresponding to a finger joint, and is rotated by a predetermined angle may be adopted.

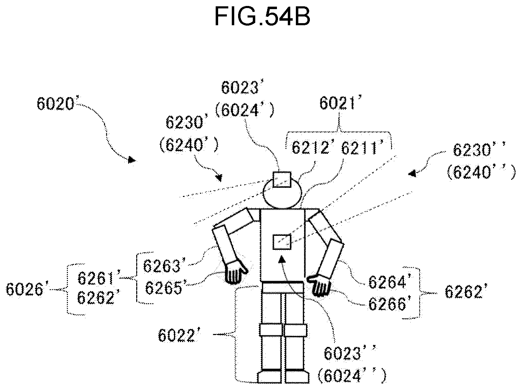

In the humanoid robot 6020, for example, a sensor may be further provided in the robot body 6211 (refer to Fig. 54B). In this case, the sensor is different in height position from the robot sensor 6023 provided on the robot head 6212. Since the height position is different, the sensor can sense the motion of each worker from a different angle.

Fig. 49 is a block diagram showing an example of a configuration and functions in the work proficiency system 6100 of the present embodiment.

The work proficiency system 6100 includes the first humanoid robot 6020a, the second humanoid robot 6020b, and the management control device 6060. The first humanoid robot 6020a and the second humanoid robot 6020b are connected to a communication unit 6064 of the management control device 6060 through wireless or wired communication, receive an instruction from the management control device 6060, and transmit information acquired by each sensor. The first humanoid robot 6020a and the second humanoid robot 6020b may also be connected to each other through wireless or wired communication to transmit and receive information and instructions acquired by the respective sensors.

The second humanoid robot 6020b functioning as a work reproduction robot includes a second robot moving mechanism 6022b, a second robot sensor 6023b, a second robot imaging device 6024b included in the second robot sensor 6023b, a second information processing device 6025b, a second body/head drive mechanism 6021b, a second moving mechanism 6022b, and a second arm drive mechanism 6026b. In the present embodiment, the second humanoid robot 6020b and the first humanoid robot 6020a functioning as a mobile robot have the same configuration.

The second information processing device 6025b according to the present embodiment includes a central processing unit (CPU) 1212, a random access memory (RAM) 1214, and a graphics controller 1216, which are mutually connected by a host controller 1210. The second information processing device 6025b also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The second information processing device 6025b also includes a read only memory (ROM) 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the second information processing device 6025b. Furthermore, the storage device 1224 may store sensing information. The DVD drive reads a program or data from a DVD-ROM or the like and provides the program or data to the storage device 1224. The IC card drive reads a program and data from an IC card and/or writes a program and data to the IC card.

The ROM 1230 stores therein a boot program and the like executed by the second information processing device 6025b at the time of activation, and/or a program depending on hardware of the second information processing device 6025b. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. Programs are read from a computer-readable storage medium, installed in the storage device 1224, the RAM 1214, or the ROM 1230, which is also an example of a computer-readable storage medium, and executed by the CPU 1212. Information processing described in such programs is read by the second information processing device 6025b, and provides cooperation between the programs and the various types of hardware resources. A device or a method may be configured by realizing operation or processing of information according to use of the second information processing device 6025b.

For example, in a case where communication is executed between the second information processing device 6025b and an external device, the CPU 1212 may execute a communication program loaded in the RAM 1214 and command the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to a network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute, on data read from the RAM 1214, various types of processing including various types of operations, information processing, condition determination, conditional branching, unconditional branching, information retrieval/replacement, and the like, which are described throughout the present disclosure and specified by a command sequence of a program, and write back results to the RAM 1214. In addition, the CPU 1212 may search for information in a file, a database, or the like in a recording medium.

The program or software module described above may be stored in a computer-readable storage medium on or near the second information processing device 6025b. Furthermore, a recording medium such as a hard disk or a RAM provided in a server system connected to a dedicated communication network or the Internet can be used as a computer-readable storage medium, thereby providing the program to the second information processing device 6025b via the network.

The content described so far is similar for the first information processing device of the first humanoid robot 6020a.

The management control device 6060 is a control device that gives an instruction to the humanoid robots 6020a and 6020b in order to realize the work proficiency system 6100. The management control device 6060 acquires sensing information accumulated in each storage device of the humanoid robots 6020a and 6020b.

The management control device 6060 includes a CPU 6060A, a RAM 6060B, a ROM 6060C, an input/output unit (I/O) 6060D, a bus 6060E such as a data bus or a control bus connecting the components, and a communication unit 6064. A storage medium 6062 is connected to the I/O 6060D.

Further, the communication unit 6064 that transmits/receives sensing information, work manual information, process schedule information, and the like to/from the control system of the humanoid robot 6020 is connected to the I/O 6060D. The work manual information includes, for example, a name and content of each work item, an order of work items, information of a standard work time required for each work item, and the like. In addition, the process schedule information includes, for example, information indicating a work time and a start time/end time of the entire work, information indicating a work time and a start time/end time of each work item, information indicating a worker of each work item, and the like.

Fig. 50 is a block diagram showing an example of functions of the management control device 6060 in the work proficiency system of the present embodiment.

The management control device 6060 includes the storage medium 6062, the communication unit 6064, and a processing unit 6066.

The storage medium 6062 includes, for example, at least one of a semiconductor storage device, a magnetic tape device, a magnetic disk device, or an optical disk device. The storage medium 6062 stores a driver program, an operating system program, an application program, data, and the like used for processing in the processing unit 6066. For example, the storage medium 6062 stores sensing information. In addition, the storage medium 6062 stores work manual information of a worker and/or process schedule information.

The communication unit 6064 includes a wireless communication interface circuit such as Wi-Fi (registered trademark) and/or a wired communication interface circuit such as Ethernet (registered trademark). The communication unit 6064 transmits/receives various types of information to/from the humanoid robots 6020a and 6020b through an interface circuit.

The processing unit 6066 includes one or a plurality of processors and peripheral circuits thereof. The processing unit 6066 integrally controls the overall operation of the work proficiency system 6100, and is, for example, a CPU. The processing unit 6066 executes processing with reference to programs (a driver program, an operating system program, an application program, etc.) stored in the storage medium 6062. In addition, the processing unit 6066 can execute a plurality of programs (application programs and the like) in parallel.

The processing unit 6066 includes a determination unit 6661, a control unit 6662, a learning unit 6663, a generation unit 6664, and a detection unit 6665. Each of these units is a functional module realized by a program executed by a processor included in the processing unit 6066. Alternatively, these units may be implemented in the processing unit 6066 as firmware.

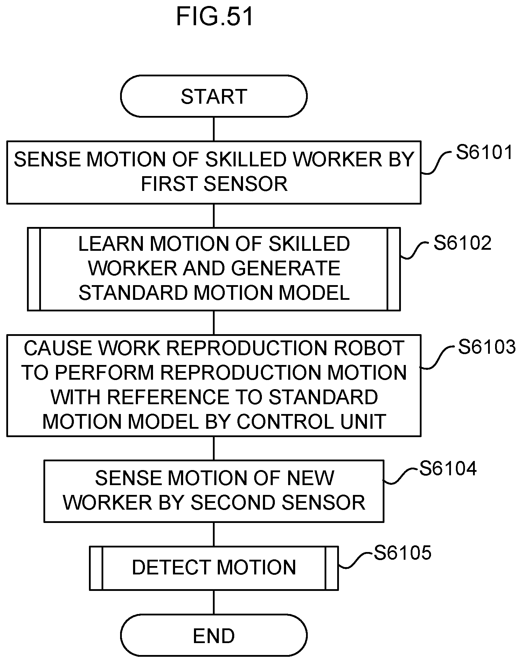

The determination unit 6661 determines whether or not sensing targets (the skilled worker 400a and the new worker 400b) are sensed. As a determination method, a known image recognition technique may be used, or learning using the learning unit 6663 (refer to Fig. 51) may be used.

The control unit 6662 causes the second robot 6020b to perform a reproduction motion with reference to a standard motion model. In addition, in a case where it is determined that sensing targets are not sensed, the control unit 6662 operates the body/head drive mechanism 6021 and the robot moving mechanism 6022 of the humanoid robot 6020.

The learning unit 6663 learns the standard motion model on the basis of the first sensing information corresponding to the predetermined motion of the skilled worker 400a. The first sensing information is acquired by the first robot sensor 6023a (first robot imaging device 6024a) sensing the skilled worker 400a. Note that learning of the learning unit 6663 is performed, for example, by automatic learning that is learning for automatically creating a trained model or automatically performing determination/analysis using the trained model.

The generation unit 6664 generates a standard motion model with reference to the learning result of the learning unit 6663. Furthermore, the generation unit 6664 generates each sensing instruction and alarm instruction which will be described later.

The detection unit 6665 detects a point where the motion of the new worker 400b is different from the standard motion model on the basis of the second sensing information corresponding to the motion of the new worker 400b acquired using the second robot sensor 6023b (second robot imaging device 6024b). The detection unit 6665 detects a point where the motion of the new worker 400b is different from the work manual information or the process schedule information on the basis of the sensing information corresponding to the motion of the new worker 400b acquired using the second robot sensor 6023b (second robot imaging device 6024b). Note that examples of a detection target include a difference in change of each piece of information (data) over time, a significant deviation between pieces of data when the pieces of data are compared, and the like.

### (Processing of Work Proficiency System of Embodiment 6 According to Present Disclosure)

Fig. 51 is an example of a flowchart showing processing of the work proficiency system of the present embodiment. The processing is executed in cooperation with each element of the work proficiency system 6100 (the management control device 6060, the first humanoid robot 6020a, and the second humanoid robot 6020b) mainly by the processing unit 6066 of the management control device 6060 with reference to a control program stored in advance in the storage medium 6062, the storage device of the first information processing device, and/or the storage device 1224 of the second information processing device 6025b.

As a premise that the processing illustrated in Fig. 51 is started, the first information processing device instructs the first humanoid robot 6020a functioning as a mobile robot to move to the workplace 200 according to an instruction of the processing unit 6066 or an instruction to read a program stored in the storage medium 6062 or the storage device of the first information processing device. The movement is performed by the operation of the first robot moving mechanism 6022 of the first humanoid robot 6020a.

At the time of movement, an instruction is given such that each sensing region 6230 (imaging region 6240) of the first robot sensor 6023a (first robot imaging device 6024a) can sense a predetermined motion of the skilled worker 400a. Such disposition of first humanoid robot 6020a is performed, for example, by storing a floor diagram of the workplace 200 in advance in the storage medium 6062 or the storage device of the first information processing device, and associating the position a of the first humanoid robot 6020 with the stored floor diagram. Alternatively, the disposition of position a of the first humanoid robot 6020 may be based on a position optimized through machine learning.

First, the management control device 6060 instructs to sense a predetermined motion of the skilled worker 400a on the work line 201 using the first robot sensor 6023a (first robot imaging device 6024a) (step S6101). Specifically, for the purpose of sensing a predetermined motion of the skilled worker 400a, the generation unit 6664 generates a first sensing instruction for operating the first robot sensor 6023a (first robot imaging device 6024a) of the first humanoid robot 6020a and the first robot moving mechanism and/or the first body/head drive mechanism, and transmits the first sensing instruction to the first information processing device via the communication unit 6064. The CPU of the first information processing device receives the first sensing instruction via the communication interface of the first information processing device, and activates a program for operating the first robot sensor 6023a (first robot imaging device 6024a) and the first robot moving mechanism and/or the first body/head drive mechanism.

The storage unit stores sensing information (first sensing information) acquired by the first robot sensor 6023a (first robot imaging device 6024a). Note that the storage device of the first information processing device and the storage device 1224 and the storage medium 6062 of the second information processing device 6025b function as storage units. **In** particular, in a case where the storage medium 6062 functions as a storage unit, the communication unit 6064 acquires sensing information acquired using each sensor (imaging device) via the communication interface of each information processing device, and the storage medium 6062 stores the sensing information acquired by the communication unit 6064 via the I/O 6060D.

The processing unit 6066 learns and generates a standard motion model on the basis of the first sensing information accumulated, in other words, stored, in the storage unit (step S6102). Since the first sensing information is sensing information corresponding to the predetermined motion of the skilled worker 400a, learning based on the first sensing information has the same meaning as learning of the predetermined motion of the skilled worker.

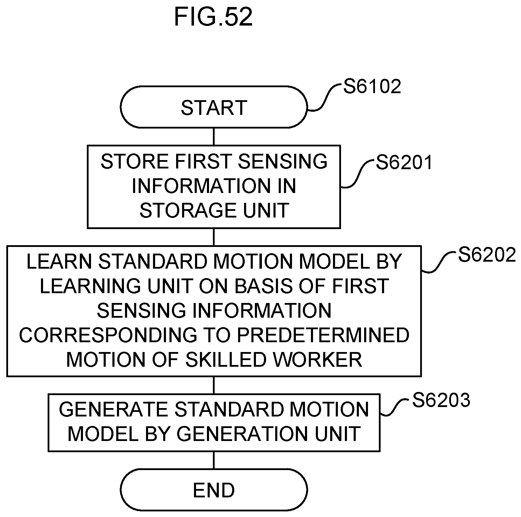

Fig. 52 is an example of a flowchart showing more detailed processing of the worker motion learning and model generation processing shown in step S6102 of Fig. 51.

As described above, the storage unit stores the acquired first sensing information (step S6201), and the learning unit 6663 learns a standard motion model on the basis of the first sensing information stored in the storage unit (step S6202). **In** the learning, motion capture of the motion of the skilled worker 400a, a 3D map of the workplace 200, navigation of movement and motion of the skilled worker 400a in the workplace 200, cornering, speed, and the like are analyzed, and an optimal motion of the humanoid robot 6020 that can also function as a work reproduction robot is learned by automatic learning. As a result, it is possible to analyze the predetermined motion of the skilled worker 400a from multiple aspects at a time, and it is possible to reduce the time required and costs for the motion analysis of the skilled worker 400a and programming.

The generation unit 6664 generates a standard motion model with reference to the learning result of the learning unit 6663 (step S6203).

Referring back to Fig. 51, the control unit 6662 causes the second humanoid robot 6020b to perform the reproduction motion with reference to the standard motion model (step S6103). As a result, the second humanoid robot 6020b can execute the reproduction motion as an example of another worker (new worker 400b).

Next, after the new worker 400b, who is a worker to be trained in the work, is caused to perform a predetermined motion, the management control device 6060 instructs the motion of the new worker 400b to be sensed using the second robot sensor 6023b (second robot imaging device 6024b) (step S6104). Specifically, for the purpose of sensing the motion of the new worker 400b, the generation unit 6664 generates a second sensing instruction for operating the second robot sensor 6023b (second robot imaging device 6024b) of the second humanoid robot 6020b and the second robot moving mechanism 6022b and/or the second body/head drive mechanism 6021b, and transmits the second sensing instruction to the second information processing device 6025b via the communication unit 6064. The CPU 1212 of the second information processing device receives the second sensing instruction via the communication interface 1222, and activates a program for operating the second robot sensor 6023b (second robot imaging device 6024b) of the second humanoid robot 6020b and the second robot moving mechanism 6022b and/or the second body/head drive mechanism 6021b.

The detection unit 6665 detects a point where the motion of the new worker 400b is different from the standard motion model on the basis of the second sensing information corresponding to the motion of the new worker 400b acquired using the second robot sensor 6023b (second robot imaging device 6024b) (step S6105). As a result, it is possible to check whether or not the motion of the new worker 400b to be trained in the work is different from the motion as an example.

Note that the generation unit 6664 may generate a detection result output instruction, which is an instruction to output a detection result, with reference to the detection result of the detection unit 6665. The method of outputting the detection result in this case is not particularly limited, and for example, an alarm device (buzzer) may be provided in the humanoid robot 6020 or the management control device 6060 to operate the alarm device, or a display function may be provided in the humanoid robot 6020b and the management control device 6060 to indicate a different point in the motion according to the display function.

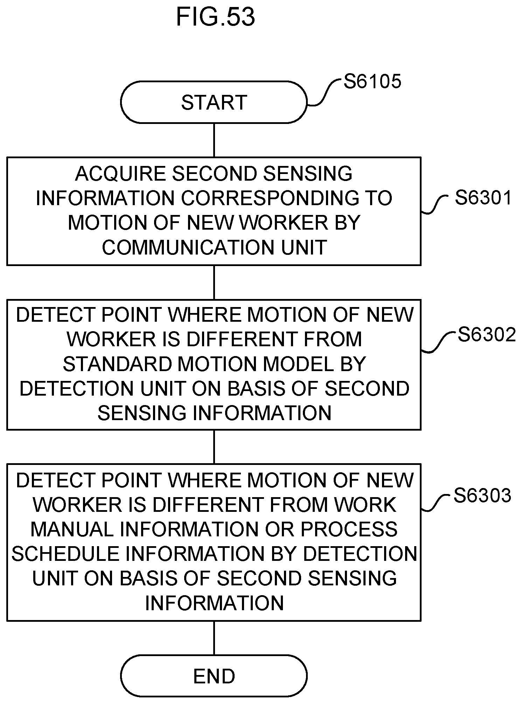

Fig. 53 is an example of a flowchart showing more detailed processing of motion detection processing shown in step S6105 of Fig. 51.

The communication unit 6064 acquires the second sensing information via the communication interface 1222 of the second information processing device 6025b (step S6301). The second sensing information is sensing information acquired by the second robot sensor 6023b (second robot imaging device 6024b), and is sensing information corresponding to the motion of the new worker 400b.

The detection unit 6665 detects a point where the motion of the new worker 400b is different from the standard motion model on the basis of the second sensing information acquired via the communication unit 6064 (step S6302).

In addition, the detection unit 6665 detects a point where the motion of the new worker 400b is different from the work manual information or the process schedule information on the basis of the second sensing information acquired via the communication unit 6064 (step S6303). The work manual information or the process schedule information is information indicating a motion or an order that is originally appropriate. Therefore, by comparing the motion of the new worker 400b with the work manual information or the process schedule information, it is easier to check a malfunction of the new worker 400b.

When a different point is detected between the motion of the new worker 400b and the standard motion model, the work manual information, or the process schedule information, the generation unit 6664 may generate an alarm instruction to issue an alarm. As a result, when the motion of the new worker 400b is different from the predetermined motion as an example, the new worker 400b can more easily ascertain the difference. The alarm method is not particularly limited, and for example, as described above, an alarm device may be provided in the humanoid robot 6020 or the management control device 6060 to operate the alarm device, or a display function may be provided in the humanoid robot 6020 or the management control device 6060 to issue an alarm by the display function.

When a different point is detected between the motion of the new worker 400b and the standard motion model, the work manual information or the process schedule information, the control unit 6662 may cause the second humanoid robot 6020b to perform the reproduction motion again with reference to the standard motion model. As a result, in a case where the motion of the new worker 400b is different from the predetermined motion as an example, the new worker 400b can be caused to confirm the predetermined motion as an example again through the reproduction motion of the second humanoid robot 6020b, and the work of the new worker 400b can be proficient.

### (Operation and Effect of Work Proficiency System According to Embodiment 6)

According to the work proficiency system 6100 according to the present embodiment, the standard motion model is learned on the basis of the sensing information corresponding to the predetermined motion of the skilled worker 400a as an example of work, and the work reproduction robot operates with reference to the standard motion model. As a result, the work reproduction robot performs a predetermined motion as an example, and the motion of the work reproduction robot is referred to by a worker, and thus it is possible to train the worker to perform the work.

In particular, according to the work proficiency system 6100 according to the present embodiment, a point where the motion of the new worker 400b is different from the standard motion model is detected on the basis of the second sensing information. As a result, it is possible to ascertain that the motion of the new worker 400b is different from a desired motion.

**In** addition, according to the work proficiency system 6100 according to the present embodiment, a point where the motion of the new worker 400b is different from the work manual information or the process schedule information is detected on the basis of the second sensing information. The skilled worker 400a performs a predetermined motion as an example in principle, but does not always perform a motion faithfully to the work, and may perform an unnecessary motion or omit a necessary motion in some cases. Therefore, it is possible to guide the motion of the new worker 400b to a more desirable motion by detecting a difference in comparison with the work manual information and the process schedule information, which are information indicating the motion and order originally determined to be appropriate.

### (Modified Example 1 of Embodiment 6)

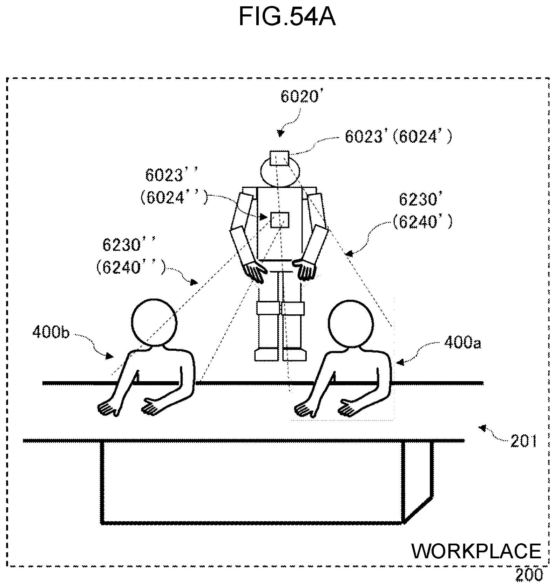

Fig. 54A and Fig. 54B are diagrams showing an example of a work proficiency system according to modified example 1 of the present embodiment.

Fig. 54A is a diagram showing an example of a system configuration in the work proficiency system according to modified example 1 of embodiment 6 according to the present disclosure. The present work proficiency system is characterized in that a body sensor 6023" (body imaging device 6024") is provided in a humanoid robot 6020' functioning as a mobile robot and a work reproduction robot. **In** the present work proficiency system, the management control device 6060 is not necessarily required, and the humanoid robot 6020' can constituted the work proficiency system alone.

Fig. 54B is a diagram showing an example of the humanoid robot shown in Fig. 54A. The humanoid robot 6020' functioning as a mobile robot and a work reproduction robot includes a robot main body 6021', a robot moving mechanism 6022', a head sensor 6023', a head imaging device 6024' included in the head sensor 6023', a body sensor 6023", a body imaging device 6024" included in the body sensor 6023", an information processing device 6025', and a robot arm 6026'.

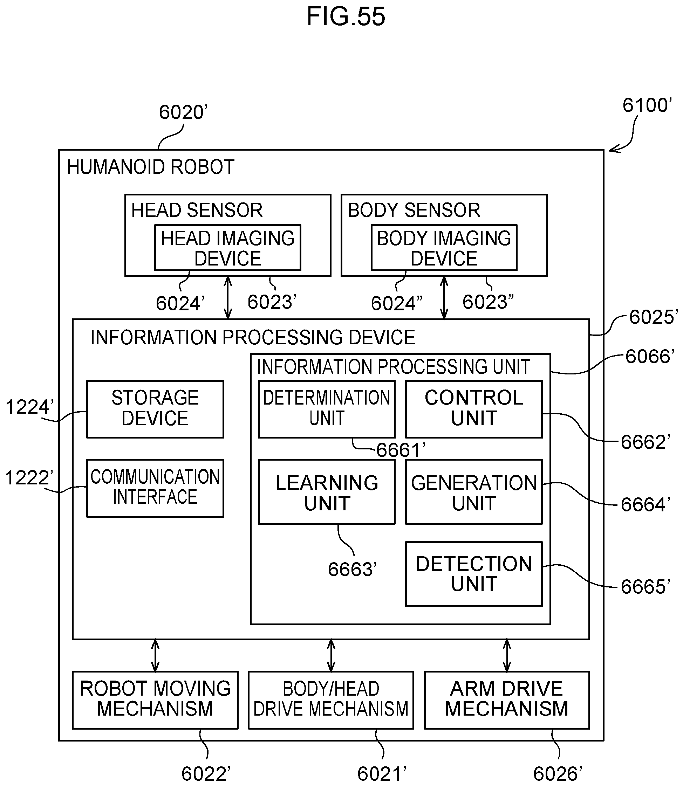

The robot main body 6021' includes a robot body 6211' and a robot head 6212'. The robot body 6211' and the robot head 6212' constitute a body/head drive mechanism 6021' (refer to Fig. 55), and the sensing region 6230' (imaging region 6240') of the head sensor 6023' (head imaging device 6024') and the sensing region 6230" (imaging region 6240") of the body sensor 6023" (body imaging device 6024") can be changed.

The head sensor 6023' (head imaging device 6024') senses the skilled worker 400a, and the body sensor 6023" (body imaging device 6024") senses the new worker 400b. Since the head sensor 6023' (head imaging device 6024') and the body sensor 6023" (body imaging device 6024") are disposed at different height positions, the body sensor 6023" (body imaging device 6024") senses each predetermined motion of a sensing target at a position different from the head sensor 6023' (head imaging device 6024'). Note that the configurations of the sensing target of the head sensor 6023' (head imaging device 6024') and the sensing target of the body sensor 6023d (body imaging device 6024d) may be reversed.

The information processing device 6025' is configured similarly to the second information processing device 6025b of the second humanoid robot 6020b. The robot arm 6026' is similar to that of the second humanoid robot 6020b.

Fig. 55 is a block diagram showing an example of functions of the humanoid robot in the present work proficiency system. **In** the work proficiency system 6100', the information processing device 6025' includes an information processing unit 6066', a communication interface 1222', and a storage device 1224', and the information processing unit 6066' includes a determination unit 6661', a control unit 6662', a learning unit 6663', a generation unit 6664', and a detection unit 6665'. That is, in the work proficiency system 6100', the information processing unit 6066' performs processing similar to the processing unit 6066 of the management control device 6060. Note that the information processing device 6025' is configured to be able to communicate with the head sensor 6023' (head imaging device 6024'), the body sensor 6023" (head imaging device 6024"), the body head drive mechanism 6021', the robot moving mechanism 6022', and the arm drive mechanism 6026'.

**In** the humanoid robot 6020' of the work proficiency system 6100', the information processing unit 6066' is provided in the information processing device 6025', and thus the humanoid robot 6020' constitutes the work proficiency system alone.

Referring also to Fig. 54, in the present work reproduction system, the humanoid robot 6020' includes the information processing device 6025' capable of communicating with the head sensor 6023' (head imaging device 6024') that is a sensor capable of sensing a predetermined motion of the skilled worker 400a and the body sensor 6023' (body imaging device 6024') that is a sensor capable of sensing a motion of the new worker 400b, the head sensor 6023' (head imaging device 6024') senses the skilled worker 400b, and the body sensor 6023d (body imaging device 6024d) senses the new worker 400b. Specifically, for the purpose of sensing a predetermined motion of the skilled worker 400a and a motion of the new worker 400b, the generation unit 664' generates a third sensing instruction to operate the head sensor 6023' (head imaging device 6024'), the body sensor 6023" (body imaging device 6024"), the robot moving mechanism 6022' and/or the body/head drive mechanism 6021'. The control unit 6662' activates a program for operating each mechanism with reference to the third sensing instruction.

The communication interface 1222' acquires sensing information acquired by each sensor (each imaging device) and transmits the sensing information to the information processing unit 6066'. The learning unit 6663' learns a standard motion model on the basis of the first sensing information acquired using the head sensor 6023' (head imaging device 6024'). The generation unit 6664' generates a standard motion model with reference to the learning result of the learning unit 6663'. The storage device (storage unit) 1224' stores the standard motion model generated by the generation unit 6664'.

The control unit 6662' can cause the humanoid robot 6020' to perform a reproduction motion with reference to the standard motion model stored in the storage device 1224'. Furthermore, the detection unit 6665' detects a point where the motion of the new worker 400b is different from the standard motion model on the basis of the second sensing information corresponding to the motion of the new worker 400b acquired using the body sensor 6023d (body imaging device 6024d).

**In** addition, the storage unit 1224' stores the work manual information or the process schedule information, and the detection unit 6665' detects a point where the motion of the new worker 400b is different from the work manual information or the process schedule information stored in the storage device 1224' on the basis of the second sensing information corresponding to the motion of the new worker 400b acquired using the body sensor 6023d (the body imaging device 6024d).

### (Operation and Effect of Modified Example 1)

According to the present work proficiency system, the humanoid robot 6020' can constitute the work proficiency system alone, and thus, for example, even in a place where communication with the management control device 6060 cannot be performed, it is possible to perform sensing of each worker and a reproduction motion serving as an example.

**In** addition, since the humanoid robot 6020' includes a plurality of (two in the present modified example) sensors (imaging devices), for example, even in a narrow place for sensing each worker, it is possible to perform sensing of each worker and a reproduction motion serving as an example.

**In** addition, according to the present work proficiency system, it is possible to simultaneously perform an action of sensing and learning a predetermined motion of the skilled worker 400a as an example on the one hand, and sensing a motion of the new worker 400b as a training target on the other hand, and detecting a point different from the standard motion model using an integrated work reproduction robot in parallel. As a result, even in an environment where the skilled worker 400a and the new worker 400b work simultaneously, the new worker 400b can be trained to perform the work without taking up unnecessary space.

**In** the present work proficiency system, the number of humanoid robots functioning as a mobile robot and a work reproduction robot is not necessarily one, and may be plural. **In** this case, as the number of humanoid robots increases, the number of sensors increases by a multiple of the number of humanoid robots, and a large amount of sensing information can be acquired at a time.

Although the embodiments of the present disclosure have been described above, the present disclosure is not limited to the above-described embodiments of the present disclosure, and various modifications and applications can be made without departing from the gist of the present disclosure.

**In** the present work proficiency system 6100 of the present embodiment, it has been described that one humanoid robot including a sensor is disposed for each worker. However, the number of humanoid robots including a sensor may be two or more for each worker. For example, when the number of humanoid robots including a sensor is large, the plurality of sensors can be disposed to sense each motion of each worker from different positions, heights, and/or directions. As a result, it becomes easy to acquire various types of data necessary for learning each motion of each worker, and sensing can be performed such that each predetermined part of each worker can be entirely covered.

**In** the present embodiment, it has been described that the skilled worker 400a and the new worker 400b are present in the same work line 201. However, the skilled worker 400a and the new worker 400b may be present in different places, and the humanoid robots that sense the workers may also be disposed in different places.

**In** the present embodiment, it has been described that learning of the predetermined motion of the skilled worker 400a is performed by automatic learning. However, learning is not necessarily automatic learning, and may be other known machine learning, for example, deep learning, unsupervised/supervised learning, reinforcement learning, or the like.

**In** the present embodiment, the configuration in which the second humanoid robot 6020b functioning as a work reproduction robot senses the new worker 400b has been described. According to this configuration, the number of humanoid robots can be reduced, and costs for manufacturing the robot can be saved. However, a humanoid robot functioning as a work reproduction robot and a humanoid robot that senses the new worker 400b may be separately provided.

**In** the present embodiment, the mobile robot and the work reproduction robot are the same humanoid robot. **In** this case, it is possible to use the mobile robot together with the work reproduction robot, and it is possible to save costs related to robot manufacturing. However, the mobile robot and the work reproduction robot may be different robots.

In the present embodiment, a humanoid robot including a sensor (imaging device), a moving mechanism, and a drive mechanism is adopted for sensing of each worker. According to this, the moving mechanism and the drive mechanism can be operated in accordance with a predetermined motion of a worker, and the sensing region (imaging device) can be caused to follow the predetermined motion of the worker. However, as long as each worker can be sensed, the humanoid robot including the moving mechanism and the drive mechanism may not be adopted.

In the present embodiment, the configuration in which the second humanoid robot 6020b is caused to perform the reproduction motion with reference to the standard motion model (S6103), and then the motion is detected (S6105) has been described. However, the processing of S6103 and the processing of S6105 are not necessarily in this order, and the processing of S6103 may be performed after the processing of S6105.

In the first modified example, description has been given assuming that the work reproduction robot (humanoid robot 6020') constituting the work proficiency system alone includes the sensor. However, the work reproduction robot only needs to include an information processing device capable of communicating with a sensor capable of sensing a motion of a worker, and does not necessarily need to include the sensor.

It should be noted that the terms "skilled" and "new" should not be construed as limiting. For example, if there is a difference in work proficiency between a first worker and a second worker, such as the first worker having a higher work proficiency level than the second worker, sensing information acquired by sensing a predetermined motion of the first worker corresponds to "first sensing information corresponding to a predetermined motion of a skilled worker," and sensing information acquired by sensing a motion of the second worker corresponds to "second sensing information corresponding to a motion of a new worker."

The disclosure of Japanese Patent Application No. 2022-167221 filed on October 18, 2022, the disclosure of Japanese Patent Application No. 2022-178895 filed on November 8, 2022, the disclosure of Japanese Patent Application No. 2022-180376 filed on November 10, 2022, the disclosure of Japanese Patent Application No. 2022-182641 filed on November 15, 2022, the disclosure of Japanese Patent Application No. 2022-184345 filed on November 17, 2022, and the disclosure of Japanese Patent Application No. 2022-184856 filed on November 18, 2022 are incorporated herein by reference in their entirety.

### Description of Reference Numerals

- 100: Work robot adjustment system
- 200: Workplace
- 201: Work line
- 400: Worker
- 20: Humanoid robot (mobile robot, work robot)
- 23: Robot sensor
- 24: Robot imaging device
- 25: Information processing device
- 30: Sensor mounting member
- 33: Mounting member sensor
- 34: Mounting member imaging device
- 60: Management control device

## Claims

1. A work robot adjustment method comprising:
moving a mobile robot having a sensor to an environment in which a worker performs a motion;
recording the motion of the worker by using the sensor;
learning the motion of the worker on the basis of the record;
causing a work robot to perform the same motion as the motion of the worker on the basis of the learning; and
performing adjustment such that the motion of the worker matches the motion of the work robot.

2. The work robot adjustment method according to claim 1, wherein the mobile robot and the work robot are the same robot.

3. The work robot adjustment method according to claim 1 or 2,
wherein the sensor includes an imaging device, and
wherein the imaging device is disposed at a position higher than the mobile robot.

4. A sensing system comprising:
a first sensor for sensing a predetermined motion of a sensing target;
a second sensor for sensing a predetermined motion of the sensing target at a position different from a position of the first sensor;
a first mobile robot including the first sensor and a first moving mechanism; and
a management control device capable of communicating with the first sensor, the second sensor, and the first moving mechanism,
wherein the management control device includes:
a determination unit configured to determine whether or not a predetermined part movable by the sensing target during a predetermined motion is sensed from first information acquired by the first sensor and second information acquired by the second sensor; and
a control unit configured to operate the first moving mechanism such that the predetermined part is sensed in a case in which the determination unit determines that the predetermined part is not sensed.

5. The sensing system according to claim 4,
wherein the second sensor is disposed in a second mobile robot including a second moving mechanism, and
the control unit operates the first moving mechanism and the second moving mechanism such that the predetermined part is sensed in a case which the determination unit determines that the predetermined part is not sensed.

6. The sensing system according to claim 5, wherein the control unit operates the first moving mechanism such that the first sensor senses a part of the predetermined part, and operates the second moving mechanism such that the second sensor senses another part of the predetermined part.

7. The sensing system according to any one of claims 4 to 6, further comprising
a work robot,
wherein the management control device further includes:
a storage unit configured to store the first information and the second information;
a learning unit configured to learn the predetermined motion with reference to the first information and the second information stored in the storage unit; and
a motion information generation unit configured to generate motion information for giving a motion instruction to the work robot with reference to a learning result of the learning unit.

8. The sensing system according to claim 7,
wherein the storage unit stores in advance work manual information of the sensing target or process schedule information, and
the motion information generation unit generates motion information for giving a motion instruction to the work robot with reference to a learning result of the learning unit and work manual information of the sensing target or process schedule information.

9. A sensing method comprising:
a first sensor for sensing a predetermined motion of a sensing target;
a second sensor for sensing a predetermined motion of the sensing target at a position different from a position of the first sensor;
a first mobile robot including the first sensor and a first moving mechanism; and
a management control device capable of communicating with the first sensor, the second sensor, and the first moving mechanism,
wherein the management control device is configured to:
determine whether or not a predetermined part movable by the sensing target during a predetermined motion is sensed from first information acquired by the first sensor and second information acquired by the second sensor; and
operate the first moving mechanism such that the predetermined part is sensed in a case in which it is determined that the predetermined part is not sensed according to the determination.

10. A sensing system comprising:
a first sensor for sensing a predetermined motion of a sensing target;
a second sensor for sensing a predetermined motion of the sensing target at a position different from a position of the first sensor;
a first mobile robot including the first sensor and a first moving mechanism; and
a management control device capable of communicating with the first sensor, the second sensor, and the first moving mechanism,
wherein the management control device includes:
a determination unit configured to determine whether or not a predetermined part movable by the sensing target during a predetermined motion is sensed from first information acquired by the first sensor and second information acquired by the second sensor, and to determine whether or not the predetermined part sensed by the first sensor is the same as the predetermined part sensed by the second sensor; and
a control unit configured to operate the first moving mechanism such that the predetermined part sensed by the first sensor is different from the predetermined part sensed by the second sensor in a case in which it is determined that the predetermined part sensed by the first sensor is the same as the predetermined part sensed by the second sensor.

11. A mobile robot comprising:
a moving mechanism;
a first sensor configured to sense a sensing target;
a second sensor configured to sense the sensing target at a position different from a position of the first sensor;
a drive mechanism capable of moving the position of the second sensor; and
an information processing unit configured to control the first sensor, the second sensor, the moving mechanism, and the drive mechanism,
wherein the information processing unit includes:
a determination unit configured to determine whether or not a predetermined part movable by the sensing target during a predetermined motion is sensed from first information acquired by the first sensor and second information acquired by the second sensor; and
a control unit configured to operate the moving mechanism or the drive mechanism such that the predetermined part is sensed in a case in which the determination unit determines that the predetermined part hsa not sensed.

12. A mobile robot comprising:
a moving mechanism;
a first sensor configured to sense a sensing target;
a second sensor configured to sense the sensing target at a position different from a position of the first sensor;
a drive mechanism capable of moving the position of the second sensor; and
an information processing unit configured to control the first sensor, the second sensor, the moving mechanism, and the drive mechanism,
wherein the information processing unit includes:
a determination unit configured to determine whether or not a predetermined part movable by the sensing target moves during a predetermined motion is sensed from first information acquired by the first sensor and second information acquired by the second sensor, and to determine whether or not a predetermined part sensed by the first sensor is the same as a predetermined part sensed by the second sensor; and
a control unit configured to operate the moving mechanism or the drive mechanism such that the predetermined part sensed by the first sensor is different from the predetermined part sensed by the second sensor in a case in which it is determined that the predetermined part sensed by the first sensor is the same as the predetermined part sensed by the second sensor.

13. A sensing system comprising:
a first sensor for sensing a predetermined motion of a sensing target;
a work robot configured to operate according to a motion instruction;
a second sensor for sensing a robot motion of the work robot; and
a management control device capable of communicating with the first sensor, the second sensor, and the work robot,
wherein the management control device includes:
a learning unit configured to learn the predetermined motion with reference to first information acquired by the first sensor;
a motion information generation unit configured to generate motion control information for giving the motion instruction to the work robot with reference to a result of learning of the predetermined motion by the learning unit; and
an adjustment unit configured to compare the first information with second information acquired by the second sensor, and to adjust the motion control information such that the robot motion of the work robot approximates the predetermined motion.

14. The sensing system according to claim 13, wherein the management control device simultaneously performs acquisition of the first information by the first sensor and acquisition of the second information by the second sensor.

15. The sensing system according to claim 13, wherein the management control device separately performs acquisition of the first information by the first sensor and acquisition of the second information by the second sensor.

16. The sensing system according to any one of claims 13 to 15, wherein the management control device further includes a storage unit configured to store the first information, the second information, and work manual information related to the predetermined motion,
wherein the motion information generation unit generates the motion control information with reference to the result of learning of the predetermined motion by the learning unit and the work manual information.

17. The sensing system according to claim 16, wherein the motion information generation unit does not adopt a result of learning of the predetermined motion by the learning unit, which result of lerning contradicting the work manual information, when generating the motion control information.

18. The sensing system according to claim 13, wherein the first sensor or the second sensor is disposed in a mobile robot including a moving mechanism, and the mobile robot is able to communicate with the management control device.

19. A sensing method comprising:
a first sensor for sensing a predetermined motion of a sensing target;
a work robot being operated according to a motion instruction;
a second sensor for sensing a robot motion of the work robot; and
a management control device capable of communicating with the first sensor, the second sensor, and the work robot,
wherein the management control device is configured to:
learn the predetermined motion with reference to first information acquired by the first sensor;
generate motion control information for giving the motion instruction to the work robot with reference to a result of learning of the predetermined motion according to the learning; and
compare the first information with second information acquired by the second sensor, and adjust the motion control information such that the robot motion of the work robot approximates the predetermined motion.

20. A work robot operating according to a motion instruction, comprising:
a first sensor for sensing a predetermined motion of a sensing target;
a second sensor for sensing a robot motion of the work robot; and
an information processing unit capable of communicating with the first sensor and the second sensor,
wherein the information processing unit includes:
a learning unit configured to learn the predetermined motion with reference to first information acquired by the first sensor;
a motion information generation unit configured to generate motion control information for giving the motion instruction to the work robot with reference to a result of learning of the predetermined motion by the learning unit; and
an adjustment unit configured to compare the first information with second information acquired by the second sensor, and to adjust the motion control information such that the robot motion of the work robot approximates the predetermined motion.

21. A motion modification system comprising:
a work robot;
a sensor; and
a management control device capable of communicating with the work robot and the sensor,
wherein the management control device includes:
a learning unit configured to learn a standard motion model corresponding to a predetermined motion of a sensing target on the basis of sensing information corresponding to the predetermined motion of the sensing target, the sensing information being acquired using the sensor;
a model generation unit configured to generate a modified motion model in which an execution time of each motion in the standard motion model is set to be shorter than a required time for each motion at the time of generating the standard motion model with reference to the standard motion model; and
a control unit configured to operate the work robot with reference to the modified motion model.

22. The motion modification system according to claim 21,
wherein the management control device further includes a storage unit configured to store work manual information of the sensing target or process schedule information, and
the learning unit generates the standard motion model with reference to the sensing information and the work manual information of the sensing target or the process schedule information.

23. A motion modification system comprising:
a work robot;
a plurality of sensors for sensing a plurality of different sensing targets; and
a management control device capable of communicating with the work robot and the plurality of sensors,
wherein the management control device includes:
a learning unit configured to learn predetermined motions of the plurality of sensing targets and a plurality of standard motion models corresponding to the predetermined motions of the plurality of sensing targets on the basis of a plurality of sensing information corresponding to the predetermined motions of the plurality of sensing targets acquired using the plurality of sensors;
a model generation unit configured to generate a modified motion model in which at least some of the predetermined motions of the plurality of sensing targets are integrated with reference to the plurality of standard motion models; and
a control unit configured to operate the work robot with reference to the modified motion model.

24. The motion modification system according to any one of claims 21 to 23,
wherein a plurality of work robots are provided, and
the control unit operates the plurality of work robots.

25. A motion modification method comprising:
learning a standard motion model corresponding to a predetermined motion of a sensing target on the basis of sensing information corresponding to the predetermined motion of the sensing target acquired using a sensor;
generating a modified motion model in which an execution time of each motion in the standard motion model is set to be shorter than a required time for each motion at the time of generating the standard motion model with reference to the standard motion model; and
operating a work robot with reference to the modified motion model.

26. A work robot comprising:
a drive mechanism for operating the work robot;
a learning unit configured to learn a standard motion model corresponding to a predetermined motion of a sensing target on the basis of sensing information corresponding to the predetermined motion of the sensing target acquired using a sensor;
a model generation unit configured to generate a modified motion model in which an execution time of each motion in the standard motion model is set to be shorter than a required time for each motion at the time of generating the standard motion model with reference to the standard motion model; and
a control unit configured to operate a work robot by controlling the drive mechanism with reference to the modified motion model.

27. A work reproduction system comprising:
a work reproduction robot;
a sensor capable of sensing a motion of the work reproduction robot; and
a management control device capable of communicating with the work reproduction robot and the sensor,
wherein the management control device includes:
a learning unit configured to learn a standard motion model corresponding to a predetermined motion of a sensing target on the basis of first sensing information corresponding to the predetermined motion of the sensing target;
a control unit configured to cause the work reproduction robot to perform a reproduction motion at least one time with reference to the standard motion model;
an input unit configured to receive input of accident or malfunction information; and
a detection unit configured to detect occurrence of the accident or malfunction on the basis of second sensing information corresponding to the reproduction motion of the work reproduction robot acquired using the sensor.

28. A work reproduction system comprising:
a work reproduction robot;
a sensor capable of sensing a motion of the work reproduction robot; and
a management control device capable of communicating with the work reproduction robot and the sensor,
wherein the management control device includes:
a learning unit configured to learn a standard motion model corresponding to a predetermined motion of a sensing target on the basis of first sensing information corresponding to the predetermined motion of the sensing target;
a control unit configured to cause the work reproduction robot to perform a reproduction motion at least one time with reference to the standard motion model;
a storage unit configured to store work manual information of the sensing target or process schedule information; and
a detection unit configured to detect occurrence of a motion different from the work manual information or the process schedule information on the basis of second sensing information corresponding to the reproduction motion of the work reproduction robot acquired using the sensor.

29. A work reproduction method comprising:
a work reproduction robot;
a sensor capable of sensing a motion of the work reproduction robot; and
a management control device capable of communicating with the work reproduction robot and the sensor,
wherein the management control device is configured to:
learn a standard motion model corresponding to a predetermined motion of a sensing target on the basis of first sensing information corresponding to the predetermined motion of the sensing target;
cause the work reproduction robot to perform a reproduction motion at least one time with reference to the standard motion model;
receive input of information on an accident or a malfunction; and
detect occurrence of the accident or the malfunction on the basis of second sensing information corresponding to the reproduction motion of the work reproduction robot acquired using the sensor.

30. A work reproduction method comprising:
a work reproduction robot;
a sensor capable of sensing a motion of the work reproduction robot; and
a management control device capable of communicating with the work reproduction robot and the sensor,
wherein the management control device is configured to:
learn a standard motion model corresponding to a predetermined motion of a sensing target on the basis of first sensing information corresponding to the predetermined motion of the sensing target;
cause the work reproduction robot to perform a reproduction motion at least one time with reference to the standard motion model;
store work manual information of the sensing target or process schedule information; and
detect occurrence of a motion different from the work manual information or the process schedule information on the basis of second sensing information corresponding to the reproduction motion of the work reproduction robot acquired using the sensor.

31. A work reproduction robot comprising
an information processing device capable of communicating with a sensor capable of sensing a motion of the work reproduction robot,
wherein the information processing device includes:
a learning unit configured to learn a standard motion model corresponding to a predetermined motion of a sensing target on the basis of first sensing information corresponding to the predetermined motion of the sensing target;
a control unit configured to cause the work reproduction robot to perform a reproduction motion at least one time with reference to the standard motion model;
an input unit configured to receive input of information on an accident or a malfunction; and
a detection unit configured to detect occurrence of the accident or the malfunction on the basis of second sensing information corresponding to the reproduction motion of the work reproduction robot acquired using the sensor disposed outside.

32. A work reproduction robot comprising
an information processing device capable of communicating with a sensor capable of sensing a motion of the work reproduction robot,
wherein the information processing device includes:
a learning unit configured to learn a standard motion model corresponding to a predetermined motion of a sensing target on the basis of first sensing information corresponding to the predetermined motion of the sensing target;
a control unit configured to cause the work reproduction robot to perform a reproduction motion at least one time with reference to the standard motion model;
a storage unit configured to store work manual information of the sensing target or process schedule information; and
a detection unit configured to detect occurrence of a motion different from the work manual information or the process schedule information on the basis of second sensing information corresponding to the reproduction motion of the work reproduction robot acquired using the sensor.

33. A work proficiency system comprising:
a work reproduction robot;
a sensor capable of sensing a motion of a new worker; and
a management control device capable of communicating with the work reproduction robot and the sensor,
wherein the management control device includes:
a storage unit configured to store a standard motion model learned on the basis of first sensing information corresponding to a predetermined motion of a skilled worker;
a control unit configured to cause the work reproduction robot to perform a reproduction motion with reference to the standard motion model; and
a detection unit configured to detect a part in which the motion of the new worker is different from the standard motion model on the basis of second sensing information corresponding to the motion of the new worker acquired using the sensor.

34. The work proficiency system according to claim 33,
wherein the storage unit further stores work manual information or process schedule information,
wherein the detection unit detects a part in which the motion of the new worker is different from the work manual information or the process schedule information on the basis of the second sensing information corresponding to the motion of the new worker acquired using the sensor.

35. A work proficiency method comprising:
a work reproduction robot;
a sensor capable of sensing a motion of a new worker; and
a management control device capable of communicating with the work reproduction robot and the sensor,
wherein the management control device is configured to:
store a standard motion model learned on the basis of first sensing information corresponding to a predetermined motion of a skilled worker;
cause the work reproduction robot to perform a reproduction motion with reference to the standard motion model; and
detect a part in which the motion of the new worker is different from the standard motion model on the basis of second sensing information corresponding to the motion of the new worker acquired using the sensor.

36. A work reproduction robot comprising
an information processing device capable of communicating with a sensor capable of sensing a motion of a new worker,
wherein the information processing device includes:
a storage unit configured to store a standard motion model learned on the basis of first sensing information corresponding to a predetermined motion of a skilled worker;
a control unit configured to cause the work reproduction robot to perform a reproduction motion with reference to the standard motion model; and
a detection unit configured to detect a part in which the motion of the new worker is different from the standard motion model on the basis of second sensing information corresponding to the motion of the new worker acquired using the sensor.
